# EUROPÄISCHE PATENTSCHRIFT

(11) **EP 3 447 667 B1**
(45) Veröffentlichungstag und Bekanntmachung des Hinweises auf die Patenterteilung: **28.10.2020**
(21) Anmeldenummer: 18187360.5
(22) Anmeldetag: 03.08.2018
(51) Int. Cl.: G06F 21/34, H04L 29/08, H04L 29/06

(54) **KRYPTOGRAPHISCHE SICHERUNG FÜR EINE VERTEILTE DATENSPEICHERUNG**
CRYPTOGRAPHIC SECURITY FOR A DISTRIBUTED DATA STORAGE
SÉCURITÉ CRYPTOGRAPHIQUE POUR UN STOCKAGE DE DONNÉES RÉPARTI

(30) Priorität: 23.08.2017 DE 102017214768
(43) Veröffentlichungstag der Anmeldung: 27.02.2019
(73) Patentinhaber: Bundesdruckerei GmbH, 10969 Berlin (DE)
(72) Erfinder: PAESCHKE, Dr. Manfred, 16348 Wandlitz (DE); SCHNJAKIN, Dr. Maxim, 10245 Berlin (DE)
(74) Vertreter: Richardt Patentanwälte PartG mbB

(56) Entgegenhaltungen:
- DE-A1-102014 113 430
- US-A1- 2013 304 711
- US-A1- 2015 304 306

## Beschreibung

Die Erfindung betrifft ein Verfahren zum Speichern von Daten, ein Computerprogrammprodukt, einen Dateimanagementserver und ein Nutzer-Computersystem.

Aus dem Stand der Technik sind verschiedene Verfahren zur Speicherung von Nutzerdaten mittels eines oder mehrerer externer Speicherdienste bekannt, z.B. "OneDrive", "Dropbox", "Google Drive" und andere. Dabei unterscheiden sich die Speicherdienste im Hinblick auf die Sicherheit der dort gespeicherten Daten (unterschiedliche Authentifizierungs- und Verschlüsselungsverfahren), im Hinblick auf den Preis, im Hinblick auf die Datenverfügbarkeit und/oder im Hinblick auf andere Faktoren. Teilweise bieten die Speicherdienste auch verschiedene Nutzungsverträge mit unterschiedlichem Leistungsumfang an die sich nach einiger Zeit auch ändern können. Aufgrund des Aufwands und der Kosten, die mit einer Registrierung bei jedem einzelnen Speicherdienste verbunden sind, wird oftmals nur ein einziger Dienst genutzt, um Daten extern zu speichern, z.B. für Backup-Zwecke.

Die DE 10 2014 113430 A1 beschreibt ein Verfahren zur Speicherung von Daten, Das Verfahren umfasst, um eine Datei zu speichern: Eine automatische Generierung eines Verteilungsplans, eine Durchführung eines in dem Verteilungsplan spezifizierten Fehlerkorrekturverfahrens zur Generierung von Dateifragmenten aus der Datei durch ein Nutzer-Computersystem, ein Senden einer Berechtigungsanfrage zum Speichern der Dateifragmente in den im Verteilungsplan identifizierten Speicherdiensten von dem Nutzer-Computersystem an einen Dateimanagementserver über ein Netzwerk, in Antwort auf einen Empfang der Berechtigungsanfrage durch den Dateimanagementserver, eine Anforderung eines Berechtigungstokens durch den Dateimanagementserver von jedem der in dem Verteilungsplan identifizierten Speicherdienste und eine Weiterleitung der in Antwort auf die Anforderung erhaltenen Berechtigungstoken durch den Dateimanagementserver an das Nutzer-Computersystem, und eine Speicherung der generierten Dateifragmente in den Speichermedien der identifizierten Speicherdienste mittels Berechtigungsnachweis durch die Berechtigungstoken unter Umgehung des Dateimanagementservers durch das Nutzer-Computersystem, wobei Metadaten, die die Rekonstruktion der Datei aus den gespeicherten Dateifragmenten erlauben, in dem Nutzer-Computersystem und/oder dem Dateimanagementserver gespeichert werden und gegen einen Zugriff der Speicherdienste gesichert sind.

Der Erfindung liegt demgegenüber die Aufgabe zugrunde, ein verbessertes Verfahren zur Speicherung von Daten zu schaffen, sowie ein entsprechendes Computerprogrammprodukt, ein Nutzer-Computersystem und einen Dateimanagementserver.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

Ausführungsformen umfassen ein Verfahren zur Verarbeitung einer Datei, wobei die Datei mit einem symmetrischen Schlüssel verschlüsselt und gemäß einem Verteilungsplans mittels eines Fehlerkorrekturverfahrens in Dateifragmente aufgeteilt ist, wobei die resultierenden Dateifragmente auf nichtflüchtigen Speichermedien mehrerer Speicherdienste verteilt gespeichert sind, wobei Metadaten, welche der Datei zugeordnet sind und eine Rekonstruktion der Datei aus den Dateifragmenten ermöglichen, den symmetrische Schlüssel umfassen, der ein Entschlüsseln der verschlüsselten Datei ermöglicht, wobei die Metadaten oder zumindest der symmetrische Schlüssel mit einem öffentlichen Schlüssel verschlüsselt sind, wobei ein privater Schlüssel, der mit dem öffentlichen Schlüssel ein asymmetrisches kryptographisches Schlüsselpaar bildet und ein Entschlüsseln der verschlüsselten Metadaten ermöglicht, in einem geschützten Speicherbereich eines Speichers eines Hardwaretokens gespeichert ist, wobei das asymmetrische kryptographische Schlüsselpaar einem Nutzer zugeordnet ist.

Das Verfahren umfasst:
- Senden einer Zugriffsanfrage eines Nutzer-Computersystems zum Zugriff auf die verteilt gespeicherte Datei an einen Dateimanagementserver;
- Authentifizieren des Nutzer-Computersystems gegenüber dem Dateimanagementserver;
- nach erfolgreichem Authentifizieren des Nutzer-Computersystems und falls der Nutzer, dem das Nutzer-Computersystem zugeordnet ist, Zugriffsrechte für die Datei besitzt, Empfangen eines Berechtigungstokens von jedem der Speicherdienste zumindest einer Auswahl der Speicherdienste, in deren nichtflüchtigen Speichermedien die Dateifragmente gespeichert sind, über den Dateimanagementserver, wobei die von der Auswahl der Speicherdienste umfassten Dateifragmente hinreichend für eine Rekonstruktion der Datei sind,
   wobei die Berechtigungstoken dem Nutzer-Computersystem den angeforderten Zugriff auf die durch die Speicherdienste jeweils gespeicherten Dateifragmente unter Umgehung des Dateimanagementservers ermöglichen;
- Herunterladen der Dateifragmente von den einzelnen Speicherdiensten unter Verwendung der Berechtigungstoken und unter Umgehung des Dateimanagementservers;
- Senden einer Entschlüsselungsanfrage des Nutzer-Computersystems zum Zugriff auf die entschlüsselten Metadaten an das Hardwaretoken;
- Authentifizieren des Nutzer-Computersystems gegenüber dem Hardwaretoken;
- nach erfolgreichem Authentifizieren des Nutzer-Computersystems und falls der Nutzer, dem das Nutzer-Computersystem zugeordnet ist, Zugriffsrechte für die entschlüsselten Metadaten besitzt, Empfangen der durch das Hardwaretoken mit dem privaten Schlüssel entschlüsselten Metadaten;
- Rekonstruieren der verschlüsselten Datei aus den Dateifragmente unter Verwendung der Metadaten,
- Entschlüsseln der verschlüsselten Datei mit dem von den Metadaten umfassten symmetrischen Schlüssel.

Unter einem *"geschützten Speicherbereich"* wird hier ein Bereich eines elektronischen Speichers verstanden, auf den ein Zugriff, das heißt ein Lesezugriff oder ein Schreibzugriff, nur über einen Prozessor des Hardwaretokens möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Dieses Verfahren kann vorteilhaft sein, da die Speicherung von mittels eines Fehlerkorrekturverfahrens erzeugten Dateifragmenten in verschiedenen Speicherdiensten die Verfügbarkeit der zu speichernden Daten erhöhen kann. Außerdem kann dadurch auch die Sicherheit der Daten vor einem unberechtigten Zugriff durch den Speicherdienst erhöht werden: Fehlerkorrekturverfahren generieren Dateifragmente, die Korrekturbits enthalten und somit, je nach Anteil der Korrekturbits in den Fragmenten und je nach der Anzahl der generierten Dateifragmente, eine Rekonstruktion der ursprünglichen Datei erlauben, sollte einer oder mehrere der Speicherdienste temporär oder permanent ausfallen. Jedoch kann keiner der Speicherdienste die Daten rekonstruieren, da kein Speicherdienst sämtliche Dateifragmente erhält. Aber selbst, wenn ein unberechtigter Dritter Zugriff auf eine Mehrzahl der Dateifragmente erhalten sollte, ist er aufgrund der Verschlüsselung der fragmentierten Datei daran gehindert aus dem Inhalt der Dateifragmente Rückschlüsse auf den Inhalt der Datei ziehen zu können. Nach Ausführungsformen werden die Klartextblöcke der Datei im Zuge der symmetrischen Verschlüsselung abhängig voneinander verschlüsselt. Somit kann verhindert werden, dass ein unberechtigter Dritter in die Lage versetzt wird aus einzelnen Fragmenten der Datei einen Teil der Ausgangsdatei zu entschlüsseln, selbst wenn er in Besitz des symmetrischen Schlüssels zum Entschlüsseln der Datei gelangen sollte.

Beispielsweise wird zur symmetrischen Verschlüsselung ein Blockchiffrenverfahren, wie etwa AES oder DES, verwendet, welches auf iterierten Blockchiffren basiert, wobei die Verarbeitung der Eingabe beispielsweise in mehreren Runden erfolgt. Eine solche Runde kann beispielsweise drei Phasen umfassen: 1. eine Verknüpfung mit einem Rundenschlüssel, 2. eine Substitution, welche beispielswiese aus S-Boxen aufgebaut ist, zur Erzeugung von Konfusion und 3. eine Permutation der Textbits der zu verschlüsselnden Datei zur Implementierung einer Diffusion der Information umfassen, sodass die Ausgabe einer S-Box sich in der nächsten Runde auf mehrere S-Boxen und nach weiteren Runden über den ganzen Textblock verteilt. Durch die Konfusion kann der Zusammenhang zwischen der verschlüsselten Datei, d.h. dem Geheimtext, und der unverschlüsselten Datei, d.h. dem Klartext, komplexer ausgestaltet werden. Durch die Diffusion kann die Information an einer Stelle des Klartextblocks über den gesamten Geheimtextblock verteilt werden, sodass am Ende jedes Bit des Geheimtextblocks von jedem Bit des Klartextblocks abhängen. Beispielsweise beruht der verwendete Algorithmus zur blockorientierten Verschlüsselung auf Cipher Block Chaining (CBC), Cipher Feedback (CFB) oder Output Feedback (OFB). Beispielsweise werden DES, Camellia, RC2, 3DES, FEAL, RC6, AES, Blowfish, Serpent, IDEA, Twofish, Skipjack, CAST, MARS, TEA oder XTEA zur symmetrischen Verschlüsselung verwendet.

Die Sicherheit durch unberechtigten Zugriff durch den Betreiber des Speicherdienst kann in synergistischer Weise dadurch erhöht werden, dass eine strikte Trennung des Zugriffsmanagements durch den Dateimanagementserver in Form der Anforderung der Berechtigungstoken und deren Weiterleitung einerseits und dem Datenmanagement durch die einzelnen Speicherdienste andererseits erfolgt: die Dateifragmente werden unter Umgehung des Dateimanagementservers von dem Nutzersystem direkt in den Speicherdiensten gespeichert. Der Dateimanagementserver agiert also nicht als Router, sondern vermittelt lediglich die Berechtigungstoken, welche dem Nutzer-Computersystem die Speicherung der Dateifragmente über die Speicherdienste erlaubt. Der Dateimanagementserver hat also keinen Zugriff auf den Inhalt der übertragenen Dateifragmente. Die Speicherdienste wiederum verfügen nicht über die Metadaten, die zur Rekonstruktion der Datei benötigt werden. Diese Metadaten sind lediglich dem Nutzer-Computersystem und/oder dem Dateimanagementserver zugänglich. Zudem kann das Verfahren deutlich schneller extern speichern als herkömmliche Verfahren: um zumindest eine Sicherheitskopie einer Datei extern verfügbar zu haben, musste bisher eine Kopie dieser Datei an einen externen Speicherdienst übertragen werden. Im Falle eines Ausfalls dieses externen Dienstes war die Sicherheitskopie verloren oder zumindest temporär nicht mehr verfügbar. Erfindungsgemäß werden aber Dateifragmente mittels mehrerer Speicherdienste gespeichert. Dies ermöglicht die parallele Übertragung der Dateifragmente über das Netzwerk. Bei paralleler Übertragung der Dateifragmente kann der gesamte Informationsgehalt der Datei einschließlich der Fehlerkorrekturbits innerhalb eines Bruchteils der Zeit erfolgen, die zur Übertragung einer ganzen Dateikopie an einen einzelnen Speicherdienst notwendig wäre. Zudem ist die Datei dank der Fehlerkorrekturbits nicht verloren, sollte einer der Speicherdienste ausfallen, sondern kann sofort und automatisch aus den übrigen Dateifragmenten mit den Fehlerkorrekturbits und den Metadaten rekonstruiert werden. Dies kann insbesondere für Dateien relevant sein, die hochverfügbar sein müssen, da z.B. diese für die Arbeitsfähigkeit eines Unternehmens erforderlich sind. Der Umstand, dass der Verteilungsplan für die Datei generiert wird, kann eine feingranulare und für die jeweilige Datei optimierte Generierung des Verteilungsplans ermöglichen.

Ferner wird die Sicherheit des vorliegenden Verfahrens zusätzlich dadurch erhöht, dass der private Schlüssel auf einem eigenständigen, kryptographisch gesicherten Hardwaretoken gespeichert ist. Beispielsweise handelt es sich bei dem Hardwaretoken um eine privatisierte Chipkarte, welche einen Prozessor und einen Speicher umfasst, wobei der private Schlüssel in einem geschützten Speicherbereich des Speichers gespeichert ist. Beispielsweise muss sich der Nutzer als Voraussetzung für eine Verwendung des privaten Schlüssels gegenüber dem Hardwaretoken authentifizieren. Dies kann beispielsweise durch ein eine ID, wie etwa ein Passwort, ein biometrisches Merkmal oder verhaltensbasiert geschehen. Bei einem biometrischen Merkmal kann es sich beispielsweise um ein Beschleunigungsmuster, Herzschlagfrequenz, Venenmuster, Irismuster, Retinamuster, Stimmenmuster und/oder Fingerabdruck.

Nach Ausführungsformen weist das Hardwaretoken mindestens einen Sensor zur Erfassung von nutzerbezogenen Daten auf. Die nutzerbezogenen Daten umfassen dabei Informationen bezüglich des Verhaltens des Nutzers. Das Verfahren zur Authentifizierung eines Nutzers Hardwaretokens mittels einer verhaltensbasierten Authentifizierung umfasst nach Ausführungsformen die folgenden Schritte:
- Generieren mindestens eines Klassifikationsergebnisses unter Verwendung der nutzerbezogenen Daten für die verhaltensbasierte Authentifizierung,
- Auswerten des mindestens einen Klassifikationsergebnisses, um den Nutzer zu authentifizieren, wobei das Auswerten ein Prüfen umfasst, ob das Klassifikationsergebnis ein vorgegebenes Prüfungskriterium erfüllt, wobei eine erfolgreiche Authentifizierung ein erfüllen des Prüfungskriteriums umfasst,
- Erzeugen eines Authentifizierungssignals aufgrund des Ergebnisses der Auswertung des Klassifikationsergebnisses und Senden des Authentifizierungssignals an das Speichersystem,
- Ausführen der Entschlüsselung, falls das Authentifizierungssignal eine erfolgreiche Authentifizierung des Nutzers angibt.

Dabei umfasst das Hardwaretoken ein Klassifikationsmodul, wobei die nutzerbezogenen Daten Bewegungsdaten einer grobmotorischen und/oder feinmotorischen Bewegung des aktuellen Nutzers des Hardwaretokens umfassen, wobei das Klassifikationsmodul zur Klassifikation des Verhaltens des aktuellen Nutzers anhand der nutzerbezogenen Daten konfiguriert ist, wobei das Klassifikationsmodul ferner zur Erkennung eines generischen grobmotorischen und/oder feinmotorischen Bewegungsmusters mit Hilfe von Trainingsdatensätzen einer Nutzerkohorte trainiert ist, wobei das Klassifikationsmodul durch den Prozessor des Hardwaretokens ausgeführt wird. Eine grobmotorische Bewegung bezeichnet dabei alle Bewegungsfertigkeiten, die ein Mensch mit seinen Gliedmaßen, seinem Rumpf und seinem Kopf erlernen kann. Dabei werden Hauptmuskelgruppen beansprucht. Eine feinmotorische Bewegung ist eine Bewegung feiner Muskelgruppen, wie beispielsweise die Muskulatur der Finger. Feinmotorik bezeichnet gezielte und koordinierte Bewegung, beispielsweise von Hand und/oder Fingermuskulatur, aber auch den Muskeln des Mundes, der Augen und des Gesichtes. Die feinmotorische Bewegung, welche durch einen feinmotorischen Sensor des Hardwaretokens erfasst wird, kann etwa eine bestimmte Bewegung der Finger umfassen.

Dabei werden die verschlüsselte Datei und der als Voraussetzung für eine Entschlüsselung der Datei notwendige private Schlüssel des Nutzers niemals auf demselben Gerät gespeichert. Selbst wenn es einem Angreifer also gelingt, Zugriff auf eines der Geräte, z.B. das Nutzer-Computersystem oder das Hardwaretoken, zu erlangen, verfügt er doch nicht über alle für eine Entschlüsselung notwendigen Voraussetzungen. Eine Entschlüsselung der Metadaten oder zumindest des symmetrischen Schlüssels erfolgt ausschließlich in dem Hardwaretoken, ohne dass der private Schlüssel den Hardwaretoken verlässt.

Zudem wird durch die notwendige Authentifizierung des Nutzer-Computersystems gegenüber dem Hardwaretoken eine zusätzliche Prüfinstanz in das Verfahren eingeführt, wodurch die Sicherheit weiter erhöht wird.

Beispielsweise richten das Nutzer-Computersystem einen sicheren Kommunikationskanal, etwa unter Verwendung einer Ende-zu-Ende-Verschlüsselung, mit dem Hardwaretoken ein und übergibt an die zu entschlüsselnden Metadaten. Die Metadaten werden in einer sicheren, d.h. kryptographisch geschützten, Umgebung auf dem Hardwaretoken mit dem privaten Schlüssel entschlüsselt. Anschließend werden die entschlüsselten Metadaten an das Nutzer-Computersystem unter Verwendung des gesicherten Kommunikationskanals übergeben.

Durch Speicherung des privaten Schlüssels des Nutzers auf dem Hardwaretoken wird das Verfahren zur sicheren Datenaufbewahrung in der Cloud sicherer, da nur der Besitzer des Hardwaretokens die Datei entschlüsseln kann und somit Zugriff auf die entsprechenden Daten besitzt. Die sogenannte Skalierbarkeit der Angriffe auf das System bzw. das Verfahren nimmt somit ab, da der private Schlüssel des Nutzers nicht von dem Nutzer- Computersystem, z.B. der Software des Betriebssystems, geschützt wird.

Nach Ausführungsformen ist jedes der Dateifragmente der verschlüsselten Datei zusätzlich mit einem symmetrischen Schlüssel verschlüsselt. Bei diesem symmetrischen Schlüssel mit dem die Dateifragmente kann es sich um denselben symmetrische Schlüssel handeln, mit welchem die Datei verschlüsselt ist oder um einen anderen symmetrischen Schlüssel. Beispielsweise wird für jedes der Dateifragmente jeweils ein individueller Schlüssel generiert. Beispielsweise kann es sich bei den generierten symmetrischen Schlüsseln jeweils um zufällig generierte Schlüssel handeln oder es kann sich bei den Schlüsseln beispielsweise jeweils um einen Kennwert, wie etwa einen Hashwert, des mit dem Schlüssel zu verschlüsselnden Dateifragments handeln. Der oder die symmetrischen Schlüssel mit welchen die Dateifragmente jeweils zusätzlich verschlüsselt sind werden ebenfalls von den Metadaten umfasst, welche mit dem öffentlichen Schlüssel des Nutzers verschlüsselt sind. Durch die zusätzliche Verschlüsslung der Dateifragmente kann die Sicherheit des Verfahrens weitere erhöht werden.

Nach Ausführungsformen ist das Nutzer-Computersystem einem Nutzer zugeordnet. Der Dateimanagementserver führt eine Berechtigungsprüfung durch und fordert die Berechtigungstokens nur dann von jedem der in dem Verteilungsplan identifizierten Speicherdienste an falls die Berechtigungsprüfung ergab, dass der Nutzer zum Lesen/Schreiben der Datei berechtigt ist.

Die Prüfung der Zugriffsrechte erfolgt dabei vorzugsweise nur bezogen auf die angeforderte Schreib- und/oder Leseoperation bezüglich der zu schreibenden oder zu lesenden Datei. Dies hat den Vorteil, dass die Zugriffskontrolle sehr feingranulare ist im Hinblick auf einzelne Nutzer, im Hinblick auf die Zeit, und im Hinblick auf einzelne Dateien flexibel und spezifisch erfolgen kann.

Nach Ausführungsformen wird das dem Nutzer zugeordnete asymmetrische Schlüsselpaar im Zuge einer Personalisierung des Hardwaretokens von einer Ausstellungsinstanz, etwa auf einem kryptographisch gesicherten System, generiert und dabei dem Nutzer eindeutig zugeordnet werden. Beispielsweise wird das asymmetrische Schlüsselpaar auf dem Hardwaretoken im Zuge der Herstellung desselben gespeichert. Die Zuordnung zu dem Nutzer kann beispielsweise durch von der Ausstellungsinstanz als Zertifizierungsstelle der PKI oder einer unabhängigen Wurzelzertifizierungsstelle ausgestelltes Zertifikat, welches den öffentlichen Schlüssel umfasst, implementiert werden.

Die Zuordnung zu dem Nutzer kann zusätzlich oder alternativ beinhalten, dass der zugehörige öffentliche Schlüssel, etwa von dem Nutzer-Computersystem, an den Dateimanagementserver übertragen und dort als Bestandteil des Nutzerprofils des entsprechenden Nutzers gespeichert wird.

Nach Ausführungsformen werden die Dateifragmente durch das Nutzer-Computersystem parallel über das Netzwerk von den Speicherdiensten heruntergeladen. Dies kann die Download-Geschwindigkeit der Datei erhöhen.

Nach Ausführungsformen umfasst der Nachweis der Zugriffrechte des Nutzers, dem das Nutzer-Computersystem zugeordnet ist, für die entschlüsselten Metadaten ein erfolgreiches Authentifizieren des Nutzers durch das Hardwaretoken. Ausführungsformen können den Vorteil haben, dass sichergestellt werden kann, dass tatsächlich der Nutzer, welchem das asymmetrische kryptographische Schlüsselpaar mit dem privaten Schlüssel des Hardwaretokens zugeordnet ist, den Hardwaretoken verwendet. Hierzu umfasst entweder das Hardwaretoken oder Nutzer-Computersystem eine Schnittstelle, über welche der Nutzer sich authentifizieren kann. Eine solche Authentifizierung kann beispielsweise mittels einer oder mehrere Kennungen, Nutzername und/oder Passwort, ein biometrisches Merkmal und/oder auf Basis eines Analyse des Verhaltens des Nutzers erfolgen

Nach Ausführungsformen ist die Übertragung der entschlüsselten Metadaten von dem Hardwaretoken an das Nutzer-Computersystem mittels Ende-zu-Ende-Verschlüsselung kryptographisch gesichert.

Unter einer *"Ende-zu-Ende-Verschlüsselung"* hier eine Verschlüsselung einer Verbindung zwischen einem Sender und einem Empfänger verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweite der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer eine Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

Nach Ausführungsformen sind die verschlüsselten Metadaten, die die Rekonstruktion der Datei aus den Dateifragmenten ermöglichen, in dem Speicher des Hardwaretokens gespeichert und gegen einen Zugriff der Speicherdienste gesichert. Beispielsweise besitzen die Speicherdienste keinen Lesezugriff.

Nach weiteren Ausführungsformen werden die verschlüsselten Metadaten von dem Hardwaretoken nur zur Entschlüsselung in einem flüchtigen Speicher gespeichert, während der private Schlüssel des Nutzers in einem nichtflüchtigen Speicher persistent gespeichert ist. Beispielsweise verfügt der Besitzer über keine Schreibberechtigung für den nichtflüchtigen Speicher des Hardwaretokens. Durch eine ausschließlich nicht persistente Speicherung der verschlüsselten Metadaten kann die Sicherheit sowohl der Metadaten als auch des Hardwaretokens erhöht werden. Zum einen werden die Metadaten und der private Schlüssel somit nicht dauerhaft im selben Gerät gespeichert, weshalb ein Angreifer Zugang zu mindestens zwei unabhängigen Geräten erlangen muss, will er Zugriff auf die Datei erlagen. Ferner werden durch den beschränkten Schreibzugriff auf das Hardwaretoken die Möglichkeit Schadsoftware einzubringen eingeschränkt.

Nach Ausführungsformen sind die verschlüsselten Metadaten, die die Rekonstruktion der Datei aus den Dateifragmenten erlauben, in einem Speicher des Nutzer-Computersystems gespeichert und gegen einen Zugriff der Speicherdienste gesichert. Beispielsweise besitzen die Speicherdienste keinen Lesezugriff. Ausführungsformen können den Vorteil haben, dass durch die Verteilte Speicherung von (verschlüsselten) Dateifragmenten, verschlüsselten Metadaten und privatem Schlüssel auf unabhängigen Geräten die Sicherheit des gesamten Verfahrens erhöht wird.

Nach Ausführungsformen sind die verschlüsselten Metadaten, die die Rekonstruktion der Datei aus den Dateifragmenten erlauben, in einem Speicher des Dateimanagementservers gespeichert und gegen einen Zugriff der Speicherdienste gesichert. Nach dem erfolgreichen Authentifizieren des Nutzer-Computersystems gegenüber dem Dateimanagementserver und falls der Nutzer, dem das Nutzer-Computersystem zugeordnet ist, Zugriffsrechte für die Datei besitzt, werden zusätzlich die verschlüsselten Metadaten von dem Dateimanagementserver empfangen.

Ausführungsformen können den Vorteil haben, dass die verschlüsselten Metadaten außerhalb der direkten Verfügungsgewalt des Nutzers gespeichert sind, wodurch die Sicherheit erhöht werden kann. Selbst wenn dem Nutzer der Hardwaretoken mit seinem privaten Schlüssel zur Verfügung steht, so muss er sich erst gegenüber dem Dateimanagementserver authentifizieren und seine Zugriffsberechtigung auf die Datei nachweisen, bevor er durch Empfang der verschlüsselten Metadaten tatsächlichen zum Zugriff auf die Datei in die Lage versetzt wird.

Nach Ausführungsformen speichert und verwaltet der Dateimanagementserver öffentliche Schlüssel einer Mehrzahl von Nutzern, welche mit Nutzerprofilen der entsprechenden Nutzer verknüpft sind. Das Verfahren umfasst ferner, um dem Nutzer, der dem asymmetrischen kryptographischen Schlüsselpaar zugeordnet ist, dessen privater Schlüssel in dem Hardwaretoken gespeichert ist, die verschlüsselten Metadaten bereitzustellen:
- nach erfolgreichem Authentifizieren des Nutzer-Computersystems und falls der Nutzer, dem das Nutzer-Computersystem zugeordnet ist, Zugriffsrechte für die Datei besitzt, Generieren der Metadaten durch den Dateimanagementserver, wobei das Generieren der Metadaten beinhaltet:
   - Senden des öffentlichen Schlüssels des Nutzers, dessen zugehöriger privater Schlüssel auf dem Hardwaretoken gespeichert ist, durch den Dateimanagementserver an ein Computersystem, welches die Datei in Dateifragmente aufgeteilt und die resultierenden Dateifragmente mit dem symmetrischen Schlüssel verschlüsselt hat;
   - Erstellen der Metadaten durch das Computersystem, wobei die Metadaten den symmetrischen Schlüssel umfassen;
   - Verschlüsseln der Metadaten oder zumindest des symmetrischen Schlüssels mit dem öffentlichen Schlüssel des Nutzers durch das Computersystem;
   - Senden der verschlüsselten Metadaten an den Dateimanagementserver;
   - Weiterleiten der verschlüsselten Metadaten durch den Dateimanagementserver an das Nutzer-Computersystem, um dem Nutzer-Computersystem das Entschlüsseln unter Verwendung des Hardwaretokens zu ermöglichen.

Ausführungsformen können den Vorteil haben, dass unterschiedlichen Nutzern Zugriff auf die verteilt gespeicherte Datei gewährt werden kann, ohne dass der Dateimanagementserver oder einer der Speicherdienste einen solchen erhalten. Insbesondere kann jeder Nutzer einen eigenständigen Hardwaretoken zum Entschlüsseln der Datei verwenden. Somit wird ermöglicht, dass sich die individuellen Hardwaretoken stets im Besitzer des ihnen zugehörigen Nutzers befinden und nicht ausgegeben werden müssen, selbst wenn unterschiedliche Nutzer die Datei verwenden wollen.

Optional kann der Dateimanagementserver die besagten Metadaten, also eine spezifisch für dieses berechtigten Nutzers verschlüsselte Version der Metadaten der Datei, speichern, sodass bei einer späteren Zugriffsanfrage des berechtigten Nutzers der Dateimanagementserver die gespeicherten Metadaten direkt ohne weitere Interaktion mit dem Nutzer-Computersystem, welches die Metadaten erstellt, an das Nutzer-Computersystem des berechtigten Nutzers weiterleiten kann. Die für verschiedene berechtigte Nutzer generierten und unterschiedlich verschlüsselten Versionen der Metadaten können von dem Dateimanagementserver z.B. in einer Datenbank gespeichert werden.

Der Nutzer verwendet sein Hardwaretoken mit dem privaten Schlüssel, um die Metadaten der Datei zu entschlüsseln, und verwendet die von dem Dateimanagementserver angeforderten und weitergeleiteten Berechtigungstoken, welche sein Nutzer-Computersystem empfangen hat, zum Lesen der Datei, indem es die Dateifragmente der Datei von den einzelnen Speicherdiensten herunterlädt. Sobald die Dateifragmente und die Metadaten in entschlüsselter Form vorliegen, rekonstruiert eine auf dem weiteren Nutzer-Computersystem installierte Client-Applikation die verschlüsselte Datei aus den Dateifragmenten. Sind die einzelnen Dateifragmente zusätzlich individuell verschlüsselt, wobei die Metadaten den oder die symmetrischen Schlüssel zum Entschlüsseln der einzelnen Dateifragmente umfasst, so werden die Dateifragmete zunächst mit diesen Schlüsseln entschlüsselt. Beispielsweise enthalten die Metadaten noch weitere Informationen, aus welchem hervorgeht, wie der Inhalt der ursprünglichen Datei von den durch das Fehlerkorrekturverfahren generierten Fehlerkorrekturbits getrennt werden können und wie die ursprüngliche Datei einschließlich des Dateinamens aus den Dateifragmenten rekonstruiert werden kann. Unter Verwendung des entschlüsselten symmetrischen Schlüssels entschlüsselt das Nutzer-Computersystem die Datei.

Alle diese Schritte geschehen vorzugsweise voll automatisch unter der Kontrolle der Client-Applikation, sodass der weitere Nutzer, der die Datei lesen möchte, im normalen Betrieb nicht erfährt, auf welchen und wie vielen Speicherdiensten die Datei verteilt gespeichert ist. Dies kann vorteilhaft sein, da der Dateimanagementserver zentral die öffentlichen Schlüssel einer Vielzahl von Nutzern verwalten kann und durch die Weiterleitung sowohl der Metadaten als auch der öffentlichen Schlüssel selektiv an berechtigte weitere Nutzer einen besonders hohen Schutz vor unberechtigtem Zugriff gewährleisten kann. Der symmetrische Schlüssel sorgt dafür, dass die Datei verschlüsselt fragmentiert und in den Speichermedien der einzelnen Speicherdienste gespeichert wird und auch der Upload und Download der Dateifragmente somit nur verschlüsselte Daten umfasst. Vorzugsweise wird für jede individuelle Datei ein anderer symmetrischer Schlüssel dynamisch generiert. Die beschriebene Kombination aus einem dateispezifischen symmetrischen Schlüssel zur Ver- und Entschlüsselung der Datei und einem dem Nutzer zugeordneten öffentlichen Schlüssel zur Integration des symmetrischen Schlüssels in die Metadaten der Datei kann außerdem vorteilhaft sein, da eine Verschlüsselung bzw. Entschlüsselung großer Datenmengen mittels symmetrischer kryptographische Schlüssel in der Regel deutlich performanter ist als mittels eines asymmetrischen kryptografischen Schlüsselpaars. Der Geschwindigkeitsaspekt ist bei der Verschlüsselung der (vergleichsweise kleinen) Metadaten weniger relevant, so das hier auf eine Verschlüsselung mit einem asymmetrischen kryptografischen Schlüsselpaar zurückgegriffen werden kann, die den Austausch eines zur Entschlüsselung notwendigen Schlüssels ermöglicht, ohne dabei den privaten Schlüssel zu offenbaren. Der privaten Schlüssel ist vielmehr vor unberechtigten Zugriffen geschützt auf einem eigenständigen Hardwaretoken gespeichert, sodass er sich nie auf dem demselben Gerät befindet, wie die Datei oder die Dateifragmente.

Falls mehrere Nutzer zum Zugriff auf die verteilt gespeicherte Datei berechtigt sind, kann nach Ausführungsformen für jeden dieser berechtigten Nutzer eine eigene Version von Metadaten für die eine verteilt gespeicherte Datei generiert werden, wobei die Metadaten durch das Nutzer-Computersystem, das die Datei ursprünglich gemäß dem Verteilungsplan verteilt speicherte, mittels des öffentlichen Schlüssels (Verschlüsselungsschlüssel) des jeweiligen Nutzers verschlüsselt wird. Die Metadaten oder zumindest der symmetrische Schlüssel können nur von demjenigen Nutzer entschlüsselt werden, welcher über ein Hardwaretoken verfügt, in dessen Speicher ein dem öffentlichen Verschlüsselungsschlüssel zugeordneter privater kryptographischer Schlüssel in einem geschützten Bereich gespeichert ist.

Zusätzlich oder alternativ dazu kann das Nutzer-Computersystem die generierten Metadaten durch einen öffentlichen Schlüssel eines weiteren, zum Zugriff auf die Datei berechtigten Nutzers ist, verschlüsseln, sodass eine andere Version der verschlüsselten Metadaten generiert wird, um die andere Version der Metadaten für eine sichere Übermittlung an ein Nutzer-Computersystem des weiteren Nutzers zu verwenden.

Das Nutzer-Computersystem generiert die Metadaten für die zu speichernde Datei, wobei die Metadaten zumindest den symmetrischen Schlüssel, beispielsweise in Form eines Hashwerts der Datei umfasst. Ferner können die Metadaten einen Hashwert der Datei, d.h. der unverschlüsselten und/oder verschlüsselten Datei, unabhängig vom symmetrischen Schlüssel sowie Hashwerte der Dateifragmente beinhalten. Die Dateifragmente werden in den Speichermedien der identifizierten Speicherdienste gespeichert. Bei dem verwendeten Hashwert kann es sich beispielsweise um einen mittels eines MD5, Sha-1 oder Sha-2 Hashalgorithmus berechneten Hashwert handeln.

Nach Ausführungsformen können die Dateifragment-spezifischen Hashwerte als Identifikatoren der Dateifragmente dienen. Die Hash Werte der Dateifragmente können mit einem Mapping mit dem ursprünglichen Dateinamen verknüpft werden, und das Mapping kann zusammen mit dem ursprünglichen Dateinamen in die Metadaten aufgenommen werden. Das Nutzer-Computersystem verschlüsselt jedes der Dateifragmente der Datei, wobei der Hashwert der gesamten, ursprünglichen Datei als symmetrischer Schlüssel verwendet wird. Vorzugsweise wird eine starke Verschlüsselung beispielsweise mittels AES-256 oder AES 512 verwendet.

Nach Ausführungsformen umfasst das Verfahren ferner:
- Empfang, durch den Dateimanagementserver, einer Zugriffsanfrage eines weiteren Nutzer-Computersystems zum Zugriff auf die verteilt gespeicherte Datei;
- Identifikation der Speicherdienste, die Dateifragmente der Datei gespeichert haben anhand der Metadaten der Datei durch den Dateimanagementserver;
- Prüfung durch den Dateimanagementserver, ob ein weiterer Nutzer, dem das weitere Nutzer-Computersystem zugeordnet ist, Zugriffsrechte für den Typ des angeforderten Zugriffs und für die Datei besitzt, wobei der Typ des angeforderten Zugriffs kann zum Beispiel ein Schreibzugriff oder ein Lesezugriff sein; mancher Ausführungsformen können weiterhin unterscheiden zwischen Schreibzugriff, Modifikationszugriff, Löschzugriff, Lesezugriff;
- Authentifizierung des weiteren Nutzer-Computersystems gegenüber dem Dateimanagementserver;
- nach erfolgreicher Authentifizierung und falls der weitere Nutzer die Zugriffsrechte für die Datei besitzt, Anforderung eines weiteren Berechtigungstokens durch den Dateimanagementserver von jedem der anhand der Metadaten identifizierten Speicherdienste und Weiterleitung der in Antwort auf diese Anforderung erhaltenen weiteren Berechtigungstoken durch den Dateimanagementserver an das weitere Nutzer-Computersystem, wobei die weiteren Berechtigungstoken dem weiteren Nutzer-Computersystem den angeforderten Zugriff auf die durch die Speicherdienste jeweils gespeicherten Dateifragmente in direkter Form ermöglichen.

Dass der Zugriff weiterer Nutzer auf die gespeicherte Datei der Kontrolle des Dateimanagementservers und nicht der einzelnen Speicherdienste unterliegt, kann vorteilhaft sein, da zum einen eine Registrierung der weiteren Nutzer bei den einzelnen Speicherdiensten nicht erforderlich ist und zum anderen die Sicherheit der gespeicherten Daten erhöht wird, da eine strikte Trennung von Nutzer-und Berechtigungsmanagement einerseits und Dateispeicherung andererseits gewährleistet werden kann.

Nach Ausführungsformen prüft der Dateimanagementserver, ob das zur Authentifizierung des weiteren Nutzers gegenüber dem Dateimanagementserver verwendete Authentifizierungsverfahren hinreichend verlässlich ist, um das von dem Nutzer in den Anforderungen konfigurierte Mindestvertrauensniveau für den angeforderten Zugriff (zum Beispiel Lesezugriff oder Schreibzugriff) zu erfüllen. Die Anforderung des weiteren Berechtigungstokens wird nur dann von dem Dateimanagementserver an die identifizierten Speicherdienste gesendet, falls der weitere Nutzer sich erfolgreich gegenüber dem Dateimanagementserver authentifiziert hat, Zugriffsrechte für die angeforderte Datei besitzt und das verwendete Authentifizierungsverfahren ein Vertrauensniveau hat, welches mindestens so hoch ist wie das in der Konfiguration des Nutzers, dem die Datei gehört, spezifizierte Mindestvertrauensniveau. Dies kann vorteilhaft sein, weil durch die Berücksichtigung des Vertrauensniveaus einzelne Dateien einen besonders hohen Zugriffsschutz erhalten können.

Entweder verfügt das weitere Nutzer-Computersystem bereits über die Metadaten der verteilt gespeicherte Datei oder es fragt diese gemäß einer der zuvor beschriebenen Ausführungsformen über den Dateimanagementserver von dem Nutzer-Computersystem ab, welches die Datei verschlüsselt und fragmentiert sowie die verteilte Speicherung initiiert hat. Hierzu verfügt der Dateimanagementserver entweder bereits über den öffentlichen Schlüssel des Nutzers des weiteren Nutzer-Computersystems, etwa aufgrund eines im Zuge einer Registrierung bei dem Dateimanagementserver angelegten Nutzerprofils, oder das weiteren Nutzer-Computersystems stellt ihm diesen zur Verfügung diesen.

Nach Ausführungsformen verwaltet der Dateimanagementserver für jede gespeicherte Datei ein oder mehrere Versionen von Metadaten. Eine dieser Versionen enthält einen symmetrischen Schlüssel, der zur Verschlüsselung der Datei gedient hat, und der von einem öffentlichen Schlüssel des Nutzer-Computersystems das die Datei verteilt gespeichert hat, verschlüsselt ist. Eine andere der Versionen enthält im Wesentlichen die gleichen Daten, wobei die Metadaten allerdings von einem öffentlichen Schlüssel eines weiteren Nutzer-Computersystems, das von dem Dateimanagementserver als zum Zugriff auf die Datei berechtigt identifiziert wurde, verschlüsselt sind.

Nach Ausführungsformen gehört das Nutzer-Computersystem einem Nutzer, dem noch zumindest ein weiteres Nutzer-Computersystem zugeordnet ist. Das Verfahren umfasst:
- nach der verteilten Speicherung der Datei durch das Nutzer-Computersystem und nach der Übertragung der für diese Datei generierten Metadaten an den Dateimanagementserver, Registrierung des weiteren Computersystems bei dem Dateimanagementserver als ein dem Eigentümer der Datei zugeordnetes Nutzer-Computersystem.

Verwendet der Nutzer dasselbe Hardwaretoken zum Rekonstruieren der Datei an dem weiteren Nutzer-Computersystem, so müssen keine weiteren Metadaten für diesen Nutzer in dem Dateimanagementserver hinterlegt werden.

Dies erlaubt es dem Nutzer von verschiedenen Nutzer-Computersystem, etwa von seinem Computer-System im Büro oder zuhause sowie von einem Laptop unterwegs, auf die Datei zugreifen zu können.

Soll ein weiteres Hardwaretoken des Nutzers, welcher die Datei gespeichert hat, oder eines weiteren Nutzers zum Zugriff auf die verteilt gespeicherte Datei verwendet werden, so umfasst das Verfahren ferner:
- Empfang eines öffentlichen Schlüssels, welcher dem auf dem weiteren Hardwaretoken gespeicherten privaten Schlüssel zugeordnet ist, durch den Dateimanagementserver;
- Zuordnung des empfangenen öffentlichen Schlüssels zu dem entsprechenden Nutzer in den Profildaten des Nutzers durch den Dateimanagementserver; dies kann z.B. im Zuge der Registrierung und vorzugsweise nach einer Bestätigung durch den Nutzer, dass der empfangene öffentlichen Schlüssel für diesen registriert werden soll, automatisch erfolgen;
- Automatisches Senden einer Anfrage zum Erhalt einer weiteren Version von Metadaten für den empfangenen öffentlichen Schlüssel von dem Dateimanagementserver an das Nutzer-Computersystem, das die Datei ursprünglich in verteilter Form gespeichert hat, wobei die Anfrage den zugeordneten öffentlichen Schlüssel enthält;
- iln Antwort auf den Erhalt der Anfrage, automatische Erzeugung einer weiteren Version der Metadaten, die eine Rekonstruktion der Datei ermöglichen, wobei die weitere Version der Metadaten mit dem öffentlichen Schlüssel in der Anfrage verschlüsselt werden;
- Senden der weiteren Version der Metadaten von dem Nutzer-Computersystem an den Dateimanagementserver; und
- Speicherung der weiteren Version der Metadaten durch den Dateimanagementserver.

Dies kann vorteilhaft sein, da ein bereits registrierter Nutzer seinen Zugriff auf sämtliche Dateien beibehält, auch wenn er zusätzlich oder alternativ ein weiteres Hardwaretoken verwendet. Hierzu werden automatisch auch weitere Versionen der Metadaten dieser Dateien generiert, die dem Nutzer auch Zugriff unter Verwendung des privaten Schlüssels des weiteren Hardwaretokens ermöglichen, ohne dass der Nutzer hierzu noch manuell tätig werden muss. Vorzugsweise wird die Anfrage zum Erhalt einer weiteren Version von Metadaten für das registrierte weitere Nutzer-Computersystem dateispezifisch und nur dann generiert.

Nach Ausführungsformen werden die verschlüsselten Metadaten von dem Nutzer-Computersystem zum Entschlüsseln an das Hardwaretoken gesendet. Die Verwendung des privaten Schlüssels erfolgt somit ausschließlich auf dem Hardwaretoken und auf der von diesem definierten kryptographisch gesicherten Infrastruktur.

Nach Ausführungsformen umfasst das Hardwaretoken ein Sicherheitsmodul.

Ein *"Sicherheitsmodul"* stellt nach Ausführungsformen kryptographische Kernroutinen in Form von kryptographischen Programminstruktionen mit kryptographischen Algorithmen bereit, beispielsweise für Signaturerstellung und -prüfung, Schlüsselgenerierung, Schlüsselaushandlung, Ver- und Entschlüsselung von Daten sowie Zufallszahlengenerierung, und kann als sicherer Speicher für kryptographisches Schlüsselmaterial dienen.

Beispielsweise sind zumindest Teile des Sicherheitsmoduls signiert, wie z.B. Programmkomponenten und/oder Hardwarekomponenten, die eine digitale Signatur tragen können. Insbesondere können das Betriebssystem, ein Bootloader, wie er beispielsweise von dem UEFI (engl. "Unified Extensible Firmware Interface", d.h. "Vereinheitlichte erweiterbare Firmware-Schnittstelle") bereitgestellt werden kann, eine Konfigurationsdatei und/oder ein Speicher des Sicherheitsmoduls digital signiert sein. Vor einer Nutzung des Sicherheitsmoduls wird geprüft, ob die Signatur bzw. die Signaturen, valide sind. Wenn eine der Signaturen nicht valide ist, wird die Nutzung des Sicherheitsmoduls und/oder des durch das Sicherheitsmodul gesicherten elektronischen Systems gesperrt.

Des Weiteren kann ein Sicherheitsmodul Mittel zur kryptographischen Datensicherung umfassen, insbesondere in dem geschützten Speicherbereich, wie beispielsweise einen Zufallszahlengenerator, einen Generator für kryptographische Schlüssel, einen Hashgenerator, ein Ver-/Entschlüsselungsmodul, ein Signaturmodul, Zertifikate und/oder einen oder mehrere nicht migrierbare kryptographische Schlüssel.

Nach Ausführungsbeispielen ist das Sicherheitsmodul als ein sogenanntes Tamper Proof Module oder Trusted Platform Module (TPM) ausgebildet, welche auch als Tamper Resistant Module (TRM) bezeichnet werden. Beispielsweise sind zumindest Teile des Computersystems signiert, wie z.B. Programmkomponenten und/oder Hardwarekomponenten, die eine digitale Signatur tragen können. Insbesondere können das Betriebssystem, ein Bootloader, wie er beispielsweise von dem UEFI (engl. "Unified Extensible Firmware Interface", d.h. "Vereinheitlichte erweiterbare Firmware-Schnittstelle") bereitgestellt werden kann, eine Konfigurationsdatei und/oder ein Massenspeichermedium des Computersystems digital signiert sein. Vor einer Nutzung des Computersystems prüft das TRM dann, ob die Signatur bzw. die Signaturen, valide sind. Wenn eine der Signaturen nicht valide ist, sperrt das TRM die Nutzung des Computersystems. Ein TPM umfasst einen Mikrokontroller nach der TCG-Spezifikation wie in ISO/IEC 11889, welcher grundlegende Sicherheitsfunktionen bereitstellt.

Ein Sicherheitsmodul kann ferner einen geschützten Mikrocontroller umfassen, d.h. einen Mikrocontroller mit physikalisch beschränkten Zugriffsmöglichkeiten. Zudem kann das Sicherheitsmodul zusätzliche Maßnahmen gegen Missbrauch aufweisen, insbesondere gegen unberechtigte Zugriffe auf Daten im Speicher des Sicherheitsmoduls. Beispielsweise umfasst ein Sicherheitsmodul Sensoren zur Überwachung des Zustands des Sicherheitsmoduls sowie von dessen Umgebung, um Abweichungen vom Normalbetrieb zu erkennen, welche auf Manipulationsversuche hinweisen können. Entsprechende Sensortypen umfassen beispielweise einen Taktfrequenzsensor, einen Temperatursensor, einen Spannungssensor und/oder einen Lichtsensor. Taktfrequenzsensoren, Temperatursensoren und Spannungssensoren erfassen beispielweise Abweichungen der Taktfrequenz, Temperatur und/oder Spannung nach oben oder unten von einem vordefinierten Normalbereich. Insbesondere kann ein Sicherheitsmodul nichtflüchtige Speicher mit einem geschützten Speicherbereich umfassen.

Nach einer Ausführungsform der Erfindung beinhalten die Mittel zum Schutz des Sicherheitsmoduls gegen unbefugte Manipulationen mechanische Mittel, die z.B. das Öffnen des Sicherheitsmoduls oder seiner Teile verhindern sollen, oder die bei dem Versuch eines Eingriffs in das Sicherheitsmodul dieses unbrauchbar machen, beispielsweise indem ein Datenverlust eintritt. Beispielsweise können hierzu sicherheitskritische Teile des Sicherheitsmoduls in Epoxidharz eingegossen sein, wobei ein Versuch, eine betreffende Komponente aus dem Epoxidharz zu entfernen, zu einer unvermeidlichen Zerstörung dieser Komponente führt.

Durch die Mittel zum Schutz gegen unbefugte Manipulationen wird durch technische Maßnahmen die Vertrauenswürdigkeit des Sicherheitsmoduls, das heißt seine Funktion als "Vertrauensanker", gewährleistet. Beispielsweise wird das Sicherheitsmodul von einer vertrauenswürdigen Institution, wie z.B. durch ein Trust-Center, konfiguriert und mit dem benötigten kryptografischen Schlüsselmaterial versehen. Durch die Mittel zum Schutz gegen unbefugte Manipulationen kann sichergestellt werden, dass sicherheitsrelevante Funktionalitäten des Sicherheitsmoduls nicht modifiziert werden.

Nach Ausführungsformen handelt es sich bei dem symmetrischen Schlüssel um einen zufällig für die zu verschlüsselnde Datei erzeugten oder einen unter Verwendung eines Kennwerts der zu verschlüsselnden Datei erzeugten kryptographischen Schlüssel.

Ein Kennwert ein mit einer bestimmten Identität verknüpftes Merkmal bzw. Wert zur eindeutigen Identifizierung der Datei, welcher der Kennwert zugeordnet ist. Ein Kennwert kann beispielsweise Zahlen, Buchstaben, Sonderzeichen sowie Kombinationen aus diesen umfassen. Solche Kombinationen können nach Ausführungsformen auch beschreibende Angaben umfassen. Ein Kennwert kann ferner in Form eines Prüfwerts der Datei vorliegen. Ein Prüfwert ist ein der Datei zugeordneter Wert, welcher die Datei derart eindeutig charakterisiert, dass die Integrität der Datei anhand des Prüfwerts überprüft werden kann. Ein Prüfwert in Form einer Prüfsumme stellt beispielsweise einen Wert bereit, welcher aus der Datei berechnet wurde und dazu konfiguriert ist, zumindest einen Bitfehler in den Daten der Datei zu erkennen. Je nachdem wie komplex die Berechnungsvorschrift für die Prüfsumme ist, können mehr als ein Fehler erkannt oder auch korrigiert werden. Bekannte Prüfwerte bzw. Prüfsummen können beispielsweise auf einem Aussummieren von datenwerten, einer Berechnung einer Quersumme, eines Paritätsbit, eines gewichteten Mittelwerts der Daten oder auf komplexeren Berechnungsverfahren beruhen, wie etwa einer zyklischen Redundanzprüfung oder der Verwendung einer Hashfunktion. Insbesondere kann es sich bei dem Kennwert um einen Hashwert der Datei handeln.

Nach Ausführungsformen werden die Berechtigungstoken selektiv nur für die Zugriffsanfrage zum Herunterladen der Dateifragmente generiert und besitzen nur temporäre Gültigkeit. Nach Ausführungsformen sind alternativ und/oder zusätzlich die Berechtigungstoken als URLs ausgebildet, die jeweils einen direkten Lesezugriff auf einen durch die URL identifizierten Speicherplatz auf einem der Speichermedien eines der Speicherdienste ermöglicht.

Ausführungsformen können den Vorteil haben, dass der Dateimanagementserver nicht als Router fungiert, was den Schutz der Daten vor unberechtigtem Zugriff durch den Dateimanagementserver gewährleisten kann. Dass die Berechtigungstoken nur eine temporäre Gültigkeit haben kann die Sicherheit des Verfahrens ebenfalls erhöhen. Nach Ablauf einer voreingestellten Zeit, zum Beispiel einigen Sekunden, Minuten oder Tagen, wird das Berechtigungstoken, zum Beispiel eine URL, automatisch ungültig. Die Verwendung von Berechtigung-URLs hat zudem den Vorteil, dass auch Nutzern, die sich nicht bei den einzelnen Speicherdiensten registriert haben, Zugriff auf die Datei gewährt werden kann, da der Dateimanagementserver zentral die Zugriffsrechte verwaltet. Der Eigentümer der Datei kann spezifisch festlegen, ob die Zugriffsrechte rein lesend und/oder auch schreibend sind. Dies kann die Flexibilität und Zahl der Anwendungsszenarien des Verfahrens enorm erhöhen, da weitere Nutzer sich nur bei dem Dateimanagementserver registrieren müssen um beispielsweise eine Datei ansehen zu können. Nach manchen Ausführungsformen ist noch nicht einmal dies erforderlich. Beispielsweise könnte auch ein nicht bei dem Dateimanagementserver registrierter weiterer Nutzer seine Identität gegenüber dem Dateimanagementserver mittels seines elektronischen Personalausweises nachweisen. Bei Ausführungsformen, bei welchen der Schlüssel, mit dem die Datei verschlüsselt wurde, mit dem öffentlichen Schlüssel eines berechtigten Empfänger-Computersystems verschlüsselt wird, kann allerdings eine Registrierung für die zentrale Hinterlegung des öffentlichen Verschlüsselungsschlüssels des Empfänger-Computersystems erforderlich sein.

Jede URL kann beispielsweise aus einer Pfadangabe sowie weiteren Angaben bestehen. Die Pfadangabe kann zum Beispiel eine ID des Speicherdienstes sowie eine Pfadangabe des entsprechenden Speicherplatzes auf dem Speichermedium des Speicherdienstes beinhalten. Die weiteren Angaben können zum Beispiel Parameterwerte umfassen, aus welchen die Berechtigung des Nutzers zum Zugriff auf den besagten Speicherplatz hervorgeht und die von dem Speicherdienst geprüft werden, wenn das Nutzer-Computersystem über die besagte URL auf das Dateifragment zugreift.

Nach Ausführungsformen ist ein Signierschlüssel in einem geschützten Speicherbereich des Speichers des Dateimanagementservers gespeichert. Das Verfahren umfasst ferner:
- Bereitstellen eines dem Signierschlüssel zugeordneten Signaturprüfschlüssels an jeden der Speicherdienste, wobei der Signaturprüfschlüssel zum Prüfen von Signaturen ausgebildet ist, welche mit dem Signierschlüssel generiert sind;
- Signieren der Berechtigungstoken mit dem Signierschlüssel durch den Dateimanagementserver, wobei die Berechtigungstoken in signierter Form an das Nutzer-Computersystem weitergeleitet werden,
   wobei jedes der signierten Berechtigungstoken den Zugriff auf den durch das jeweilige Berechtigungstoken identifizierten Speicherplatz auf dem Speichermedium des jeweiligen Speicherdienstes unter der Voraussetzung ermöglicht, dass der Speicherdienst die Signatur als valide erkennt.

Ausführungsformen können den Vorteil haben, dass es den einzelnen Speicherdiensten ermöglicht wird, eine Signaturprüfung zur Erhöhung der Sicherheit der durch sie gespeicherten Daten auszuführen. Nach Ausführungsformen erfolgt die Signierung der Berechtigungstoken sowohl für Berechtigungstoken, die einen Lesezugriff auf eine bereits verteilt gespeicherte Datei ermöglichen wie auch für Berechtigungstoken die einen Schreibzugriff zur verteilten Speicherung einer Datei gewähren.

Nach Ausführungsformen generiert das Nutzer-Computersystem die Metadaten, die die Rekonstruktion der Datei aus den gespeicherten Dateifragmenten erlauben. Das Nutzer-Computersystem speichert die verschlüsselten Metadaten beispielweise in einem geschützten Speicherbereich des Speichers des Nutzer-Computersystems und überträgt, etwa im Bedarfsfall, die verschlüsselten Metadaten an den Dateimanagementserver. Der Dateimanagementserver kann die übertragenen Metadaten zur Kontrolle des Zugriffs weiterer Nutzer auf die Datei verwenden. Dies kann zum Beispiel dadurch geschehen, dass die Metadaten selektiv nur solchen weiteren Nutzern zur Verfügung gestellt werden, die eine Berechtigungsanfrage an den Dateimanagementserver zum Lesen und/oder schreiben der Datei gesendet haben und die von dem Dateimanagementserver als berechtigt zur Durchführung der angefragten Lese- bzw. Schreiboperation erkannt wurden. Dies kann vorteilhaft sein, da die Metadaten dem Dateimanagementserver erlauben, eine feingranulare Zugangskontrolle speziell für diese Datei für eine Mehrzahl von weiteren Nutzern zu ermöglichen, wobei weder der Dateimanagementserver Zugriff auf die Daten hat noch die einzelnen Speicherdienste die ursprüngliche Datei rekonstruieren können. Ihnen fehlen hierzu die unverschlüsselten Metadaten und außerdem die durch die anderen Speicherdienste gespeicherten Dateifragmente.

Beispielsweise initiiert das Nutzer-Computersystem im Bedarfsfall eine Entschlüsselung der Metadaten durch den Hardwaretoken des Nutzers. Die entschlüsselten Metadaten werden vom Nutzer-Computersystem mit einem zweiten öffentlichen kryptographischen Schlüssel eines zweiten oder desselben Nutzers wieder verschlüsselt. Dieser zweite öffentliche Schlüssel wird dem Nutzer-Computersystem beispielsweise durch den Dateimanagementserver zur Verfügung gestellt, nachdem dieses den Nutzer, mit dessen Nutzerprofilen der entsprechende öffentliche Schlüssel verknüpft ist, als berechtigt zur Durchführung einer angefragten Lese- bzw. Schreiboperation erkannt hat. Die mit dem zweiten öffentlichen Schlüssel verschlüsselten Metadaten werden über den Dateimanagementserver dem Nutzer-Computersystem des zweiten Nutzers zur Verfügung gestellt. Somit kann allein der zweite Nutzer die zur Verfügung gestellten Metadaten unter Verwendung eines Hardwaretokens entschlüsseln, auf welchem ein dem zweiten öffentlichen Schlüssel zugeordneter zweiter privater Schlüssel gespeichert ist.

Nach Ausführungsformen umfassen die Metadaten ferner:
- Pfade zu allen Speicherorten in den Speichermedien der Speicherdienste, in welchen die Dateifragmente der Datei gespeichert wurden; und/oder
- für jedes der Dateifragmente einen von dem Nutzer-Computersystem berechneten Hash-Wert des Dateifragments; und/oder
- den ursprünglichen Dateinamen der verteilt gespeicherten Datei; und/oder
- Konfigurationsdaten des Fehlerkorrekturverfahrens; und/oder
- ein Mapping des ursprünglichen Dateinamens zu den Hashwerten und Pfaden der generierten Dateifragmente.

Ausführungsformen können den Vorteil haben, dass die Metadaten Informationen bereitstellen, welche sowohl den Zugang zu den Daten der verteilt gespeicherten Datei als auch eine Integritätsprüfung der Daten ermöglichen.

Nach manchen Ausführungsformen sind in dem Nutzer-Computersystem Metadaten einer Mehrzahl von verteilt in den Speicherdiensten gespeicherten Dateien gespeichert. Eine Client Applikation des Nutzer-Computersystems verwendet die besagten Metadaten zur Generierung einer clientbasierten Sicht auf die verteilt gespeicherten Dateien. Zusätzlich oder alternativ hierzu sind in dem Dateimanagementserver Metadaten einer Mehrzahl von verteilt in den Speicherdiensten gespeicherten Dateien gespeichert. Ein auf dem Dateimanagementserver gehostetes Webportal verwendet die besagten Metadaten zur Generierung einer netzwerkbasierten Sicht auf die verteilt gespeicherten Dateien. Eine clientbasierte Sicht ist z.B. eine von einem Prozessor eines als Client des Dateimanagementservers agierenden Nutzer-Computersystems generierte Sicht. Eine netzwerkbasierte Sicht ist z.B. eine von einem Prozessor des Dateimanagementservers oder eines mit diesem operativ verbundenen Applikations- oder Webservers generierte und über das Netzwerk einem Client zur Verfügung gestellte Sicht.

Die clientbasierte und/oder die netzwerkbasierte Sicht ist dazu konfiguriert, die ursprünglichen Dateinamen der Mehrzahl der verteilt gespeicherten Dateien aus den Metadaten dynamisch zu rekonstruieren und durch Auswahl einer der verteilt gespeicherten Dateien eine dynamische und automatische Rekonstruktion des Dateiinhalts der ausgewählten Datei durch das Nutzer-Computersystem oder durch ein weiteres berechtigten Nutzer-Computersystem zu initiieren. Die Speicherdienste, in welchen Fragmente der ausgewählten Datei gespeichert sind, werden hierbei durch die Sicht verborgen.

Nach Ausführungsformen ist ein Mindestvertrauensniveau festgelegt, welches ein Mindestmaß an Verlässlichkeit für das Authentifizierungsverfahren spezifiziert, mittels welchem sich das Nutzer-Computersystem des Nutzers gegenüber dem Dateimanagementserver authentifizieren muss, um auf die in den Speichermedien der identifizierten Speicherdienste gespeicherten Datei zugreifen zu dürfen.

Das Verfahren umfasst ferner:
- Prüfen durch den Dateimanagementserver, ob das zum Authentifizieren des Nutzer-Computersystems gegenüber dem Dateimanagementserver verwendete Authentifizierungsverfahren hinreichend verlässlich ist, um das für den Nutzer festgelegte Mindestvertrauensniveau für den angeforderten Zugriff zu erfüllen;
   wobei die Anforderung des Berechtigungstokens nur dann von dem Dateimanagementserver an die Speicherdienste gesendet wird, falls das zum Authentifizieren des Nutzer-Computersystems gegenüber dem Dateimanagementserver verwendete Authentifizierungsverfahren ein Vertrauensniveau hat, welches mindestens so hoch ist wie das festgelegte Mindestvertrauensniveau.

Das Mindestvertrauensniveau kann von dem Nutzer konfiguriert und geändert werden. Das Mindestvertrauensniveau spezifiziert ein von dem Nutzer festgelegtes Mindestmaß an Verlässlichkeit eines Authentifizierungsverfahrens, mittels welchem sich ein weiterer Nutzer gegenüber einem Dateimanagementserver authentifizieren muss, um lesend und/oder schreibend auf die in den Speichermedien der identifizierten Speicherdienste gespeicherten Datei zugreifen zu dürfen. Dies kann vorteilhaft sein, da dem Nutzer eine konfigurierbare und feingranulare (auf Dateiebene befindliche) Kontrolle im Hinblick auf den Zugriff auf diese Datei durch andere Nutzer gegeben wird. Der Nutzer kann zum Beispiel ausschließen, dass eine Datei, die besonders vertrauliche und schützenswerte Informationen beinhaltet, von einem Nutzer eingesehen werden kann, welcher sich nur mit einem vergleichsweise einfach zu knackenden Authentifizierungsverfahren (zum Beispiel Benutzername-Passwort) gegenüber dem Dateimanagementserver authentifiziert hat.

Nach Ausführungsformen ist ein Typ von Computern festgelegt ist, welcher allein berechtigt ist, auf die Dateifragmente der Datei, welche in den Speichermedien der Speicherdienste gespeichert sind, zuzugreifen. Ferner wird die Anforderung der Berechtigungstoken nur unter der Voraussetzung von dem Dateimanagementserver an die Speicherdienste der Auswahl gesendet, dass das Nutzer-Computersystem, von welchem der Nutzer die Zugriffsanfrage an den Dateimanagementserver versendet, den festgelegten Computertyp erfüllt.

Nach Ausführungsformen ist ein Typ von Computern festgelegt ist, welcher allein berechtigt ist, auf die entschlüsselten Metadaten zuzugreifen. Ferner werden die entschlüsselten Metadaten nur unter der Voraussetzung von dem Hardwaretoken an das Nutzer-Computersystem gesendet werden, dass das Nutzer-Computersystem, von welchem der Nutzer die Entschlüsselungsanfrage an das Hardwaretoken versendet, den festgelegten Computertyp erfüllt.

Unter einem "*Typ*" von Computern wird im Folgenden eine Menge von Computern verstanden, welche zumindest ein Merkmal gemein haben, welches Einfluss auf die Integrität der von dem Computer verarbeiteten Daten und/oder auf die Integrität der von dieser Menge Computer ausgeführten Programme hat und welche diesen Typ von Computern von anderen Computern abgrenzt, welche dieses Merkmal nicht besitzen. Zu dem zumindest einen Merkmal könnte gehören, dass das Computer-system immobil ist, da bei mobilen Geräten von einer erhöhten Gefahr des Verlusts und damit der Offenbarung oder Kompromittierung der auf diesem Computersystem gespeicherten Daten und Programme ausgegangen werden muss. Zu dem zumindest einen Merkmal könnte gehören, ob das Computersystem bestimmte Sicherheitsvorkehrungen wie z.B. Virenscanner oder eine Firewall besitzt oder eine Authentifizierung des Nutzers mittels eines Hardwaretokens erfordert. Diese Merkmale können also vorteilhaft sein, weil ein Nutzer für jede einzelne seiner Dateien spezifizieren kann, dass ein anderer Nutzer beispielsweise nur von seinem Arbeitsplatz-Rechner auf diese Datei zugreifen kann, nicht jedoch von seinem Mobiltelefon oder mobilen Rechner aus.

Nach Ausführungsformen umfasst das Verfahren ferner: Authentifizieren des Hardwaretokens gegenüber dem Dateimanagementserver, wobei festgelegt ist, welche Hardwaretoken allein berechtigt sind, eine Entschlüsselung der verteilt in den Speichermedien der Speicherdienste gespeicherten Datei zu ermöglichen, und wobei die Anforderung des Berechtigungstokens nur unter der Voraussetzung von dem Dateimanagementserver an die Speicherdienste der Auswahl gesendet wird, dass das Hardwaretoken zur Entschlüsselung berechtigt ist.

Ausführungsformen können den Vorteil haben, dass zusätzlich zu einem oder mehreren Nutzer-Computersystem ein oder mehrere Hardwaretoken in dem Nutzerprofil des Nutzers vermerkt sind. Beispielsweise sind Zertifikate der entsprechenden Nutzer-Computersystem und/oder Hardwaretoken hinterlegt, anhand derer sich die Nutzer-Computersystem und/oder Hardwaretoken bzw. von diesen signierte Daten auf ihre Authentizität hin prüfen lassen. Somit lässt sich die Sicherheit des Verfahren weiter erhöhen, da zusätzlich zu Authentifizierung des Nutzer-Computersystem eine Authentifizierung des Hardwaretokens notwendig ist. Ein Angreifer müsste somit Zugriff sowohl auf das Nutzer-Computersystem als auch auf das Hardwaretoken erlagen, um an die Berechtigungstoken heranzukommen.

Nach Ausführungsformen wurde die Datei von dem Nutzer-Computersystem auf die nichtflüchtigen Speichermedien der Speicherdienste verteilt gespeichert. Das verteilte Speichern umfasst:
- Verschlüsseln der verteilt zu speichernden Datei mit dem symmetrischen Schlüssel;
- automatisches Generieren des Verteilungsplans, welcher Instruktionen zum Generieren von Dateifragmenten der Datei mittels des Fehlerkorrekturverfahrens und Identifikatoren der mehreren Speicherdiensten, in deren nichtflüchtigen Speichermedien die generierten Dateifragmente gespeichert werden sollen, enthält, durch den Dateimanagementserver oder durch das Nutzer-Computersystem;
- Durchführen des in dem Verteilungsplan spezifizierten Fehlerkorrekturverfahrens zur Generierung der Dateifragmente aus der Datei durch das Nutzer-Computersystem, wobei zumindest eines der Dateifragmente Fehlerkorrekturbits beinhaltet;
- Senden einer Berechtigungsanfrage des Nutzer-Computersystems zum Speichern der Dateifragmente in den im Verteilungsplan identifizierten mehreren Speicherdiensten an den Dateimanagementserver über ein Netzwerk;
- in Antwort auf den Empfang der Berechtigungsanfrage, Anfordern eines Berechtigungstokens durch den Dateimanagementserver von jedem der in dem Verteilungsplan identifizierten mehreren Speicherdiensten und Weiterleiten der in Antwort auf die Anforderung erhaltenen Berechtigungstoken durch den Dateimanagementserver an das Nutzer-Computersystem; und
- Speichern der generierten Dateifragmente in den Speichermedien der identifizierten Speicherdienste über das Netzwerk mittels Berechtigungsnachweis durch die Berechtigungstoken unter Umgehung des Dateimanagementservers durch das Nutzer-Computersystem;

Ausführungsformen können den Vorteil haben, dass sie ein sicheres Speichern von Dateien durch das Nutzer-Computersystem ermöglichen.

Nach manchen Ausführungsformen verwendet und/oder generiert das Nutzercomputersystem, das die Datei verteilt in den Speicherdiensten speichert, einen symmetrischen Schlüssel, um die Datei vor der Fragmentierung zu verschlüsseln. Zudem können nach Ausführungsformen die einzelnen Dateifragmente der Datei vor deren Übertragung an die Speicherdienste individuell zusätzlich verschlüsseln werden. Der symmetrische Schlüssel kann z.B. ein dynamisch berechneter Hashwert der zu speichernden Datei sein. Eine Verschlüsselung mittels eines symmetrischen Schlüssels kann z.B. den Effekt haben, die Performance der Verschlüsselung zu erhöhen. Der symmetrische Schlüssel wird anschließend durch das Nutzer-Computersystem als Bestandteil der Metadaten, die zur Rekonstruktion der Datei notwendig sind, verwendet. Die Metadaten mit dem symmetrischen Schlüssel werden von dem Nutzer-Computersystem zunächst lokal in einem Speicher des Nutzer-Computersystems gespeichert während die Dateifragmente der verschlüsselten Datei über das Netzwerk in den Speicherdiensten gespeichert werden wie zuvor beschrieben. Kein anderes Nutzer-Computersystem und auch nicht der Dateimanagementserver kann auf die verteilt gespeicherte Datei zugreifen, da diese nicht in Besitz der Metadaten sind. Selbst in Ausführungsformen, in welchen die Metadaten in einer oder mehreren Versionen lokal vom Dateimanagementserver vorgehalten werden, kann der Dateimanagementserver die Datei oder einzelne Dateifragmente dennoch nicht entschlüsseln, da die Metadaten oder zumindest der symmetrische Schlüssel mit dem öffentlichen Schlüssel eines berechtigten Nutzers verschlüsselt sind und der Dateimanagementserver nicht im Besitz des entsprechenden privaten Schlüssels ist. Selbst das die Metadaten erstellende Nutzer-Computersystem gelangt nicht in den Besitz des entsprechenden privaten Schlüssels.

Der Dateimanagementserver führt eine Berechtigungsprüfung durch und fordert die Berechtigungstokens nur dann von jedem der in dem Verteilungsplan identifizierten Speicherdienste an falls die Berechtigungsprüfung ergibt, dass der Nutzer, dem das Nutzer-Computersystem zugeordnet ist, zum Speichern der Datei berechtigt ist.

Nach Ausführungsformen werden die generierten Dateifragmente parallel über das Netzwerk an die identifizierten Speicherdienste zu Speicherung übertragen. Dies kann die Geschwindigkeit der Speicherung der Datei erhöhen.

Nach manchen Ausführungsformen wird der Verteilungsplan durch das Nutzercomputersystem, zum Beispiel eine Client-Applikation, die auf dem Nutzer-Computersystem installiert ist, generiert. Nach anderen Ausführungsformen wird der Verteilungsplan durch den Dateimanagementserver generiert und an das Nutzer-Computersystem übertragen.

Nach Ausführungsformen umfasst das Verfahren ferner:
- Bereitstellen einer Konfiguration, die Anforderungen des Nutzers hinsichtlich der Geschwindigkeit, der geographischen Lage, der Sicherheit und/oder der Kosten einer für die Speicherung von Daten zu nutzenden IT-Infrastruktur sowie Anforderungen hinsichtlich der Verfügbarkeit der zu speichernden Daten enthält;
- Bereitstellen eines Speicherdienst-Katalogs, der Spezifikationen einer Mehrzahl von zur Verfügung stehenden Speicherdiensten umfasst, wobei die Spezifikation jedes der Speicherdienste Angaben hinsichtlich der Geschwindigkeit, der geographischen Lage, der Sicherheit und/oder der Kosten einer für die Speicherung der Daten genutzten IT-Infrastruktur des Speicherdienstes enthalten;
- um den Verteilungsplan zu generieren, automatische Auswertung der Konfiguration und des Speicherdienst-Katalogs, um in Abhängigkeit von den Spezifikationen der verfügbaren Speicherdienste und in Abhängigkeit der Anforderungen des Nutzers ein Fehlerkorrekturverfahren aus einer Mehrzahl von Fehlerkorrekturverfahren zu identifizieren, das den Anforderungen hinsichtlich der Verfügbarkeit der zu speichernden Daten genügt und um die im Verteilungsplan identifizierten mehreren Speicherdienste aus der Mehrzahl der zur Verfügung stehenden Speicherdienste zu identifizieren, die zur Speicherung der Datei gemäß den nutzerspezifischen Anforderungen hinsichtlich der Geschwindigkeit, geographischen Lage, Sicherheit und/oder Kosten der für die Speicherung von Daten zu nutzenden IT-Infrastruktur geeignet sind;
- Verwenden des identifizierten Fehlerkorrekturverfahrens als das Fehlerkorrekturverfahren des Verteilungsplans.

Ausführungsformen können den Vorteil haben, dass sie eine effiziente und automatisierte Generierung des Verteilungsplans ermöglichen.

Nach manchen Ausführungsformen wird der Verteilungsplan von dem Nutzer-Computersystem generiert, nach anderen Ausführungsformen wird er durch den Dateimanagementserver generiert und an das Nutzer-Computersystem über das Netzwerk übertragen. In die Generierung des Verteilungsplans können auch Merkmale der zu speichernden Datei eingehen, wobei die Merkmale im Falle der serverseitigen Generierung des Verteilungsplans als Bestandteil einer Nachricht noch von dem Nutzer-Computersystem an den Dateimanagementserver über das Netzwerk übertragen werden.

Nach Ausführungsformen ist die Konfiguration durch den Nutzer editierbar, sodass er die für sich maßgeblichen Kriterien für die verteilte Speicherung der Datei festlegen kann.

Beispielsweise kann die Konfiguration Regeln umfassen, die von dem Nutzer erstellt und angepasst werden können. Einige Regeln sollen hier beispielhaft angeführt werden: "wenn die zu speichernde Datei eine Backupdatei ist, dann sollen die Kosten pro Gigabyte Speicherplatz unterhalb 2 Euro liegen"; "wenn die zu speichernde Datei eine Backupdatei ist, dann sollen die minimal garantierte Upload-Rate bei 1 MB/Sekunde liegen"; "wenn die erforderliche Dateiverfügbarkeit 2 X 9/9 ist, dann sollen die Kosten pro GB Speicherplatz unter 2 liegen, wobei die Upload- und Download Übertragungsrate so groß wie möglich sein soll.

Bei Ausführungsformen, in welchen der Verteilungsplan von dem Nutzer-Computersystem generiert wird, erfolgt auch die automatische Auswertung durch das Nutzer-Computersystem. Wird der Verteilungsplan von dem Dateimanagementserver generiert, erfolgt auch die automatische Auswertung durch den Dateimanagementserver. Vorzugsweise wird jedoch in beiden Ausführungsformen sowohl der Speicherdienst-Katalog als auch die Nutzer-Konfiguration zur Nutzung durch eine Vielzahl von Nutzer-Computersystemen zentral gespeichert, zum Beispiel auf dem Dateimanagementserver oder einem mit diesem verbundenen Datenbankserver. Dies kann die Aktualisierung des Speicherdienst-Katalogs erleichtern.

Nach manchen Ausführungsformen hat der Dateimanagementserver eine Schnittstelle, die mit Schnittstellen der Speicherdienste interoperabel ist und bewirkt, dass bei einer Änderung bezüglich der Sicherheit, geographischen Lage, Verfügbarkeit oder Kosten der IT-Infrastruktur eines der Speicherdienste eine automatische Aktualisierung der in dem Speicherdienst-Katalog enthaltenen Spezifikation dieses Speicherdienstes bewirkt wird.

Nach Ausführungsformen werden für die automatische Generierung des Verteilungsplans außerdem Merkmale der zu speichernden Datei berücksichtigt. Diese Merkmale können zum Beispiel ein oder mehrere der folgenden Merkmale beinhalten: den Dateityp (Back-up-Datei oder regelmäßig genutzte Arbeitsdatei); das Dateiformat (.doc, .jpg, .avi, .pdf, .exe usw.); die Dateigröße und weitere. Falls der Verteilungsplan von dem Dateimanagementserver erstellt wird können diese Merkmale zum Beispiel als Bestandteil einer Nachricht von dem Nutzer-Computersystem an den Dateimanagementserver übertragen werden. Dies kann vorteilhaft sein, dafür unterschiedliche Dateitypen beispielsweise unterschiedliche Speicherdienste optimal sein können. Für selten genutzte Backupdateien können zum Beispiel Auswahl löschen kostengünstige aber vergleichsweise langsame Speicherdienste geeignet sein während für häufig genutzte Dateien Speicherdienste geeigneter sein können, die eine hohe Uploadrate und/oder Downloadrate anbieten. Die besagten Merkmale der Datei können nicht nur Einfluss haben auf die Speicherdienste, deren Identifikatoren in den Verteilungsplan integriert werden, sondern auch auf das in dem Verteilungsplan spezifizierte Fehlerkorrekturverfahren. Ist die zu speichernde Datei zum Beispiel sehr groß und eine schnelle Speicherung über das Netzwerk gewünscht, kann das Fehlerkorrekturverfahren automatisch so konfiguriert werden, dass es viele kleine Dateifragmente generiert, die schnell parallel über das Netzwerk übertragen werden können. Bei einer kleineren Datei kann auch eine entsprechend kleinere Anzahl an Dateifragmenten ausreichend sein um eine hinreichend schnelle Übertragung zu gewährleisten.

Nach Ausführungsformen umfasst das Verfahren ferner:
- Authentifizieren des Nutzer-Computersystems gegenüber dem Dateimanagementserver;
- Auf den Empfang der Berechtigungsanfrage des Nutzer-Computersystems zur Speicherung der Dateifragmente hin, Prüfen durch den Dateimanagementserver ob der Nutzer, dem das Nutzer-Computersystem zugeordnet ist, Zugriffsrechte zum Speichern der Datei mittels der identifizierten Speicherdienste besitzt; wobei die Anforderung des Berechtigungstokens durch den Dateimanagementserver unter der Voraussetzung erfolgt, dass das Authentifizieren des Nutzer-Computersystems erfolgreich ist und dass der Nutzer die Zugriffsrechte besitzt.

Nach Ausführungsformen umfasst das Verfahren ferner:
- Generieren der Metadaten, durch das Nutzer-Computersystem;
- Verschlüsseln der Metadaten oder zumindest des symmetrischen Schlüssels mit dem öffentlichen Schlüssel, dessen zugeordneter privater Schlüssel in dem Hardwaretoken gespeichert ist,
- Speichern der verschlüsselten Metadaten in dem Hardwaretoken, in dem Nutzer-Computersystem und/oder auf dem Dateimanagementserver.

Nach Ausführungsformen umfasst das Verfahren ferner:
- Generieren verkürzter Metadaten, durch das Nutzer-Computersystem, wobei die verkürzten Metadaten aus den Metadaten durch Entfernen des symmetrischen Schlüssels generiert werden;
- Übertragen der verkürzten Metadaten an den Dateimanagementserver; und
- Verwenden der verkürzten Metadaten durch den Dateimanagementserver zur Kontrolle des Zugriffs auf die verteilt in den Speichermedien der Speicherdienste gespeicherten Datei.

Ausführungsformen können den Vorteil haben, dass die verkürzten Metadaten unverschlüsselt sind und dem Dateimanagementserver somit erlauben, die von diesen umfassten Informationen zu verwenden. Beispielsweise handelt es sich bei diesen Informationen um einen Kennwert der Datei, wie etwa den Dateinamen, und/oder Informationen zu den Speicherorten der Dateien. Diese Informationen kann der Dateimanagementserver beispielsweise zum Bereitstellen von Berechtigungstoken zum Zugriff auf die Datei verwenden.

Die verkürzten Metadaten können beispielsweise zusammen mit den verschlüsselten Metadaten an den Dateimanagementserver übermittelt werden. Nach Ausführungsformen umfassen die verschlüsselten Metadaten nur den oder die symmetrischen Schlüssel, welche zum Entschlüsseln der Datei notwendig sind, während die verkürzten Metadaten ein oder mehrere der weiteren Informationen, welche von den Metadaten umfasst werden können, umfassen.

Nach Ausführungsformen beinhaltet das Ermitteln des Fehlerkorrekturverfahrens, welches den Anforderungen des Nutzers hinsichtlich der Verfügbarkeit der Datei genügt, ein Ermitteln der zu erwartenden Gesamtgröße aller durch das Fehlerkorrekturverfahren zu generierenden Dateifragmente, wobei für jedes der zu generierenden Dateifragmente ein Speicherdienst identifiziert wird, welcher gemäß dessen Angaben den Anforderungen hinsichtlich der Geschwindigkeit, geographischen Lage, Sicherheit und/oder Kosten unter Berücksichtigung der zu erwartenden Gesamtgröße genügt.

Nach Ausführungsformen erfolgt, falls das ermittelte Fehlerkorrekturverfahren die Generierung von Dateifragmenten bewirken würde, deren Gesamtgröße es nicht ermöglicht, eine hinreichende Anzahl von Speicherdiensten zu identifizieren, die gemäß deren Angaben den Anforderungen hinsichtlich der Geschwindigkeit, Sicherheit und/oder Kosten unter Berücksichtigung der Gesamtgröße genügen, automatisch eine Ermittlung eines anderen Fehlerkorrekturverfahrens, welches dazu konfiguriert ist, Dateifragmente zu erzeugen, deren zu erwartende Gesamtgröße hinreichend klein ist, sodass für jedes zu generierende Dateifragment ein Speicherdienst identifiziert werden kann welcher gemäß seiner Angaben den Anforderungen hinsichtlich der Geschwindigkeit, geographischen Lage, Sicherheit und/oder Kosten unter Berücksichtigung der zu erwartenden Gesamtgröße genügt.

Nach Ausführungsformen wird das ermittelte Fehlerkorrekturverfahren, um Anforderungen des Nutzers im Hinblick auf eine maximale Dauer des Datentransfers zur Übertragung der Datei über das Netzwerk zu erfüllen, automatisch so konfiguriert, dass durch dieses eine hinreichend große Anzahl der generierten Dateifragmente generiert wird, sodass bei paralleler Übertragung dieser Dateifragmente zu den oder von den mehreren in dem Verteilungsplan identifizierten Speicherdiensten die Übertragungszeit für alle Dateifragmente unterhalb der maximalen Dauer liegt.

Nach Ausführungsformen enthalten die Anforderungen hinsichtlich der Verfügbarkeit, der geographischen Lage, der Geschwindigkeit, der Sicherheit und/oder Kosten ein oder mehrere der folgenden Daten in nutzerkonfigurierbarer Form:
- eine Spezifikation des Fehlerkorrekturverfahrens, nach welchem die Dateifragmente erzeugt werden sollen um in dem Speichermedium des Speicherdienstes gespeichert zu werden; die Spezifikation kann insbesondere einen Identifikator (ID) eines standardmäßig verwendeten Fehlerkorrekturverfahrens und Standard-Konfigurationsparameter wie etwa eine Wortlänge, eine Anzahl K der zu erzeugenden Dateipartitionen ohne Fehlerkorrekturbits, eine Anzahl M der verlustkompensierbaren Dateipartitionen, eine Cachegröße des für die Generierung der Dateipartitionen oder Dateifragmente zu reservierenden Caches etc.; Diese Standard-Konfigurationsparameter können ggf. in Abhängigkeit von Merkmalen der Datei und/oder Merkmalen der verfügbaren Speicherdienste dynamisch während der Generierung des Verteilungsplans modifiziert werden;
- Angaben zur mindestens erforderlichen Verfügbarkeit des Speicherdienstes; dies kann zum Beispiel eine Angabe beinhalten, bis zu welcher Anzahl von ausgefallenen Speicherdiensten die ursprüngliche Datei aus den in den übrigen Speicherdiensten gespeicherten Dateifragmente noch rekonstruierbar sein soll;
- Angaben zu einer von dem Nutzer geforderten geographischen Lage der IT-Infrastruktur des Speicherdienstes und/oder der geographischen Lage des Sitzes des Anbieters des Speicherdienstes;
- Angaben zur von dem Speicherdienst mindestens zu gewährenden Datensicherheit für die bei dem Speicherdienst gespeicherten Daten; diese Angaben können z.B. eine Angabe der mindestens erforderlichen Bitlänge des zur Verschlüsselung der Datei verwendeten Schlüssels beinhalten;
- Angaben zur von dem Speicherdienst mindestens zu gewährenden Datensicherheit während eines Speicherns und/oder Lesens von Daten über diesen Speicherdienst; diese Angaben können z.B. eine Angabe der unterstützen Verschlüsselungsprotokolle, die bei der Übertragung der Dateifragmente verwendeten werden können, beinhalten;
- Angaben zu den maximalen Kosten des Transfers der zu speichernden Daten an den Speicherdienst; die Angaben können z.B. in EURO pro GB Upload oder Download spezifiziert sein;
- Angaben zur minimalen Geschwindigkeit des Datenuploads zu dem oder des Datendownloads von dem Speicherdienst; die Angaben können z.B. in übertragene MB pro Sekunde für Upload und/oder Download spezifiziert sein.

Nach Ausführungsformen enthalten die Angaben in jeder der Spezifikationen eines der Speicherdienste hinsichtlich der Verfügbarkeit, der geographischen Lage, der Geschwindigkeit, der Sicherheit und/oder der Kosten der für die Speicherung des Dateifragments genutzten IT-Infrastruktur des Speicherdienstes ein oder mehrere der folgenden Daten:
- Angaben zur garantierten Mindestverfügbarkeit des Speicherdienstes;
- Angaben zur der von dem Speicherdienst mindestens gewährten Datensicherheit der von diesem Speicherdienst gespeicherten Daten;
- Angaben zur von dem Speicherdienst während eines Speicherns und/oder Lesens von Daten über diesen Speicherdienst mindestens gewährten Datensicherheit;
- Angaben zur geographischen Lage der IT-Infrastruktur des Speicherdienstes und/oder der geographischen Lage des Sitzes des Anbieters des Speicherdienstes;
- Angaben zu den Kosten des Transfers der zu speichernden Daten an den Speicherdienst;
- Angaben zur minimal garantierten Geschwindigkeit des Datenuploads zu dem oder des Datendownloads von dem Speicherdienst.

Ein *"Wort"* des Fehlerkorrekturverfahrens ist eine Bitgruppe, die die kleinste Einheit darstellt, in Bezug auf welche ein Fehler festgestellt und gegebenenfalls korrigiert wird. Häufig werden 8 Bit als Wortlänge verwendet. Aus einer Bit-Wortlänge ergibt sich eine feste Größe an Daten die korrigiert werden können.

Die Ermittlung des Fehlerkorrekturverfahrens, das in dem Verteilungsplan spezifiziert werden soll kann eine Ermittlung von Konfigurationsparametern des Fehlerkorrekturverfahrens beinhalten. Zu den Konfigurationsparametern können z.B. gehören: eine Wortlänge W; eine Anzahl K von Dateipartitionen ohne Berücksichtigung der Fehlerkorrekturbits; und/oder eine Anzahl M der Dateipartitionen K, deren Verlust durch den Informationsgehalt der Fehlerkorrekturbits notfalls kompensiert werden soll. Eine *"Dateipartition"* ist hier ein zunächst generiertes Dateifragment, das noch keinerlei Fehlerkorrekturbit enthält. Aus diesen zunächst generierten Dateipartitionen können die eigentlichen Dateifragmente mit den Fehlerkorrekturbits berechnet werden, die schließlich an die Speicherdienste übertragen werden.

Beispielsweise könnte die Dateigröße der zu speichernden Datei in die Ermittlung des Fehlerkorrekturverfahrens eingehen. Die zu speichernde Datei könnte eine Dateigröße von "10 Mb" besitzen.

Nach einem ersten Beispiel könnte die Anzahl der Dateipartitionen K "4" betragen. Dies bedeutet, dass das Fehlerkorrekturverfahren die zu speichernde Datei zunächst in 4 Dateipartitionen der Größe 2,5 Mb aufteilt. Die Anzahl M der Dateipartitionen, deren Verlust ggf. kompensiert werden soll, könnte "1" betragen. Die Konfigurationsparameter K=4 und M=1 bewirken, dass das Fehlerkorrekturverfahren insgesamt 5 Dateifragmente generiert, die je 10Mb/4=2,5 Mb groß sind. Insgesamt würde ein Fehlerkorrekturalgorithmus mit der exemplarischen k=4, m=1 Konfiguration 12,5MB Daten aus der ursprünglichen 10 MB großen Ausgangsdatei erzeugen. Vier der Dateifragmente könnten aus den Dateipartitionen bestehen und somit rein aus Dateidaten bestehen während das fünfte Dateifragment völlig aus Fehlerkorrekturbits bestehen könnte. Gemäß einem zweiten Beispiel könnten die Konfigurationsparameter K=4 und M=2 betragen und bewirken, das Fehlerkorrekturverfahren insgesamt 6 Dateifragmente generiert, 2 davon bestehen aus Fehlerkorrekturbits, 4 bestehen aus Dateipartitionen. Aus der Ausgansdatei werden insgesamt 6 x 2,5 Mb= 15 Mb Daten erzeugt.

Neben Fehlerkorrekturverfahren, welche Dateifragmente generieren, die entweder aus Dateipartitionen oder reinen Fehlerkorrekturdaten bestehen, können in anderen Ausführungsformen auch Fehlerkorrekturverfahren verwendet werden, bei welches jede generierte Dateifragment einen ersten Anteil bestehend rein aus Dateidaten und einen zweiten Anteil bestehend aus Fehlerkorrekturbits beinhaltet. In dem oben genannten ersten Beispiel mit K=4 und M=1 für eine 10MB Datei könnten z.B. 5 Dateifragmente a 2,5 Mb generiert werden, die pro Dateifragment 2,5MB/5=0,5Mb Fehlerkorrekturbits beinhalten. In dem oben genannten zweiten Beispiel mit K=4 und M=2 für die 10MB Datei könnten z.B. 6 Dateifragmente a 2,5 Mb generiert werden, die jeweils (2^{∗}2,5Mb)/6=0,83 Mb Fehlerkorrekturbits beinhalten.

Die Konfigurationsparameter K und M sind nach manchen Ausführungsformen vom Nutzer standardmäßig vorkonfiguriert, können jedoch in Abhängigkeit von Merkmalen der Datei, in Abhängigkeit von den Anforderungen des Nutzers und/oder von den Spezifikationen der Eigenschaften der verfügbaren Speicherdienste dynamisch geändert werden um eine optimierte Verteilung (im Hinblick auf Kosten, Verfügbarkeit, etc.) der Dateifragmente zu bewirken. Die dynamischen Konfigurationsparameter werden in den generierten Verteilungsplan integriert um das darin identifizierte Fehlerkorrekturverfahren näher zu charakterisieren. Mit steigender Anzahl M der verlustkompensierbaren Dateipartitionen wird die Verfügbarkeit und Ausfallsicherheit der verteilt gespeicherten Datei erhöht, allerdings erhöht sich bei unverändertem K auch die Größe der einzelnen Dateifragmente.

Nach manchen Ausführungsformen werden die Konfigurationsparameter M und/oder K des in dem Verteilungsplan spezifizierten Fehlerkorrekturverfahren so ermittelt, dass mit steigenden Anforderungen des Nutzers an die Verfügbarkeit der Datei nicht nur M steigt, sondern auch K. Als Konsequenz dessen wird auch die Anzahl der von dem Fehlerkorrekturverfahren zu generierenden Dateifragmente erhöht um die Größe der einzelnen Dateifragmente annähernd konstant zu halten und eine gleichbleibend kurze Übertragungszeit bei parallelem Dateifragment-Upload zu gewährleisten. Ggf. müssen in diesem Fall auch die Anzahl der zur parallelen Speicherung der Dateifragmente verwendeten und in dem Verteilungsplan spezifizierten Speicherdienste erhöht werden. Vorzugsweise werden die Konfigurationsparameter K und/oder M dynamisch ermittelt, der Nutzer gibt lediglich in seinen konfigurierbaren Anforderungen an, ob die verteilte Speicherung in erster Linie kostenoptimiert, geschwindigkeitsoptimiert oder verfügbarkeitsoptimiert erfolgen soll. Dies kann vorteilhaft sein da der Nutzer sich somit nicht mit den algorithmischen Spezifika des Fehlerkorrekturverfahrens auseinandersetzen muss.

Nach Ausführungsformen beinhaltet die Ermittlung des Fehlerkorrekturverfahrens, welches den Anforderungen des Nutzers hinsichtlich der Verfügbarkeit der Datei genügt, eine Ermittlung der zu erwartenden Gesamtgröße aller durch das Fehlerkorrekturverfahren zu generierenden Dateifragmente. Für jedes der zu generierenden Dateifragmente wird hierbei ein Speicherdienst identifiziert welcher gemäß dessen Angaben den Anforderungen hinsichtlich der Geschwindigkeit, geographischen Lage, Sicherheit und/oder Kosten unter Berücksichtigung der zu erwartenden Gesamtgröße genügt. Dies kann vorteilhaft sein, weil ein sehr flexibles Verfahren zur verteilten Speicherung von Dateien bereitgestellt wird, welches dynamisch in Abhängigkeit an die Größe jeder einzelnen zu speichernden Datei und den durch den Nutzer und die verfügbaren Speicherdienste vorgegebenen Rahmenbedingungen einen geeigneten Verteilungsplan einschließlich eines dynamisch daran angepassten Fehlerkorrekturverfahrens erstellt.

Zusätzlich oder alternativ dazu beinhaltet die Ermittlung des Fehlerkorrekturverfahrens eine automatische Prüfung, ob das ermittelte Fehlerkorrekturverfahren die Generierung von Dateifragmenten bewirken würde, deren Gesamtgröße es nicht erlaubt, eine hinreichende Anzahl von Speicherdiensten zu identifizieren, die gemäß deren Angaben den Anforderungen hinsichtlich der Geschwindigkeit, Sicherheit und/oder Kosten unter Berücksichtigung der Gesamtgröße genügen. Falls dies der Fall ist, also keine hinreichende Anzahl von Speicherdiensten identifiziert werden kann, erfolgt automatisch eine Ermittlung eines anderen Fehlerkorrekturverfahrens, welches dazu konfiguriert ist, Dateifragmente zu erzeugen, deren zu erwartende Gesamtgröße hinreichend klein ist, sodass für jedes zu generierende Dateifragment ein Speicherdienst identifiziert werden kann welcher gemäß seiner Angaben den Anforderungen hinsichtlich der Geschwindigkeit, geographischen Lage, Sicherheit und/oder Kosten unter Berücksichtigung der zu erwartenden Gesamtgröße genügt. Dies kann vorteilhaft sein, weil eine automatische Anpassung des Fehlerkorrekturverfahrens an die aktuell gemäß Katalog verfügbaren Speicherdienste und die aktuell von dem Nutzer spezifizierten Anforderungen möglich ist, ohne dass der Nutzer hier manuell eingreifen müsste.

Zusätzlich oder alternativ wird das Fehlerkorrekturverfahren automatisch so ermittelt, dass gewährleistet ist, dass Anforderungen des Nutzers im Hinblick auf eine maximale Dauer des Datentransfers zur Übertragung der Datei über das Netzwerk erfüllt werden. Um dies zu erreichen, wird das ermittelte Fehlerkorrekturverfahren automatisch so konfiguriert, dass durch dieses eine hinreichend große Anzahl der generierten Dateifragmente generiert wird, sodass bei paralleler Übertragung dieser Dateifragmente zu den (Upload) oder von den (Download) in dem Verteilungsplan (Upload) oder den Metadaten (Download) spezifizierten Speicherdiensten die Übertragungszeit für alle Dateifragmente unterhalb der maximalen Dauer liegt.
Bei dem Fehlerkorrekturverfahren kann es sich beispielsweise um das Reed-Muller Verfahren, das Reed-Solomon Verfahren, das Cauchy-Reed-Solomon Verfahren oder vergleichbare Fehlerkorrekturverfahren handeln.

Nach Ausführungsformen umfasst das Verfahren ferner:
- Berechnen eines Kennwerts der gesamten Datei durch das Nutzer-Computersystem;
- Verwenden des Kennwerts als symmetrischer Schlüssel zur Verschlüsselung der Datei durch das Nutzer-Computersystem.
Bei dem Kennwert handelt sich beispielsweise einen Hashwert der gesamten Datei oder einer Datenauswahl derselben, wie etwa Kopfdaten (Header) oder den Nutzdaten (Loaddata).

Ausführungsformen umfassen ferner ein computerlesbares Speichermedium mit computerlesbaren Instruktionen, welche bei Ausführung durch einen Prozessor den Prozessor zur Durchführung des Verfahrens nach einer der vorangehenden Ausführungsformen veranlassen.

Ausführungsformen umfassen ferner ein Nutzer-Computersystem, welches einen Prozessor umfasst, eine Netzwerkschnittstelle zur operativen Kopplung des Nutzer-Computersystems an eine Mehrzahl von Speicherdiensten und an einen Dateimanagementserver über ein Netzwerk. Ferner umfasst das Nutzer-Computersystem eine Schnittstelle zur operativen Kopplung des Nutzer-Computersystems an einen Hardwaretoken und ein Speichermedium mit einer von dem Prozessor ausführbaren Client-Applikation umfasst. Die Client-Applikation ist zur Ausführung eines Verfahrens zum Verarbeiten einer Datei konfiguriert ist, wobei die Datei mit einem symmetrischen Schlüssel verschlüsselt ist und gemäß einem Verteilungsplans mittels eines Fehlerkorrekturverfahrens in Dateifragmente aufgeteilt ist, wobei die resultierenden Dateifragmente auf nichtflüchtigen Speichermedien der Speicherdienste verteilt gespeichert sind, wobei Metadaten, welche der Datei zugeordnet sind, den symmetrische Schlüssel umfassen, der eine Entschlüsselung der mit diesem symmetrischen Schlüssel verschlüsselten Datei ermöglicht, wobei die Metadaten oder zumindest der symmetrische Schlüssel mit einem öffentlichen Schlüssel verschlüsselt sind, wobei ein privater Schlüssel, der mit dem öffentlichen Schlüssel ein asymmetrisches kryptographisches Schlüsselpaar bildet, in einem geschützten Speicherbereich eines Speichers des Hardwaretokens gespeichert ist, wobei das asymmetrische kryptographische Schlüsselpaar einem Nutzer zugeordnet ist.

Das Verfahren umfasst:
- Senden einer Zugriffsanfrage eines Nutzer-Computersystems zum Zugriff auf die verteilt gespeicherte Datei an einen Dateimanagementserver;
- Authentifizieren des Nutzer-Computersystems gegenüber dem Dateimanagementserver;
- Aach erfolgreichem Authentifizieren des Nutzer-Computersystems und falls der Nutzer, dem das Nutzer-Computersystem zugeordnet ist, Zugriffsrechte für die Datei besitzt, Empfangen eines Berechtigungstokens von jedem der Speicherdienste zumindest einer Auswahl der Speicherdienste, in deren nichtflüchtigen Speichermedien die Dateifragmente gespeichert sind, über den Dateimanagementserver, wobei die von der Auswahl der Speicherdienste umfassten Dateifragmente hinreichend für eine Rekonstruktion der Datei sind,
   wobei die Berechtigungstoken dem Nutzer-Computersystem den angeforderten Zugriff auf die durch die Speicherdienste jeweils gespeicherten Dateifragmente unter Umgehung des Dateimanagementservers ermöglichen;
- Herunterladen der Dateifragmente von den einzelnen Speicherdiensten unter Verwendung der Berechtigungstoken und unter Umgehung des Dateimanagementservers;
- Senden einer Entschlüsselungsanfrage des Nutzer-Computersystems zum Zugriff auf die entschlüsselten Metadaten an das Hardwaretoken;
- Authentifizieren des Nutzer-Computersystems gegenüber dem Hardwaretoken;
- Nach erfolgreichem Authentifizieren des Nutzer-Computersystems und falls der Nutzer, dem das Nutzer-Computersystem zugeordnet ist, Zugriffsrechte für die entschlüsselten Metadaten besitzt, Empfangen der durch das Hardwaretoken mit dem privaten Schlüssel entschlüsselten Metadaten;
- Rekonstruieren der verschlüsselten Datei aus den Dateifragmente unter Verwendung der Metadaten,
- Entschlüsseln der verschlüsselten Datei mit dem von den Metadaten umfassten symmetrischen Schlüssel.

Das Nutzer-Computersystem ist dazu konfiguriert ein oder mehrere der vorangehenden Ausführungsformen des Verfahrens auszuführen.

Ausführungsformen umfassen ferner ein computerimplementiertes Datenverarbeitungssystem, welches das zuvor genannte Nutzer-Computersystem und das Hardwaretoken umfasst, wobei das Hardwaretoken einen Prozessor, eine Schnittstelle zur operativen Kopplung des Hardwaretokens an das Nutzer-Computersystem und einen Speicher mit einem geschützten Speicherbereich umfasst, in dem der private Schlüssel des asymmetrisches kryptographisches Schlüsselpaars gespeichert ist, wobei der Speicher ferner eine kryptographische Applikation zum Ausführen eines kryptographischen Verfahrens umfasst.

Das kryptographische Verfahren umfasst:
- Empfangen der Entschlüsselungsanfrage von dem Nutzer-Computersystem,
- Entschlüsseln der Metadaten oder zumindest des symmetrischen Schlüssels mit dem privaten Schlüssel,
- Senden der entschlüsselten Metadaten an das Nutzer-Computersystem.

Das Hardwaretoken ist dazu konfiguriert ein oder mehrere der vorangehenden Ausführungsformen des Verfahrens auszuführen.

Nach Ausführungsbeispielen umfasst das computerimplementierte Datenverarbeitungssystem ferner einen Dateimanagementserver, wobei der Dateimanagementserver einen Prozessor, eine Netzwerkschnittstelle zur operativen Kopplung des Dateimanagementservers mit dem Nutzer-Computersystem und mit der Mehrzahl von Speicherdiensten über das Netzwerk, wobei der Dateimanagementserver ein Speichermedium mit einer von dem Prozessor ausführbaren Dateimanagement-Applikation umfasst.

Die Dateimanagement-Applikation ist zur Ausführung folgenden Verfahrens konfiguriert:
- Empfang einer Zugriffsanfrage eines Nutzer-Computersystems zum Zugriff auf die verteilt gespeicherte Datei an einen Dateimanagementserver, wobei der Dateimanagementserver keinen Speicherdienst bereitstellt;
- Authentifizieren des Nutzer-Computersystems; und
- in Antwort auf den Empfang der Zugriffsanfrage, falls das Authentifizieren erfolgreich ist und der Nutzer, dem das Nutzer-Computersystem zugeordnet ist, Zugriffsrechte für die Datei besitzt, Senden der Berechtigungstoken von jedem der Speicherdienste zumindest der Auswahl der Speicherdienste, in deren nichtflüchtigen Speichermedien die Dateifragmente gespeichert sind, wobei die von der Auswahl der Speicherdienste umfassten Dateifragmente hinreichend für eine Rekonstruktion der Datei sind, wobei die Berechtigungstoken dem Nutzer-Computersystem den angeforderten Zugriff auf die durch die Speicherdienste jeweils gespeicherten Dateifragmente unter Umgehung des Dateimanagementservers ermöglichen.

Der Dateimanagementserver ist dazu konfiguriert ein oder mehrere der vorangehenden Ausführungsformen des Verfahrens auszuführen.

Ein *"Verteilungsplan"* im Sinne der vorliegenden Erfindung ist eine Spezifikation, welche zumindest Angaben über die Identität derjenigen Speicherdienste enthält, über welche Fragmente einer Datei gespeichert werden sollen sowie Angaben enthält, die einen Fehlerkorrekturverfahren festlegen, welches zur Generierung dieser Dateifragmente aus der besagten Datei verwendet werden soll. Ein Verteilungsplan kann z.B. als XML Datei oder binäre Datei ausgebildet sein.

Ein *"Dateimanagementserver"* ist ein Computersystem, welches eine Schnittstelle zur Kommunikation mit ein oder mehreren Nutzer-Computersystemen und zur Kommunikation mit mehreren Speicherdiensten besitzt um den ein oder mehreren Nutzer-Computersystemen Zugriffsrechte auf von diesen Speicherdiensten verwaltete Speichermedien zu vermitteln. Der Dateimanagementserver stellt dabei selbst keinen Speicherdienst bereit und ist vorzugsweise auch von den Speicherdiensten durch sicherheitstechnische Maßnahmen getrennt, welche dafür sorgen, dass keiner dieser Speicherdienste Zugriff auf von dem Dateimanagementserver verwaltete Daten, insbesondere z.B. Nutzerprofile und Metadaten, hat. Der Dateimanagementserver kann aus einem Datenverarbeitungsgerät bestehen oder aus mehreren Datenverarbeitungsgeräten, insbesondere Computern, bestehen, die zusammenwirken und gemeinsam verwaltet werden um die Funktionalität des Dateimanagementservers gemäß den oben beschriebenen Ausführungsformen bereitzustellen.

Ein *"Berechtigungstoken"* ist eine Datenstruktur, z.B. eine Datei oder eine URL, welche Informationen beinhaltet, die einer Instanz, die im Besitz dieses Berechtigungstokens ist, eine Berechtigung zum Zugriff auf Speicherbereiche externer Speichermedien einräumt. Die externen Speichermedien können z.B. von einem Speicherdienst über ein Netzwerk wie z.B. das Internet bereitgestellt werden. Nach Ausführungsformen kann das Berechtigungstoken sowohl einen Zeiger als auch einen Berechtigungsausweis enthalten. Der Zeiger kann z.B. aus einer Kombination aus einer IP Adresse eines Speicherdienstes und eines Dateipfades eines von diesem Speicherdienst verwalteten Speichermediums bestehen. Der Berechtigungsausweis kann z.B. ein oder mehrere Datenwerte beinhalten, die den Besitzer des Berechtigungstokens als zugriffsberechtigt ausweisen, z.B. einen von dem Speicherdienst generierten Zufallswert der mit einem Referenzwert verglichen werden kann. Die besagten Datenwerte können auch eine Signatur umfassen.

Ein *"Speicherdienst"* ist ein über ein Netzwert bereitgestellter Dienst, der es ein oder mehreren Nutzer-Computersystemen ermöglicht, Daten über das Netzwerk an den Dienst zu senden damit diese von dem Speicherdienst auf ein oder mehreren von dem Speicherdienst verwalteten Speichermedien gespeichert werden, und/oder der es den Nutzer-Computersystemen ermöglicht, auf bereits von diesem oder einem anderen Nutzer-Computersystem gespeicherte Daten über das Netzwerk - z.B. lesend oder schreibend - zuzugreifen. Ein einzelner Speicherdienst ist dabei von jedem anderen Speicherdienst vorzugsweise technisch und organisatorisch getrennt. Nach Ausführungsformen ist jeder der Speicherdienste dazu konfiguriert, über eine Schnittstelle Daten von dem Nutzer-Computersystem über das Netzwerk zu empfangen und diese in seinem nicht flüchtigen Speichermedium zu speichern.

Unter einem *"Nutzer-Computersystem"* wird im Folgenden ein Datenverarbeitungssystem, z.B. ein Desktop-PC, ein Notebook oder ein Smartphone verstanden, welches einem Nutzer zugeordnet ist.

Unter einem *"Hardwaretoken"* bezeichnet ein tragbares elektronisches Gerät, welches einen Prozessor zum Ausführen von Programminstruktionen und einen Speicher zum Speichern von Programminstruktionen umfasst. Bei dem Hardwaretoken handelt es sich beispielsweise um ein Telekommunikationsgerät, wie etwa ein Smartphone. Ferner kann es sich bei dem Hardwaretoken um ein ID-Token handeln. Der Begriff "ID-Token" bezeichnet eine Vorrichtung, wie beispielsweise ein tragbares elektronisches Gerät, zum Beispiel einen sogenannten USB-Stick, eine Chipkarte, oder ein Dokument.

Unter einem *"Dokument"* wird insbesondere ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem ID-Token um ein Machine-Readable Travel Document, wie beispielsweise von der Internationalen Luftfahrtbehörde (ICAO) und/oder dem BSI standardisiert, handeln.

Nach Ausführungsformen weist der ID-Token keine eigene Energieversorgung auf. Als Energiequelle kann vielmehr eine Vorrichtung zum *"Ernten"* (energy harvesting) von Energie dienen, welche von dem Terminal an das ID Token übertragen wird, wie beispielsweise eine RFID-Antenne.

Unter einem *"Zertifikat"* wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter und/oder einen ZDA, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein Hashwert, welcher mit einem privaten Schlüssel eines kryptographischen Schlüsselpaares verschlüsselt ist, das einem Zertifikat zugeordnet ist. Die Besonderheit einer solchen Signatur besteht darin, dass deren Urheberschaft und Zugehörigkeit zu einer bestimmten Person oder Instanz durch jeden Dritten geprüft werden kann.

Unter einem *"Speicher"* werden hier sowohl flüchtige als auch nicht flüchtige elektronische Speicher bzw. digitale Speichermedien verstanden.

Unter einem *"nichtflüchtigen Speicher"* wird hier ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem *"flüchtigen elektronischen Speicher"* wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem *"geschützten Speicherbereich"* wird hier ein Bereich eines elektronischen Speichers verstanden, auf den ein Zugriff, das heißt ein Lesezugriff oder ein Schreibzugriff, nur über einen mit dem Speicher gekoppelten Prozessor möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem *"Prozessor"* wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Bei einem Computer bzw. einem Computersystem kann es sich zum Beispiel um einen Personal Computer (PC) oder einen Laptop handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet, ein Energieversorgungsnetz oder ein anderes Kommunikationsnetz. Je nach Ausführungsform kann diese Verbindung auch über ein Mobilfunknetz hergestellt werden.

Unter einer *"Schnittstelle"* bzw. *"Kommunikationsschnittstelle"* wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Unter einem *"Netzwerk"* wird hier jedes Übertragungsmedium mit einer Anbindung zur Kommunikation verstanden, insbesondere eine lokale Verbindung zwischen dem Hilfs-ID-Token und dem Computersystem oder ein lokales Netzwerk, insbesondere ein Local Area Network (LAN), ein privates Netzwerk, insbesondere ein Intranet, und ein virtuelles privates Netzwerk (Virtual Private Network - VPN). Beispielsweise kann der Hilfs-ID-Token ebenso wie das Computersystem eine Standardfunkschnittstelle zur Anbindung an ein WLAN aufweisen, an das der Hilfs-ID-Token und/oder das Computersystem zur Herstellung einer lokalen Verbindung für die Übertragung des Authentifizierungstokens angeschlossen sein kann.

Unter einem "*Sensor*" wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Schallfeldgrößen, elektromagnetische Feldstärke, Helligkeit, Beschleunigung, Lageänderung, pH-Wert, lonenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt.

Unter einem *"Programm"* bzw. *"Programminstruktionen"* wird hier ohne Einschränkung jede Art von Computerprogramm verstanden, welches maschinenlesbare Instruktionen zur Steuerung einer Funktionalität des Computers umfasst.

Eine *"Sicht"* ist eine dynamisch generierte visuelle Repräsentation von Daten, insbesondere von ein oder mehreren Dateien. Nach Ausführungsformen beinhaltet die Sicht eine Liste oder sonstige Anordnung von mehreren Dateien, wobei jede Datei unter ihrem ursprünglichen Dateinamen, optional ergänzt durch weitere dateibezogene Daten wie etwa Dateigröße, Datum der letzten Änderung, Dateityp etc., in der Sicht angezeigt wird. Die dynamisch generierte visuelle Repräsentation kann auf einem komplexen Datenverarbeitungsprozess z.B. von Metadaten mehrerer Dateien beruhen, die eine automatische Entschlüsselung und Verarbeitung von Metadaten mehrerer verteilt gespeicherter Dateien umfasst.

Unter einem *"Vertrauensniveau"* wird im Folgenden eine Menge von ein oder mehreren Parameterwerten verstanden, welche einen Grad der Vertrauenswürdigkeit in Bezug darauf angibt, ob ein Nutzer, der sich mit einem ihm zugeordneten Nutzer-Computersystem gegenüber dem Dateimanagementserver authentifiziert hat, auch tatsächlich derjenige ist, der er durch Bereitstellung seiner Authentifizierungsdaten vorgibt zu sein.

Ein *"Fehlerkorrekturbit'* oder *"Paritätsbit"* ist ein Bit, welches zusätzlich zu ein oder mehreren Bits der eigentlichen Nutzdaten generiert und ggf. an einen Empfänger übertragen wird, und welches zur Kontrolle der Integrität der besagten ein oder mehreren Bits der Nutzdaten während der Übertragung an den Empfänger dient.

Ein *"Fehlerkorrekturverfahren"* ist ein Verfahren, welches dazu dient, Fehler bei der Speicherung und Übertragung von Daten zu erkennen und zu korrigieren, wobei ein Fehler auch darin bestehen kann, dass Teile einer logisch zusammenhängenden Datenmenge (z.B. eine Datei) temporär oder dauerhaft nicht verfügbar sind, z.B. wegen Ausfalls eines Speichermediums, das diese Teile gespeichert hatte. Um dies zu erreichen fügen Fehlerkorrekturverfahren vor der Speicherung oder Übertragung von Nutzdaten diesen Nutzdaten zusätzliche Redundanz in Form zusätzlicher Fehlerkorrekturbits hinzu, die zur Bestimmung von Fehlern und Fehlerpositionen und auch zur Rekonstruktion fehlender Teile der Nutzdaten genutzt werden können. Nach Ausführungsformen ist auf jedem der Nutzer-Computersysteme eine Client-Applikation installiert, welche mit einer Dateimanagement-Applikation des Dateimanagementservers interoperabel ist. Die Clientapplikation kann Programlogik beinhalten, in welcher die von dem Nutzer-Computersystem ausgeführten Schritte des Verfahrens nach einer der vorgenannten Ausführungsformen codiert sind. Die Dateimanagement-Applikation kann Programlogik beinhalten, in welcher die von dem Dateimanagementserver ausgeführten Schritte des Verfahrens nach einer der vorgenannten Ausführungsformen codiert sind.

Im Weiteren werden Ausführungsformen der Erfindung mit Bezugnahme auf die Zeichnungen näher erläutert. Es zeigen:
- Figur 1: zeigt mehrere Nutzer-Computersysteme, Speicherdienste und einen Dateimanagementserver;
- Figur 2: ein Blockdiagramm eines der Nutzer-Computersysteme;
- Figur 3: ein Blockdiagramm des Dateimanagementservers;
- Figur 4: ein Ablaufschema der verteilten Speicherung einer Datei;
- Figur 5: ein Ablaufschema des Lesens einer verteilt gespeicherten Datei;
- Figur 6: ein Flussdiagramm einer Ausführungsform eines erfindungsgemäßen Verfahrens;
- Figur 7: ein Flussdiagramm einer weiteren Ausführungsform eines erfindungsgemäßen Verfahrens;
- Figur 8: ein Blockdiagramm eines Hardwaretokens;
- Figur 9: ein Blockdiagramm eines weiteren Hardwaretokens;
- Figur 10: ein Flussdiagramm einer verhaltensbasierten Authentifizierung;
- Figuren 11: Flussdiagramme einer verhaltensbasierten Authentifizierung; und
- Figur 12: ein Flussdiagramm zur Verarbeitung verhaltensbasierter Daten.

Elemente der nachfolgenden Ausführungsformen, die einander entsprechen, werden mit denselben Bezugszeichen gekennzeichnet.

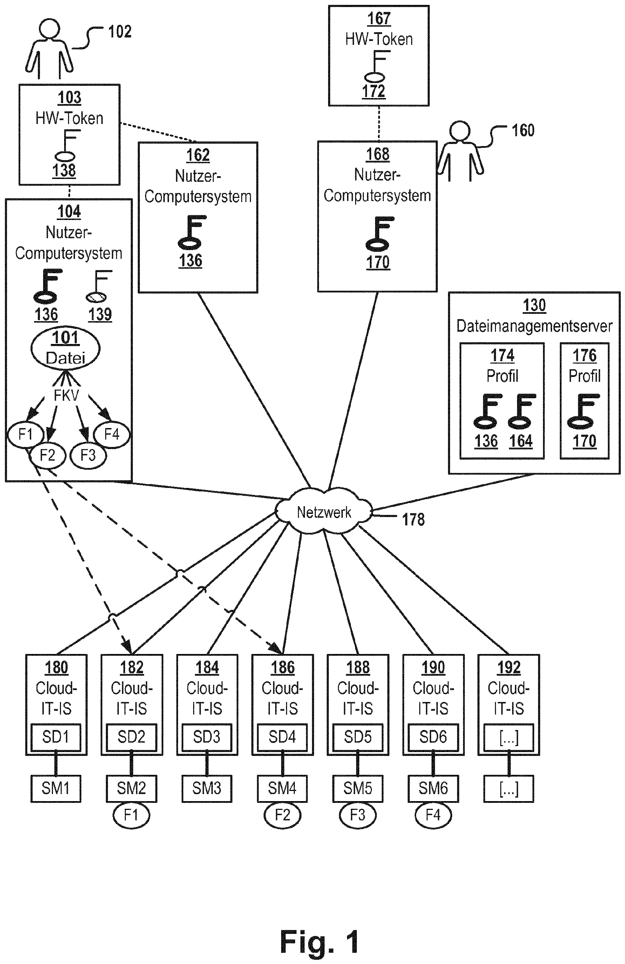

Figur 1 zeigt ein verteiltes Computersystem zur Speicherung von Daten, das mehrere Nutzer-Computersysteme 104, 162, 168, mehrere Speicherdienste SD1-SD6 mit entsprechenden IT-Infrastrukturen 180-192 und Speichermedien SM1-SM6 und einen Dateimanagementserver 130 umfasst, die jeweils über ein Netzwerk 178 miteinander verbunden sind. Ferner sind mehrere Hardwaretoken 103, 167 gezeigt, wobei jedes der Hardwaretoken 103, 167 einem Nutzer 102, 160 zugeordnet sind. Nach Ausführungsformen können auch mehrere Hardwaretoken demselben Nutzer zugeordnet sein. Das System ermöglicht eine automatisierte und dynamische Bereitstellung von Speicherressourcen der einzelnen Speicherdienste, die zum Beispiel jeweils als öffentliche Cloud-Speicherdienste ausgebildet sein können. Die Auswahl der Speicherdienste erfolgt vorzugsweise dynamisch basierend auf Anforderungen, die ein Nutzer 102, 160 in einem zentral hinterlegten Nutzerprofil 174,176 hinterlegen kann, basierend auf bestimmten Merkmalen der zu speichernden Datei 101 und/oder basierend auf technischen und/oder organisatorischen Eigenschaften der jeweiligen Speicherdienste SD1-SD6, die beispielsweise zentral in einem Katalog 329 gespeichert sein können.

Dem Nutzer 102 können beispielsweise zwei Nutzer-Computersysteme 104, 162, zum Beispiel ein Desktop-Computer und ein Notebook, zugeordnet sein. Ferner kann dem Nutzer 102 beispielsweise ein Hardwaretoken 103 zugeordnet sein. In dem Hardwaretoken ist ein privater Schlüssel 138 in einem geschützten Speicherbereich gespeichert. Der privater Schlüssel 138 bildet zusammen mit dem öffentlichen Schlüssel 136 ein asymmetrisches kryptographisches Schlüsselpaar. Das asymmetrische Schlüsselpaar 136, 138 wird beispielsweise im Zuge der Herstellung und/oder einer Personalisierung des Hardwaretokens 103 generiert. Nach weiteren Ausführungsformen wird das asymmetrische Schlüsselpaar 136, 138 durch das Hardwaretoken 103 bei Bedarf generiert und mit einem im Zuge der Herstellung und/oder einer Personalisierung des Hardwaretokens 103 generierten privaten Schlüssel signiert. Beispielsweise sind die Schlüssel 138, 136 des Hardwaretokens 103 Teil einer PKI bzw. ihre Authentizität wird mittels Zertifikaten einer PKI belegt.

Der Nutzer 102 verwendet den Hardwaretoken 103 zum Zugreifen auf verteilt gespeicherte Dateien, genauer gesagt zum Entschlüsseln von Metadaten oder zumindest der symmetrischen Schlüssel der entsprechenden Dateien, sowohl mit dem Nutzer-Computersystem 138 als auch mit dem Nutzercomputersystem 162. Beispielsweise führt der Nutzer 102 den Hardwaretoken 103 in Form einer Chipkarte mit sich.

Der entsprechende öffentlichen Schlüssel 136 wird beispielsweise von dem Hardwaretoken an das Nutzer-Computersystem 104 zur weiteren Verwendung übertragen. Das Nutzer-Computersystem 104 übertragt des öffentlichen Schlüssel 136 beispielsweise weiter an den Dateimanagementserver 130, welcher diese zentral verwaltet. So ist dem Nutzer 102 beispielsweise das Nutzerprofil 174 zugeordnet, welches den öffentlichen Schlüssel 136. Einem Nutzer können mehrere Hardwaretoken zugeordnet sein, in welchem Fall das entsprechende Nutzerprofil 174 weitere öffentliche Schlüssel 164 beinhaltet, welche den asymmetrischen Schlüsselpaaren der weiteren Hardwaretoken entstammen.

Dem Nutzer 160 ist das Nutzerprofil 176 zugeordnet, welches den öffentlichen Schlüssel 170 beinhaltet. Der dem öffentlichen Schlüssel 170 zugeordnete private Schlüssel 172 ist in einem geschützten Speicherbereich des Hardwaretokens 167 des Nutzers 160 gespeichert. Ferner Verfügt beispielswiese das Nutzer-Computersystem 168 des Nutzers 160 über den öffentlichen Schlüssel 170. Die Nutzer-Computersysteme 104, 168 verwenden die öffentlichen Schlüssel 136, 170 zum Verschlüsseln von Metadaten oder zumindest von symmetrischen Schlüsseln.

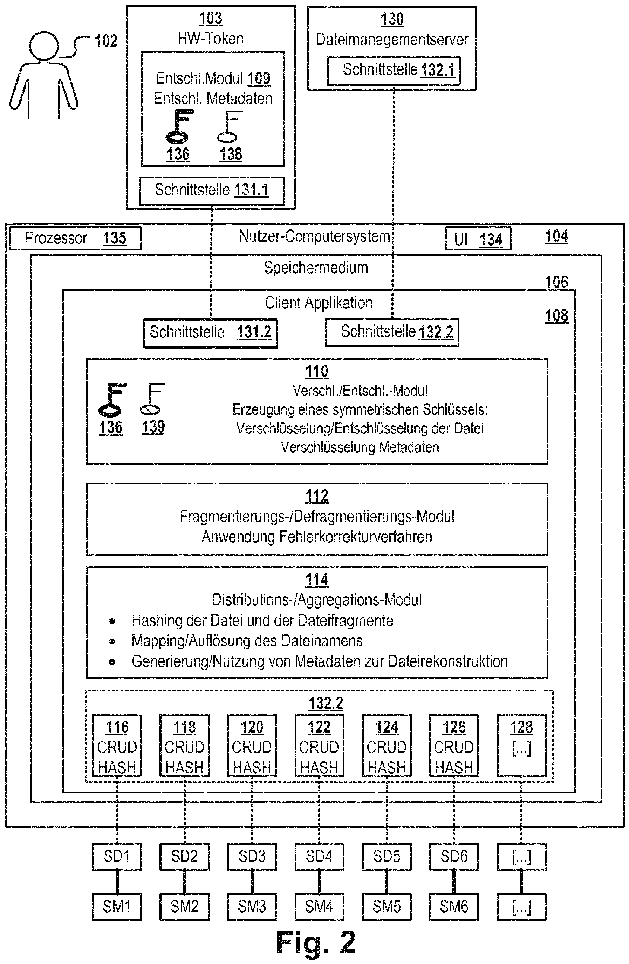

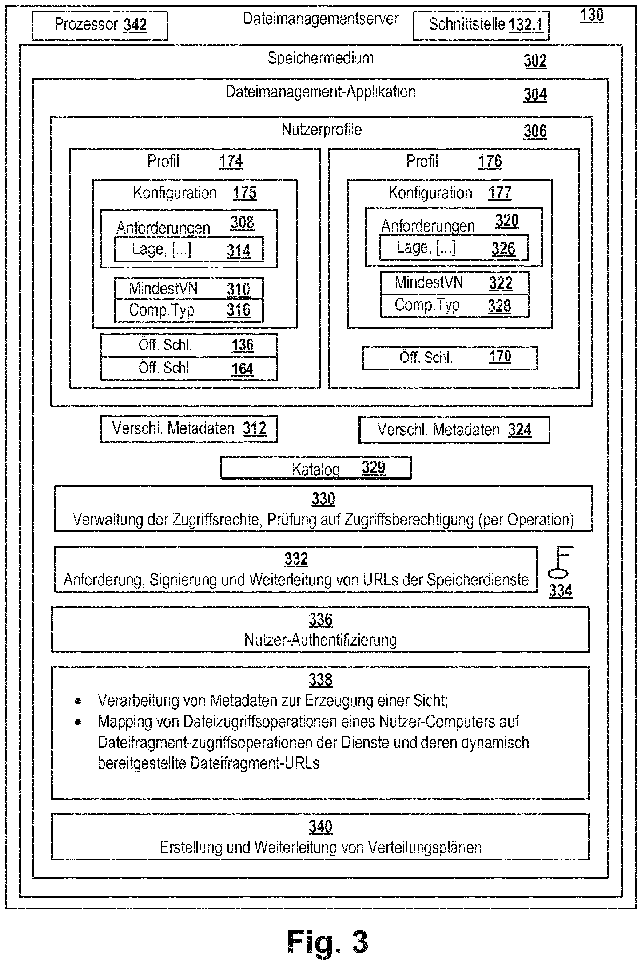

Der Dateimanagementserver 130 agiert als zentrale Instanz zur Verwaltung der Nutzerprofile 174, 176, welche beispielsweise Nutzer-Anforderungen 308, 320 zur Prüfung der Berechtigung einzelner Nutzer zur Durchführung einer dateibezogenen Zugriffsoperation umfassen. Wie dies im Einzelnen geschieht wird im Folgenden in den Figuren 2 und 3 näher erläutert. Die beiden gestrichelten Pfeile von Figur 1 deuten in Bezug auf die Dateifragmente F1 und F2 an, dass die durch das Fehlerkorrekturverfahren FKV aus der Datei 101 erzeugten Dateifragmente F1-F4 direkt, mithilfe eines Berechtigungstokens, unter Umgehung des Dateimanagementservers 130 gespeichert werden. Für den Erhalt der Berechtigungstoken, die von den einzelnen Speicherdiensten ausgestellt werden, ist jedoch eine Interaktion des Nutzer-Computersystems 104 mit dem Dateimanagementserver 130 erforderlich.

Figur 2 zeigt ein Blockdiagramm des Nutzer-Computersystems 104. Das Nutzer-Computersystem 104 beinhaltet eine Nutzer-Schnittstelle (User Interface) 134. Diese Schnittstelle kann zum Beispiel eine graphische Benutzeroberfläche beinhalten, die eine Sicht auf eine verteilt zu speichernde Datei 101 und/oder auf ein oder mehrere bereits verteilt gespeicherte Dateien anzeigt. Außerdem kann die Schnittstelle 134 Eingabemittel, zum Beispiel eine Tastatur oder Maus umfassen, die dem Nutzer erlaubt, einzelne Dateien auszuwählen oder in dem Nutzerprofil hinterlegte Daten und Anforderungen zu aktualisieren und/oder im Nutzerprofil 174 des Nutzers 102 festzulegen, welche Nutzer oder Nutzergruppen unter welchen Voraussetzungen zum Zugriff auf die Datei 101 berechtigt sein sollen. Über die Nutzer-Schnittstelle 134 kann sich der Nutzer ferner Authentifizieren. Hierzu umfasst die Nutzer-Schnittstelle 134 beispielswiese ein oder mehrere Sensoren zum Erfassen eines oder mehrerer biometrischer Merkmale des Nutzers 102. Das Nutzer-Computersystem 104 beinhaltet einen Prozessor 135 und ein nicht flüchtiges Speichermedium 106 auf welchem eine Client-Applikation 108 installiert ist, die über eine Schnittstelle 132 mit einer auf dem Dateimanagementserver 130 installierten Dateiverwaltungs-Applikation 304 kommuniziert. Ferner kommuniziert die Client-Applikation 108 über eine Schnittstelle 131 mit einem Entschlüsselungs-Modul 109 auf dem Hardwaretoken 103. Die Client-Applikation 108 kann außerdem eine Schnittstelle 116-128 vorsehen, die standardisierte Dateioperationen ("CRUD": "CREATE", "READ", "UPDATE", "DELETE") definiert, die von jedem der Speicherdienste interpretiert und durchgeführt werden können. Bei den Schnittstellen 116-128 handelt es sich also letztlich um eine einheitliche Schnittstelle mit einheitlicher Methodensignatur für CRUD Operationen.

Die Applikation 108 beinhaltet ein Ver-/Entschlüsselungs-Modul 110, das zum Beispiel symmetrische Schlüssel 139 erzeugt bzw. berechnet und verschlüsselt mit diesen verteilt zu speichernde Dateien verschlüsselt bzw. verteilt gespeicherte Dateien nach dem Herunterladen und der Rekonstruktion entschlüsselt. Bei dem symmetrischen Schlüssel kann es sich beispielsweise um einen Hashwert der zu verschlüsselnden Datei 101 handeln. Nachdem der symmetrische Schlüssel 139 zu den Metadaten hinzugefügt wurde, wird dieser beispielswiese gelöscht, sodass er nur noch als Bestandteil der Metadaten zur Verfügung steht. Ferner werden die unverschlüsselten Metadaten nach ihrer Verschlüsselung beispielsweise gelöscht, sodass sie nur noch in verschlüsselter Form vorliegen. Nach Ausführungsformen dient das Modul 110 zudem zum Ver- und Entschlüsseln von Dateifragmenten der verschlüsselten Datei. Ferner verwaltet es den öffentlichen Schlüssel 136. Beispielsweise übermittelt es den öffentlichen Schlüssel 136 über die Schnittstelle 132 an die Dateiverwaltungs-Applikation 304. Zudem verwendet das Ver-/Entschlüsselungs-Modul 110 den öffentlichen Schlüssel 136 zum Verschlüsseln von Metadaten oder zumindest von symmetrischen Schlüsseln von verteilt gespeicherten Dateien. Das Modul 110 erlaubt also die Erzeugung und Verwendung symmetrischer Schlüssel 139 sowie die Verwendung und Verwaltung des öffentlichen Schlüssel 136.

Außerdem kann die Client-Applikation 108 ein Fragmentierung-/Defragmentierungs-Modul 112 umfassen, dass eine mittels des Moduls 110 mit dem öffentlichen Schlüssel 139 verschlüsselte Datei 101 durch Anwendung eines in einem Verteilungsplan spezifizierten Fehlerkorrekturverfahrens FKV in mehrere Dateifragmente F1-F4 zerlegen und mit Fehlerkorrekturbits anreichern kann. Falls ein oder mehrere der Speicherdienste, auf welchen Dateifragmente der Datei gespeichert sind, ausfallen sollten, kann die Defragmentierungs-Funktion des Moduls 112 aus den verbliebenen Dateifragmenten die ursprüngliche Datei regenerieren, sofern die in den übrigen Dateifragmenten enthaltenen Fehlerkorrekturbits hierfür ausreichen.

Ein weiteres Modul 114, hier als Distributions-/Aggregations-Modul bezeichnet, beinhaltet mehrere Funktionalitäten, die zur verteilten und sicheren Speicherung der von Modul 112 generierten Dateifragmente in den in dem Verteilungsplan spezifizierten Speicherdiensten SD2, SD4-SD6 dienen. Das Modul 114 kann zum Beispiel einen Hashwert der ursprünglichen Datei 101 berechnen. Außerdem kann ein Hashwert jedes der generierten Dateifragmente F1-4 berechnet werden, die als Identifikatoren der Dateifragmente dienen und die dem ursprünglichen Dateinamen der Datei mittels eines "Mappings" zugeordnet werden. Der symmetrische Schlüssel 139, die Hashwerte und das Mapping können als Metadaten dienen um eine Rekonstruktion der Datei aus den Dateifragmenten zu ermöglichen. Außerdem können die Metadaten Identifikatoren und Pfade der Speicherdienste beinhalten, in welchen die Dateifragmente gespeichert wurden. Vorzugsweise werden die von einem Nutzer-Computersystem 104 erzeugten Metadaten 312 der Datei 101 oder zumindest der symmetrische Schlüssel 139 durch einen öffentlichen Schlüssel 136, der dem Nutzer-Computersystem 104 und damit auch dem Nutzer 102 spezifisch zugeordnet ist, verschlüsselt und in verschlüsselter Form an den Dateimanagementserver 130 über das Netzwerk 178 übertragen. Falls das Nutzer-Computersystem zu einem späteren Zeitpunkt auf die verteilt gespeicherte Datei 101 zugreifen soll, kann es die Metadaten von dem Dateimanagementserver empfangen und die verschlüsselten Metadaten mit dem symmetrischen Schlüssel mittels des Hardwaretokens 103 und dessen privaten Schlüssels 138 entschlüsseln. Die Aggregations-Funktionalität des Moduls 114 erlaubt z.B. eine Rekonstruktion der ursprünglichen Datei 101 aus den Dateifragmenten F1-F4 unter Zuhilfenahme der Metadaten 312. Die rekonstruierte Datei kann mittels des Moduls 110 und des symmetrischen Schlüssels 139 entschlüsselt werden.

Figur 3 zeigt ein Blockdiagramm des Dateimanagementservers 130. Der Dateimanagementserver 130 umfasst einen Prozessor 342 und ein nichtflüchtiges Speichermedium 302, auf welchem eine Dateiverwaltungs-Applikation 304 installiert ist. Diese kann zur Verwaltung mehrerer Nutzerprofile 306, zum Beispiel Nutzerprofil 174 von Nutzer 102 oder Nutzerprofil 176 von Nutzer 160 dienen. Die Nutzer können in ihrem Nutzerprofil in einer Konfiguration 175 festlegen, welche Anforderungen 308 im Hinblick auf Kosten, geographische Lage, Datensicherheit und Datenverfügbarkeit bezüglich der von den Speicherdiensten SD1-SD6 jeweils verwendeter IT-Infrastrukturen enthält. Die Anforderungen 308 können auch einheitlich für ganze Nutzergruppen, zum Beispiel für Beschäftigte von Unternehmen, definiert sein. Dies kann vorteilhaft sein, da hierdurch unternehmenseinheitliche Vorgaben im Hinblick auf die Kosten, geographische Lage, Sicherheit und Verfügbarkeit der verteilt gespeicherten Dateien realisiert werden können. Außerdem kann der Nutzer 102 spezifizieren, welche anderen Nutzer oder Nutzergruppen unter welchen Bedingungen (z.B. im Hinblick auf ein Mindestvertrauensniveau 310 oder Typ 316 des verwendeten Nutzer-Computersystems) dem anderen Nutzer bzw. den anderen Nutzergruppen Zugriff auf eine Datei des Nutzers 102 durch den Dateimanagementserver gewährt werden soll.

Die Dateiverwaltungs-Applikation 304 kann also als zentrale Instanz die Nutzerprofile mehrerer Nutzer verwalten und auch die Vorgaben der Nutzer bezüglich der Zugriffsberechtigung andere Nutzer auf deren Dateien kontrollieren und umsetzen. Die Nutzerprofile 174, 176 umfassen beispielsweise öffentliche Schlüssel 136, 164, 170, welche den entsprechenden Nutzern zugeordnet sind. Dabei können einem Nutzer auch mehrere Hardwaretoken und somit öffentliche Schlüssel 136, 164 zugeordnet sein. Neben den Nutzerprofilen kann die Dateiverwaltungs-Applikation 304 auch die verschlüsselten Metadaten 312, 324 einer Vielzahl von verteilt gespeicherten Dateien mehrerer Nutzer und/oder einen Katalog 329 mit den Spezifikationen aller zur Verfügung stehenden Speicherdienste SD1-SD6 verwalten. Nach Ausführungsformen können neben oder alternativ zu den verschlüsselten bzw. teilweise verschlüsselten Metadaten 312, 324 vollständig unverschlüsselte Metadaten verwaltet werden, welche jedoch keine symmetrischen Schlüssel zur Entschlüsselung von verteilt gespeicherten Dateien umfassen.

Modul 330 der Dateiverwaltungs-Applikation 304 ist zum Beispiel für die zentrale Verwaltung der Zugriffsrechte und für die dateibezogene Prüfung auf Zugriffsberechtigung durch andere Nutzer verantwortlich. Ein Nutzer kann sich gegenüber der Dateiverwaltungs-Applikation 304 dadurch als berechtigt ausweisen, dass er seine Identität, die sich aus unterschiedlichen Attributen zusammensetzen kann (Name, E-Mail-Adresse, Bankkonto, Wohnadresse, Geburtsdatum, Nationalität etc.) gegenüber der Dateiverwaltungs-Applikation 304 in vertrauenswürdiger Weise nachweist. Die Echtheit dieser Attribute kann mit unterschiedlichem Aufwand bestätigt werden (z.B. ein Bankkonto durch eine Überweisung mit einem übermittelten Geheimnis im Feld "Verwendungszweck", Email durch die Übersendung einer Mail mit einem Bestätigungslink, Wohnort bzw. Geburtsdaten, oder durch sicheres Auslesen der Daten aus einem elektronischen Personalausweis). Das Modul 330 ordnet den unterschiedlichen Attributen ein bestimmter Vertrauenslevel zu. Dieser Wert bildet die Qualität der Identifizierung ab. Vorzugsweise verfügt das Modul 330 über eine graduelle Abstufung mehrerer Vertrauensniveaus bezüglich einer oder mehrerer digitaler Identitäten eines Nutzers. Damit können die Nutzer individuelle Anforderungen (Mindestvertrauensniveaus) im Hinblick auf die Vertrauenswürdigkeit der Identifizierung anderer Nutzer beim Zugriff auf eigene Dateien spezifizieren. Beim Teilen der Daten mit einem anderen Nutzer kann ein Nutzer ein Mindestvertrauensniveau festlegen, mit welchem sein Gegenpart identifiziert werden soll. Ob der andere Nutzer das geforderte Mindestvertrauensniveau erfüllt hängt also von dem Authentifizierungsverfahren des anderen Nutzers gegenüber dem Dateimanagementserver ab, mittels welchem der andere Nutzer seine digitale Identität nachweist (also z.B. Nutzername/Passwort, Email-Adresse, elektronischem Personalausweis oder ein anderes Sicherheitstoken wie beispielsweise FID).

Modul 332 dient dazu, nachdem ein Nutzer seine Berechtigung zum Zugriff auf eine Datei gegenüber der Dateiverwaltungs-Applikation nachgewiesen hat, Berechtigungstoken von den in dem Verteilungsplan (bei initialem Schreibzugriff) oder den Metadaten (bei Lesezugriff, bei einer UPDATE oder DELETE-Operation) spezifizierten Speicherdiensten anzufordern. Die Berechtigungstoken werden mit einem Signierungsschlüssel 334 der Dateiverwaltungs-Applikation signiert und in signierter Form an das Nutzer-Computersystem, von welchem eine entsprechende Berechtigung-Anfrage zum Dateizugriff empfangen wurde, gesendet.

Modul 338 verwaltet Metadaten einer Vielzahl von Dateien, die von Nutzern generiert worden, die sich bei der Dateiverwaltungs-Applikation registriert haben. Das Modul 338 kann anhand der Metadaten eine Sicht auf die verteilt gespeicherten Dateien generieren und den Nutzer-Computersystemen 104, 162, 168 über das Netzwerk 178 zur Verfügung stellen ohne jedoch Zugriff auf den Inhalt der Dateien zu besitzen.

Ferner kann der Server 130 ein Modul 340 umfassen. Dieses ermöglicht eine dynamische Erstellung und Weiterleitung von Verteilungsplänen zur verteilten Speicherung einer Datei 101, wobei in dem Verteilungsplan ein Fehlerkorrekturverfahren FKV spezifiziert ist sowie mehrere Speicherdienste SD1-SD6, wobei sowohl das besagte Fehlerkorrekturverfahren als auch die besagten Speicherdienste dynamisch so ausgewählt werden, dass die Anforderungen 308, 320 des Nutzers, der die Datei verteilt speichern möchte, erfüllt sind.

Insgesamt kann somit gemäß Ausführungsformen eine flexible Lösung zur sicheren und hochverfügbaren Datenauslagerung unter Verwendung mehrerer externer Speicherdienste bereitgestellt werden. Beliebige Nutzer, auch solche die sich nicht bei der Dateiverwaltungs-Applikation registrierte haben, können, sofern sie die entsprechenden Berechtigungen haben, auf verteilt gespeicherte Dateien zugreifen, sofern sie nur die Client-Applikation 108 installiert haben, die mit der Dateimanagement-Applikation und den Speicherdiensten über die Schnittstelle 132 kommunizieren kann um die ursprünglichen Dateien aus den Metadaten und den Dateifragmenten zu rekonstruieren.

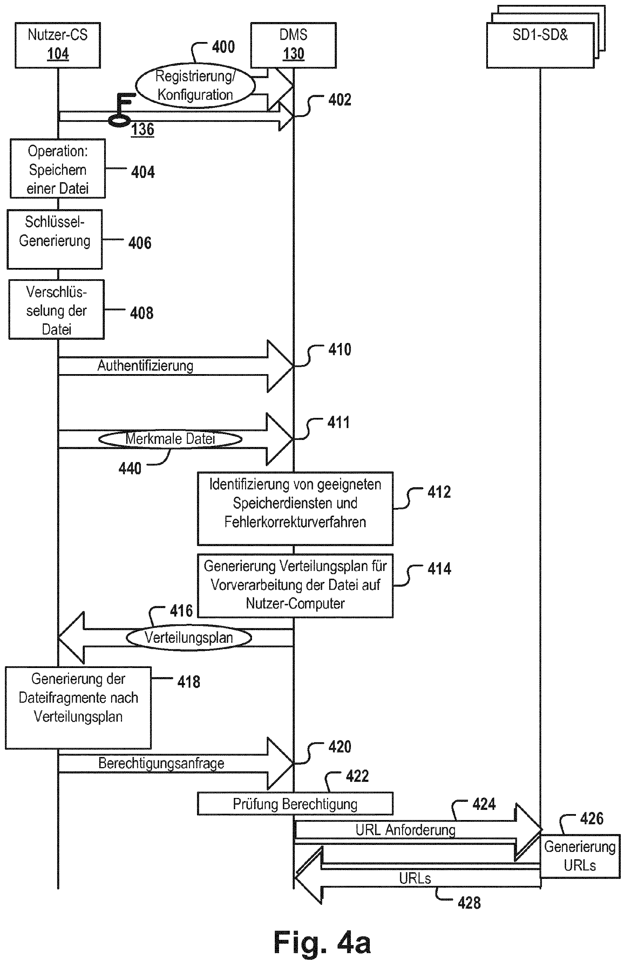

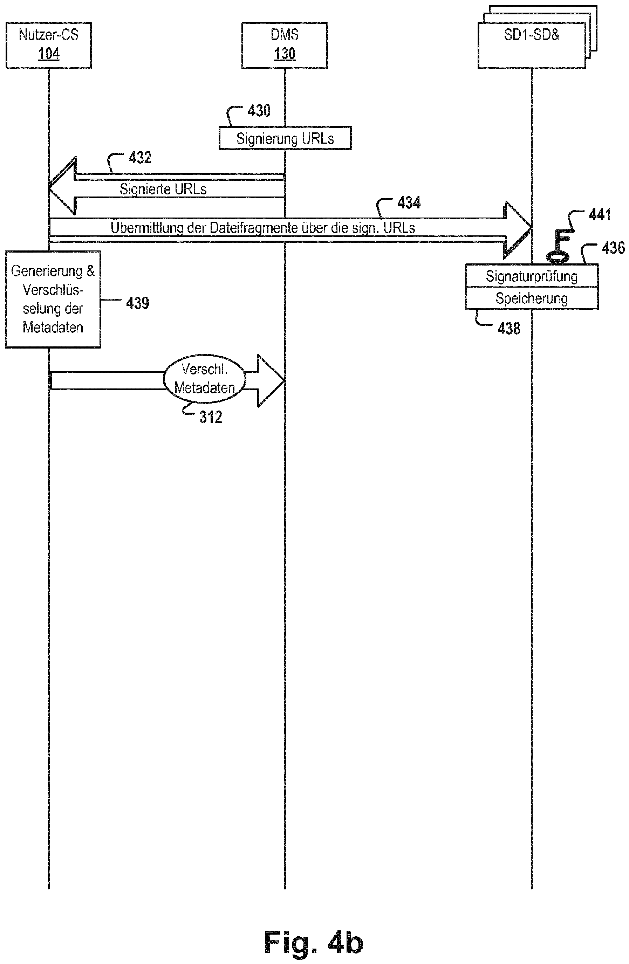

Figuren 4a und 4b zeigen den Ablauf des verteilten Speicherns einer Datei gemäß einer Ausführungsform. Das Nutzer-Computersystem 104 umfasst beispielweise den öffentlichen kryptographischen Schlüssel 136, d.h. öffentlichen Verschlüsselungsschlüssel. Der zugehörige privaten Schlüssel 138, d.h. private Entschlüsselungsschlüssel, ist in einem geschützten Speicherbereich des Hardwaretokens 103 gespeichert. In Schritt 400 erfolgt eine Registrierung des Nutzers bei dem Dateimanagementserver 130 bzw. bei der von diesem ausgeführten Dateiverwaltungs-Applikation. Bei der Registrierung oder auch danach hat der Nutzer die Möglichkeit, sein Nutzerprofil und insbesondere seine darin enthaltenen Anforderungen 308 an die technischen und finanziellen Eigenschaften der Speicherdienste und seine Anforderungen an die Voraussetzungen 310, 316 zur Gewährung einer Zugriffsberechtigung an andere Nutzer oder Nutzergruppen auf seine Daten zu konfigurieren. In Schritt 402 wird der öffentliche Verschlüsselungsschlüssel 136 über die Schnittstelle 132 an die Dateiverwaltungs-Applikation 304 übertragen und dort als Bestandteil eines Nutzerprofils 174 des Nutzers 102 zentral gespeichert. Die Übertragung des öffentlichen Schlüssels 136 kann beispielsweise im Zuge der Registrierung 400 des Nutzers bei der Dateiverwaltungs-Applikation oder danach erfolgen.

Um eine bestimmte Datei erteilt zu speichern, ist eine dezentrale Speicheroperation zum Zugriff auf mehrere Speicherdienste erforderlich. In Schritt 404 wird eine Speicheroperation verteilten Speichern einer Datei auf mehrere Speicherdienste durch den Nutzer bzw. das Nutzer-Computersystem initiiert. In Schritt 406 wird ein symmetrischer Schlüssel 139 zum Verschlüsseln der verteilt zu speichernden Datei generiert. In Schritt 408 wir diese Datei mit dem generierten Schlüssel verschlüsselt. Die Verschlüsselung erfolgt zum Beispiel mit einem Hashwert der Datei 101, welcher als symmetrischer kryptographischer Schlüssel dient.

Zum Speichern auf den Speicherdiensten erfolgt jedoch keine direkte Authentifizierung bei den einzelnen Speicherdiensten. Vielmehr authentifiziert sich das Nutzer-Computersystem 104 in Schritt 410 zunächst gegenüber dem Dateimanagementserver 130. Außerdem sendet das Nutzer-Computersystem beispielsweise Merkmale 440 der zu speichernden Datei in Schritt 411 an den Dateimanagementserver 130.

Der Dateimanagementserver analysiert die in dem Nutzerprofil 174 gespeicherten Anforderungen 308 des Nutzers, analysiert einen Katalog mit Spezifikationen sämtlicher aktuell verfügbare Speicherdienste und analysiert außerdem Merkmale der Datei (z.B. die Dateigröße, den Typ der Datei etc.). Anhand der analysierten Daten identifiziert der Dateimanagementserver in Schritt 412 automatisch die Identität und Anzahl derjenigen Speicherdienste, die zur Speicherung von Dateifragmenten der zu speichernden Datei 101 verwendet werden sollen. Außerdem identifiziert der Dateimanagementserver ein Fehlerkorrekturverfahren und dessen Konfiguration, welches dazu in der Lage ist, die zu speichernde Datei so in Dateifragmente aufzuteilen, dass die Anforderungen 308 des Nutzers im Hinblick auf die Kosten, die Sicherheit, die geographische Lage der einzelnen zur Speicherung verwendeten Speicherdienste und/oder der Datenübertragungsgeschwindigkeit über das Netzwerk erfüllt werden.

Ferner muss das Fehlerkorrekturverfahren die Datei so auf Dateifragmente verteilen, dass die Anforderungen des Nutzers im Hinblick auf die Verfügbarkeit der Datei gewährleistet sind. Generell gilt, dass je höher der Anteil der Fehlerkorrekturbits pro Dateifragment, desto größer die über das Netzwerk zu übertragende Datenmenge und desto größer die Redundanz der übertragenen Daten, desto höher aber auch die Verfügbarkeit der Datei trotz eines eventuellen Ausfalls einer oder mehrerer der Speicherdienste.

Der Dateimanagementserver generiert in Schritt 414 einen Verteilungsplan, der Identifikatoren der ermittelten Speicherdienste sowie Instruktionen zur Durchführung des ermittelten Fehlerkorrekturverfahrens (zum Beispiel Konfigurationsdaten des Fehlerkorrekturverfahrens) beinhaltet. Der Verteilungsplan wird in Schritt 416 an das Nutzer-Computersystem 104 über das Netzwerk übertragen. Alternativ dazu kann in manchen Ausführungsformen der Verteilungsplan auch durch das Nutzer-Computersystem erstellt werden. Das Nutzer-Computersystem generiert mittels des in dem Verteilungsplan spezifizierten Fehlerkorrekturverfahrens in Schritt 418 mehrere Dateifragmente F1-F4 der verschlüsselten Datei. Nach Ausführungsformen können die einzelnen Dateifragmente jeweils nochmal zusätzlich mit demselben oder einem weiteren symmetrischen Schlüssel verschlüsselt werden.

Um die generierten Dateifragmente speichern zu können, sendet das Nutzer-Computersystem eine Berechtigungsanfrage in Schritt 420 an den Dateimanagementserver, wobei diese Berechtigungsanfrage eine Anfrage beinhaltet, ob das Nutzer-Computersystem 104 berechtigt ist, auf die in dem Verteilungsplan spezifizierten Speicherdienste bzw. deren Speichermedien schreibend zuzugreifen um die Dateifragmente dort zu speichern. In Antwort auf den Erhalt der Berechtigungsanfrage prüft der Dateimanagementserver 130 in Schritt 422 ob das Nutzer-Computersystem für die angefragte Schreiboperation berechtigt ist. Falls dies der Fall ist und sich der Nutzer außerdem gegenüber dem Dateimanagementserver 130 erfolgreich authentifiziert 408 hat, fordert das Dateimanagementsystem 130 von den in dem Verteilungsplan und in der Berechtigungsanfrage spezifizierten Speicherdiensten Berechtigungstoken über das Netzwerk an. Die Berechtigungstoken können zum Beispiel als URLs 424 ausgebildet sein. In Antwort auf den Erhalt der Anforderung generieren die einzelnen Speicherdienste in Schritt 426 URLs zum Zugriff auf einen Speicherbereich von Speichermedien der jeweiligen Speicherdienste und senden die URLs an den Dateimanagementserver. Der Dateimanagementserver signiert in Schritt 430 die empfangenen URLs und leitet sie in signierter Form 432 an das Nutzer-Computersystem weiter.

Das Nutzer-Computersystem verwendet die signierten URLs um mittels dieser direkt auf die in den URLs angegebenen Speicherbereiche der Speicher der einzelnen Speicherdienste schreibend zuzugreifen und die Dateifragmente F1-4 unter Umgehung des Dateimanagementservers 130 direkt in den Speichermedien der besagten Speicherdienste SD2, SD4-SD6 über das Netzwerk zu speichern. Allerdings führen die einzelnen Speicherdienste in Schritt 436 eine Signaturprüfung der signierten URLs mittels eines Signaturprüfschlüssels, der mit dem Signierschlüssel 334 des Dateimanagementservers ein asymmetrisches kryptographisches Schlüsselpaar bildet, durch. Eine Speicherung in Schritt 438 von Dateifragmenten erfolgt jeweils nur, falls die Prüfung ergab, dass die Signatur der URL valide war.

In Schritt 439 wird der zur Verschlüsselung der Datei verwendete symmetrische kryptographische Schlüssel als Metadaten 312 für die verteilt gespeicherte Datei 101 gespeichert. Nach Ausführungsformen wird der unverschlüsselte symmetrische Schlüssel anschließend gelöscht. Die Metadaten oder zumindest die symmetrischen Schlüssel werden mit dem öffentlichen Verschlüsselungsschlüssel 138 verschlüsselt und beispielswiese an den Dateimanagementserver 130 übertragen. Nach manchen Ausführungsformen werden ferner Pfadangaben, die auf die in den Speichermedien der Speicherdienste gespeicherten Dateifragmente verweisen sowie optional noch weitere Daten von dem Nutzer-Computersystem zu den Metadaten 312 hinzugefügt. Es ist auch möglich, dass in Antwort auf eine Zugriffsanfrage eines anderen Nutzer-Computersystems unter Vermittlung des Dateimanagementservers 130 weitere Versionen der Metadaten durch das Nutzer-Computersystem 104 generiert und unter Vermittlung des Dateimanagementservers 130 an das anfragende Nutzer-Computersystem übertragen werden.

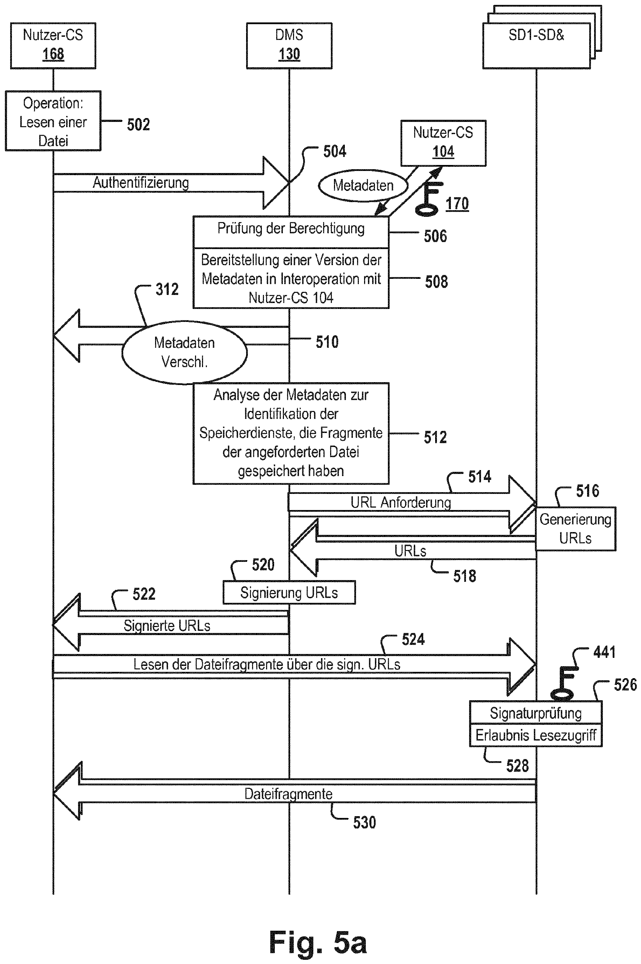

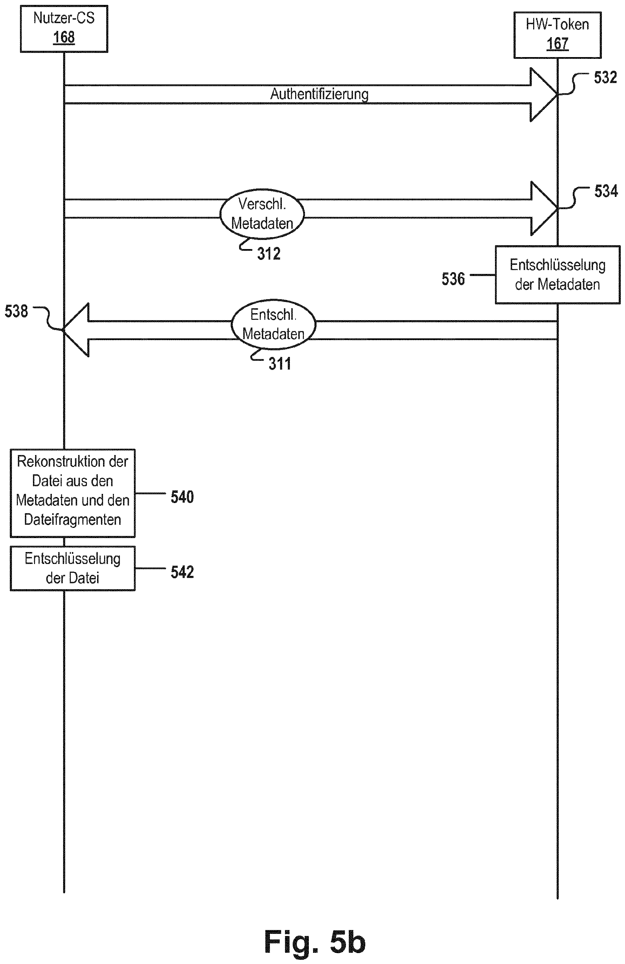

Figur 5 zeigt ein Ablaufdiagramm eines Lesezugriffs eines Nutzer-Computersystems 168 eines weiteren Nutzers 160 auf die verteilt gespeicherte Datei 101. Eine Client-Applikation 108 oder alternativ auch die Dateiverwaltung-Applikation 304 auf dem Dateimanagementserver kann dem Nutzer 160 mittels bereits vorhandener Metadaten 312, 324 eine Sicht auf mehrere, gemäß verschiedene Verteilungspläne verteilt gespeicherte Dateien generieren und anzeigen. Der Nutzer 160 kann, beispielsweise mittels einer Nutzer-Schnittstelle des Nutzer-Computersystems 168, eine visuelle Repräsentation, zum Beispiel ein Dateisymbol, der verteilt gespeicherten Datei 101 auswählen, um darauf lesend zuzugreifen. Dieser Vorgang, d.h. das Initiieren eines Lesezugriffs wird, ist als Leseoperation 502 dargestellt. Um auf die Datei 101 lesend zugreifen zu können, sendet das Nutzer-Computersystems 168 eine Zugriffsanfrage an das Dateimanagementserver 130 und authentifiziert sich gegenüber Dateimanagementserver 130. Nach Ausführungsbeispielen kann die Authentifizierung 504 eine Authentifizierung den Nutzer 169 umfassen, zum Beispiel mittels seines Personalausweises, seiner biometrischen Daten, eines passwortbasierten oder verhaltensbasierten Authentifizierungsverfahrens. Nach erfolgreicher Authentifizierung prüft der Dateimanagementserver 130, ob der weitere Nutzer 160 zum Lesezugriff auf die Datei 101 berechtigt ist. Hierzu analysiert der Dateimanagementserver die Konfiguration 175 des Eigentümers 102 der Datei 101, insbesondere dessen Angaben bezüglich eines geforderten Mindestvertrauensniveaus 310, eines geforderten Computertyps 316 und/oder bezüglich Regeln im Hinblick auf die Zugangsberechtigungen einzelner Nutzer und Nutzergruppen ("Access Control List"), die ebenfalls Bestandteil der Konfiguration 175 des Nutzers 102 sein können.

Falls die Analyse ergibt dass der Nutzer 160 zum Lesezugriff auf die Datei 101 berechtigt ist und sich erfolgreich authentifiziert hat und gegebenenfalls auch der Computertyp und das Mindestvertrauensniveau des verwendeten Authentifizierungsverfahrens 504 den von dem Nutzer 102 spezifizierten Anforderungen entsprechen, identifiziert oder generiert der Dateimanagementserver in Schritt 508 die verschl. Metadaten 312, die eine Rekonstruktion der Datei 101 aus den Dateifragmenten F1-F4 erlauben, und sendet diese in Schritt 510 an das Nutzer-Computersystem 168 des Nutzers 160. Bei den in Schritt 508 identifizierten Metadaten kann es sich um eine spezifisch für die Datei 101 und spezifisch für das weitere Nutzer-Computersystem 168 generierte Version der Metadaten handeln. Die Generation der für das um Lesezugriff anfragende Nutzer-Computersystem 168 spezifischen Metadaten kann beinhalten, dass der Dateimanagementserver, der unter anderem auch den öffentlichen Schlüssel 170 des Computersystems 168 verwaltet, nach der Feststellung, dass das Nutzer-Computersystem 168 zum Zugriff auf die Datei 101 berechtigt ist, den öffentlichen Schlüssel 170 dieses Nutzer-Computersystems 168 an das Nutzer-Computersystem 104 sendet. Das Nutzer-Computersystem 104 verwendet den öffentlichen Schlüssel 170 um die Metadaten 311 oder zumindest den symmetrischen Schlüssel mit dem den zur Verschlüsselung der Datei verwendeten symmetrischen Schlüssel zu verschlüsseln. Der symmetrische Schlüssel ist mit weiteren Daten, z.B. den Pfadangaben zu den Dateifragmenten, kombiniert, um die weitere Version der Metadaten der Datei 101 bereitzustellen und an den Dateimanagementserver zu senden. Der Dateimanagementserver leitet die weitere Version der verschlüsselten Metadaten 312 an das anfragende weitere Nutzer-Computersystem 168 weiter. Dieses entschlüsselt die besagte Version der Metadaten 312 mit seinem privaten Schlüssel 172 unter Verwendung des Hardwaretokens 167 mit dem privaten Schlüssel 172.

Im Folgenden wird davon ausgegangen, dass die verschlüsselten Metadaten 510, den verschlüsselten symmetrischen Schlüssel 319 und/oder weitere verschlüsselte Daten umfassen, wohingegen die Daten zum Identifizieren der Speicherdienste, in welchen die Dateifragmente F1-F4 der Datei 101 gespeichert sind, unverschlüsselt sind. In Schritt 512 analysiert der Dateimanagementserver den unverschlüsselten teil der weitergeleiteten Metadaten um die Speicherdienste, in welchen die Dateifragmente F1-F4 der Datei 101 gespeichert sind, zu identifizieren.

Im nächsten Schritt sendet der Dateimanagementserver eine Anforderung 514 zum Erhalt von Berechtigungstoken zum Lesen der Dateifragmente an die in Schritt 512 identifizierten Speicherdienste. In Antwort auf den Erhalt der Anforderung generieren die identifizierten Speicherdienste in Schritt 516 Berechtigungstoken, zum Beispiel in Form von URLs, die auf die von dem jeweiligen Dienst gespeicherten Dateifragmente weisen. Die generierten Berechtigungstoken 518 werden an den Dateimanagementserver über das Netzwerk übermittelt und von diesem in Schritt 520 mit dessen Signierungsschlüssel signiert. Die signierten Berechtigungstoken 522 werden an das weitere Nutzer-Computersystem 168 übertragen und ermöglichen es diesem, einen direkten Lesezugriff 524 auf die Speichermedien der jeweiligen Speicherdienste mittels der signierten URLs durchzuführen. Der Lesezugriff wird aber von den jeweiligen Speicherdiensten nur gestattet, falls eine Signaturprüfung mittels des Signaturprüfschlüssels 441 in Schritt 526 durch die jeweiligen Speicherdienste ergibt, dass die Signatur der Berechtigungstoken valide ist. In diesem Fall geben die Speicherdienste in Schritt 528 eine Erlaubnis zum Lesen der jeweiligen, clientseitig gespeicherten Dateifragmente. Die Dateifragmente 530 werden über das Netzwerk direkt an das Nutzer-Computersystem 168 übertragen.

Zum Entschlüsseln der Metadaten 312, genauer gesagt zum Entschlüsseln des Verschlüsselten Teils der Metadaten 312, authentifiziert sich das Nutzer-Computersystem 168 in Schritt 512 gegenüber dem Hardwaretoken 167. In Schritt 514 sendet das Nutzer-Computersystem 168 die verschlüsselten Metadaten 312 an das Hardwaretoken 167. Das Hardwaretoken 167 entschlüsselt in Schritt 516 die Metadaten 312 oder zumindest den symmetrischen Schlüssel 139 mit dem in einem geschützten Speicherbereich des Hardwaretoken 167 gespeicherten privaten Schlüssel 172. In Schritt 518 sendet die entschlüsselten Metadaten 311 zurück an das Nutzer-Computersystem 168. Nach Ausführungsformen erfolgt die Kommunikation zwischen dem Nutzer-Computersystem 168 und dem Hardwaretoken 168 in den Schritten 514 und/oder 518 unter Verwendung einer Ende-zu-Ende-Verschlüsselung.

In Schritt 540 werden die empfangenen Dateifragmente 530 von einer auf dem Nutzer-Computersystem 168 gespeicherten Client-Applikation 108 zu der ursprünglichen verschlüsselten Datei 101 assembliert. Falls die einzelnen Dateifragmente 530 jeweils zusätzlich verschlüsselt sind, werden diese vor dem Assemblieren bzw. Rekonstruieren unter Zuhilfenahme von symmetrischen Schlüssel, welche die entschlüsselte weitere Version der Metadaten 311 umfasst, entschlüsselt. In Schritt 542 wird die rekonstruierte Datei 101 schließlich mittels des symmetrischen Schlüssels 139, welchen die unter Verwendung des privaten Schlüssels 172 des weiteren Hardwaretokens 167 entschlüsselten Metadaten 311 bereitstellen, durch das Nutzer-Computersystem 168 entschlüsselt.

Falls die Metadaten 312 vollständig verschlüsselt sind, umfasst der Dateimanagementserver 130 entweder zusätzlich zu den verschlüsselten Metadaten 312 unverschlüsselte verkürzte Metadaten, welche nicht den symmetrischen Schlüssel 139 umfassen, aber die für die Analyse 512 benötigten Daten zum Identifizieren der Speicherdienste, welche Dateifragmente der zu rekonstruierenden Datei gespeichert haben. Die Analyse 512 wird in diesem Fall unter Verwendung der verkürzten Metadaten ausgeführt. Alternativ, können die Schritte 532 bis 538 zum Entschlüsseln der Metadaten 312 vor dem Schritt 512 ausgeführt werden und die für die Analyse 512 benötigten Daten zum Identifizieren der Speicherdienste, welche Dateifragmente der zu rekonstruierenden Datei gespeichert haben, können von dem Nutzer-Computersystem 168 an den Dateimanagementserver 130 zur Analyse gesendet werden. Schließlich kann nach Ausführungsbeispielen die Analyse 512 auch durch den Nutzer-Computersystem 168 ausgeführt und das Ergebnis der Analyse an den Dateimanagementserver 130 zum Erstellen der entsprechenden URL Anforderungen 514 gesendet werden.

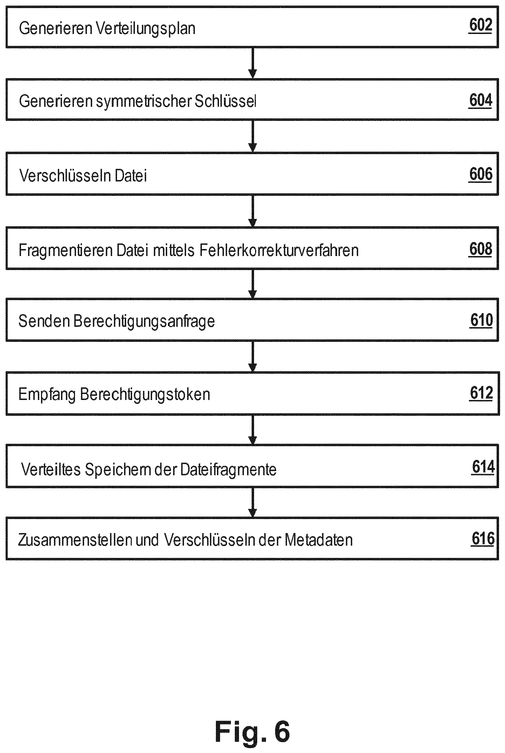

Figur 6 zeigt ein Verfahren zur Speicherung einer Datei 101 mittels mehrerer Speicherdienste über ein Netzwerk unter Verwendung eines Dateimanagementservers. In einem ersten Schritt 602 generiert eine Client-Applikation 108 auf einem Nutzer-Computersystem oder eine Dateiverwaltungs-Applikation 304 auf einem Dateimanagementserver 130 einen Verteilungsplan 416. In Schritt 604 generiert die Client-Applikation 108 einen symmetrischen Schlüssel 139 zum Verschlüsseln der zu speichernden Datei 101. In Schritt 606 wird die Datei 101 mit dem symmetrischen Schlüssel 139 verschlüsselt. In Schritt 608 führt die Client-Applikation 108 auf dem Nutzer-Computersystem 104 ein Fehlerkorrekturverfahren durch, das in den Verteilungsplan spezifiziert ist, und generiert Dateifragmente, welche gemäß dem Verteilungsplan in mehreren SD2, SD4-SD6 der Speicherdienste gespeichert werden sollen. Hierfür sendet die Client-Applikation 108 in Schritt 610 eine Berechtigungsanfrage bezüglich des Speicherns der Datei mittels der in dem Verteilungsplan 416 spezifizierten Speicherdienste an die Dateiverwaltungs-Applikation 304 des Dateimanagementservers 130. In Antwort auf den Erhalt der Berechtigungsanfrage fordert die Dateiverwaltungs-Applikation ein Berechtigungstoken von jedem der Speicherdienste, in welchem ein Dateifragment gespeichert werden soll, an. In Schritt 612 leitet die Dateiverwaltungs-Applikation die Berechtigungstoken, welche die Dateiverwaltungs-Applikation von den besagten Speicherdiensten angefordert und in Reaktion darauf erhalten hat, an die Client-Applikation 108 weiter. Nach manchen Ausführungsformen werden die Berechtigungstoken von der Dateiverwaltungs-Applikation vor der Weiterleitung signiert. Die Client-Applikation weist in Schritt 614 ihre Berechtigung zum Schreiben der Dateifragmente den einzelnen Speicherdiensten mit Hilfe der Berechtigungstoken nach und speichert nach erfolgreichem Nachweis der Berechtigung die generierten Dateifragmente in den Speichermedien der einzelnen Speicherdienste unter Umgehung des Dateimanagementservers. In Schritt 616 erstellt die Client-Applikation Metadaten 312 der verteilt gespeicherten Datei, welche den symmetrischen Schlüssel 139 umfassen, und verschlüsselt diese mit einem öffentlichen Schlüssel 136, welcher mit einem in einem geschützten Speicherbereich eines Hardwaretokens gespeicherten privaten Schlüssel 138 ein asymmetrisches kryptographisches Schlüsselpaar bildet.

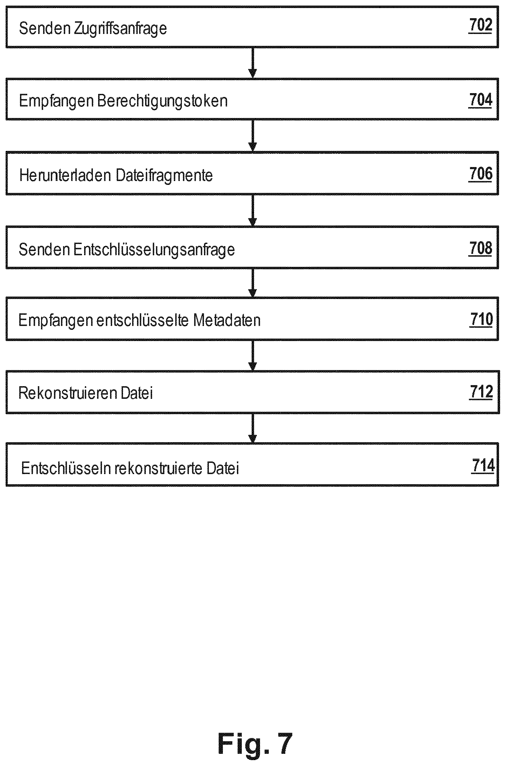

Figur 7 zeigt ein Verfahren zum Rekonstruieren einer auf mehreren Speicherdiensten über ein Netzwerk verteilt gespeicherten Datei unter Verwendung eines Dateimanagementservers und eines Hardwaretokens. In Schritt 702 sendet die Client-Applikation 108 eine Berechtigungsanfrage bezüglich des Zugriffs auf die mittels der in dem Verteilungsplan 416 spezifizierten Speicherdienste verteilt gespeicherten Datei 101 an die Dateiverwaltungs-Applikation 304 des Dateimanagementservers 130. In Antwort auf den Erhalt der Berechtigungsanfrage fordert die Dateiverwaltungs-Applikation ein Berechtigungstoken von jedem der Speicherdienste, in welchem ein Dateifragment gespeichert ist, an. In Schritt 704 leitet die Dateiverwaltungs-Applikation die Berechtigungstoken, welche die Dateiverwaltungs-Applikation von den besagten Speicherdiensten angefordert und in Reaktion darauf erhalten hat, an die Client-Applikation 108 weiter. Nach manchen Ausführungsformen werden die Berechtigungstoken von der Dateiverwaltungs-Applikation vor der Weiterleitung signiert. Nach Ausführungsformen empfängt die Client-Applikation 108 von der Dateiverwaltungs-Applikation 304 zusätzlich verschlüsselte Metadaten zum Rekonstruieren der verteilt gespeicherten Datei 101, wobei im Falle der verschlüsselten Metadaten zumindest der von diesen umfasste symmetrische Schlüssel durch ein asymmetrisches verschlüsselungsverfahren verschlüsselt ist. Die Client-Applikation weist in Schritt 706 ihre Berechtigung zum Herunterladen der Dateifragmente den einzelnen Speicherdiensten mit Hilfe der Berechtigungstoken nach und empfängt nach erfolgreichem Nachweis der Berechtigung die gespeicherten Dateifragmente von den Speichermedien der einzelnen Speicherdienste unter Umgehung des Dateimanagementservers. In Schritt 708 sendet die Client-Applikation 108 des Nutzer-Computersystems eine Entschlüsselungsanfrage zum Entschlüsseln der verschlüsselten Metadaten. Nach Ausführungsformen sendet Client-Applikation 108 zudem die zu entschlüsselnden Metadaten an das Hardwaretoken. Nach alternativen Ausführungsformen sind die zu entschlüsselnden Metadaten auf dem Hardwaretoken gespeichert. In Antwort auf den Empfang der Entschlüsselungsanfrage entschlüsselt das Hardwaretoken die verschlüsselten Metadaten oder zumindest den symmetrischen Schlüssel 139 mit dem geschützt gespeicherten privaten Schlüssel 138 und sendet die entschlüsselten Metadaten in Schritt 710 an die Client-Applikation 108 zurück. In Schritt 712 führt die Client-Applikation 108 auf dem Nutzer-Computersystem 104 ein Fehlerkorrekturverfahren durch, das in den Verteilungsplan spezifiziert ist, und rekonstruiert aus den Dateifragmente die verschlüsselte Datei 101. In Schritt 714 wird die verschlüsselte Datei 101 mit dem symmetrischen Schlüssel 139 entschlüsselt.

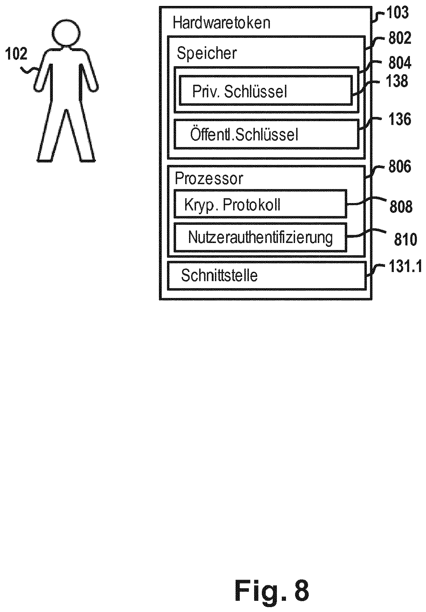

Figur 8 zeigt ein Hardwaretoken 103 des Nutzers 102 zum Entschlüsseln verschlüsselter Metadaten 312. Bei dem Hardwaretoken 103 kann es sich um eine Chipkarte oder aber ein Gerät mit weiterführenden Funktionalitäten, wie etwa einen Personal Digital Assistant, ein mobiles Telekommunikationsgerät, insbesondere ein Smartphone, oder dergleichen handeln. Das Hardwaretoken 103 hat eine Schnittstelle 131.1 zur Kommunikation mit der Client-Applikation 108 des Nutzer-Computersystems 104. Die Kommunikation kann kontaktlos oder kontaktbasiert erfolgen. Eine kontaktlose Kommunikation kann beispielswiese mittels RFID, Bluetooth oder WLAN erfolgen. Beispielsweise erfolgt die Kommunikation entsprechend der Norm ISO 14443 drahtlos mit einer Frequenz von 13,56 MHz oder per Bluetooth Klasse 3.

Das Hardwaretoken 103 umfasst zumindest einen Prozessor 806 zur Ausführung von Programminstruktionen 808, 810. Die Programminstruktionen 810 dienen zur Nutzerauthentifizierung, d.h. zur Authentifizierung des Nutzers 102 durch das Hardwaretoken 103. Das Hardwaretoken 103 umfasst ferner einen elektronischen Speicher 802 mit einem geschützten Speicherbereich 804. Der geschützte Speicherbereich 804 dient zur Speicherung des privaten Schlüssels 138, welcher dem Nutzer 102 zugeordnet ist. Darüber hinaus kann in dem Speicher 118 beispielsweise auch der öffentliche Schlüssel 136 gespeichert sein.

Die Programminstruktionen 808 dienen dazu zum Ausführen eines kryptographischen Protokolls. Hat das Hardwaretoken 103 die Metadaten 103 über die Schnittstelle 131.1 von der Client-Applikation 108 des Nutzer-Computersystems 104 empfangen und hat sich der Nutzer 102 gegenüber dem Hardwaretoken 103 durch Ausführung der Programminstruktionen 810 erfolgreich authentifiziert, so werden dies Metadaten 312 mit dem privaten Schlüssel 138 entschlüsselt und über die Schnittstelle 131.1 an die Client-Applikation 108 des Nutzer-Computersystems 104 zurückgesendet.

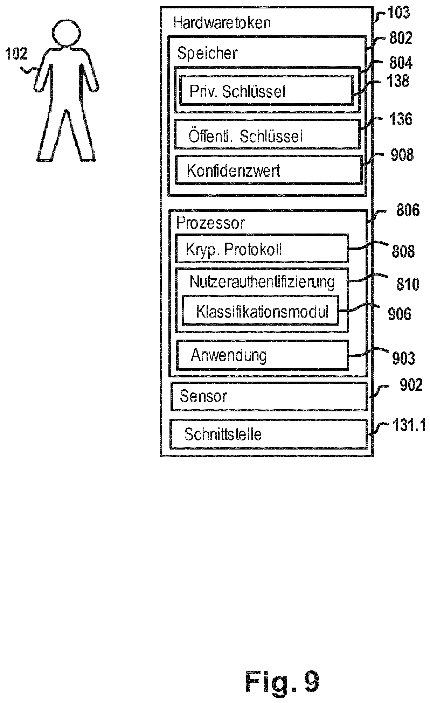

Figur 9 zeigt den schematischen Aufbau einer weiteren Ausführungsform eines Hardwaretokens 103, welches beispielswiese von dem Nutzer 102 mitgeführt wird. Die Programminstruktionen 810 sind dabei zu einer verhaltensbasierten Authentifizierung des Nutzers 102 konfiguriert und umfasst hierzu ein Klassifikationsmodul 906. Das tragbare Hardwaretoken 103 weist einen Sensor 902 auf, welcher dazu geeignet ist, nutzerbezogene Daten 904 zu erfassen. Ferner weist das Hardwaretoken 103 ein Klassifikationsmodul 906 auf, welches von dem Prozessor ausgeführt wird und dazu konfiguriert ist, die nutzerbezogenen Daten 904 des Sensors 902 zu verarbeiten. Ferner werden die Daten 904 in verarbeiteter Form als Konfidenzwert 908 in dem Speicher 802 des Hardwaretokens 103 gespeichert.

In einer weiteren Ausführungsform implementiert das Hardwaretoken 103 eine Anwendung 903, welche ausgebildet ist, Anwendungsdaten als nutzerbezogene Daten 904 zu erfassen. Das Klassifikationsmodul 906 ist ferner dazu ausgebildet die Anwendungsdaten der Anwendung 903 zu verarbeiten.

Führt der Nutzer 102 beispielsweise eine grobmotorische Bewegung aus und trägt dabei das mobile Hardwaretoken 103 bei sich, so kann der Sensor 902 diese Bewegung in Form von grobmotorischen Bewegungsdaten 904 erfassen. Der Sensor kann beispielsweise als ein Beschleunigungssensor oder ein Gyroskop oder eine Kombination aus beidem ausgebildet sein. Die Bewegung des Nutzers kann beispielsweise ein Gehen, ein Joggen, ein Rennen oder eine Bewegung des Armes sein.

Unter einer grobmotorischen Bewegung können beispielsweise Bewegungsabläufe wie zum Beispiel Gehen, Joggen, Rennen, Hüpfen, Klettern, Balancieren, Fahrradfahren, Autofahren oder eine Bewegung des Armes etwa beim Schauen auf eine Armbanduhr oder beim Handhaben des Hardwaretokens 103, etwa bei einem Herausziehen des Hardwaretokens 103 aus einer Tasche, beim Ablegen des Hardwaretokens 103 oder beim Einführen des Hardwaretokens 103 in ein Lesegerät.

Nutzt der Nutzer eine Anwendung 903, welche auf seinem Hardwaretoken 103 implementiert ist, so kann das Hardwaretoken 103 die Anwendungsdaten ebenfalls als nutzerbezogene Daten 904.

Führt der Nutzer 102 eine feinmotorische Bewegung aus, so kann der Sensor 902 diese Bewegung in Form von feinmotorischen Bewegungsdaten erfassen. Der Sensor kann beispielsweise als ein Touchdisplay, eine Tastatur oder eine Kombination aus beidem ausgebildet sein. Die feinmotorische Bewegung des Nutzers kann beispielsweise als Tippgeschwindigkeit, Eingabefrequenz oder Eingabegenauigkeit erfasst werden.

Das Klassifikationsmodul 906 empfängt die nutzerbezogenen Daten 904 und klassifiziert die Daten als ein Muster. Aus der Klassifikation generiert das Klassifikationsmodul 906 mindestens einen Konfidenzwert 908. Dieser mindestens eine Konfidenzwert 908 wird in dem Speicher 802 des Hardwaretokens 103 gespeichert.

Muss sich der Nutzer authentifizieren, wird der mindestens eine Konfidenzwert 908 aus dem Speicher 802 des Hardwaretokens ausgelesen und verarbeitet. Dabei wird ein Klassifikationsergebnis 910 generiert.

Ist der Nutzer gemäß dem Klassifikationsergebnis 910 authentifiziert, so werden die Daten 904, die zu der erfolgreichen Authentifizierung beigetragen haben, in dem Speicher 802 des Hardwaretokens 103 gespeichert bzw. zu einem in dem Speicher 802 gespeicherten Vergleichsdatensatz 914 hinzugefügt, um für zukünftige Authentifizierungsversuche bei der Generierung der zukünftigen Konfidenzwerte 908 verwendet zu werden. Ferner erfolgt auf eine erfolgreiche Authentifizierung hin die Entschlüsselung der Metadaten 312 unter Verwendung des privaten Schlüssels 136 durch das Hardwaretoken 103.

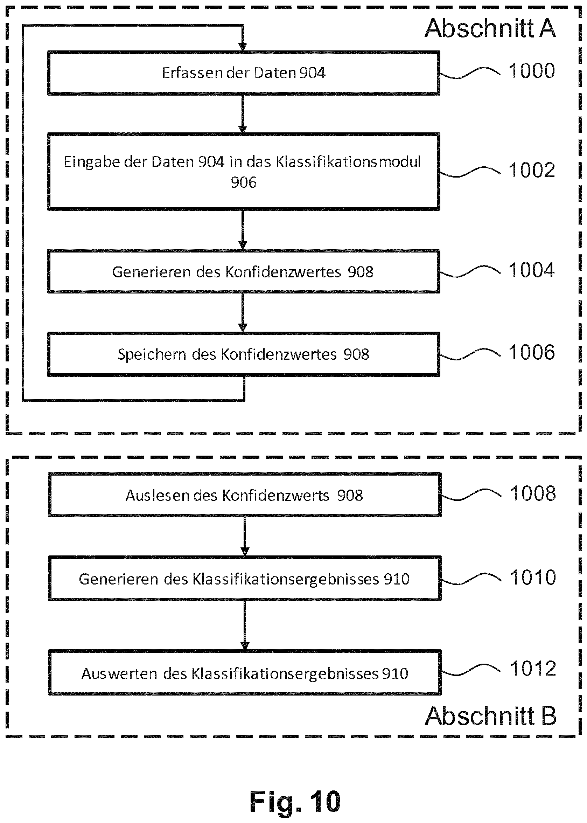

Figur 10 zeigt die verhaltensbasierte Authentifizierung eines Nutzers 102 in einem Ablaufdiagramm. Die verhaltensbasierte Authentifizierung kann dabei in zwei Abschnitte A und B unterteilt werden. Abschnitt A wird wiederholt ausgeführt, und bildet so eine schleifenartige Ausführungsstruktur. Das Hardwaretoken 103 erfasst in Schritt 1000 die nutzerbezogenen Daten 904. Die Daten 904 werden in Schritt 1002 in das Klassifikationsmodul 906 eingegeben. Aus den Daten 904 generiert das Klassifikationsmodul 906 in Schritt 1004 den mindestens einen Konfidenzwert 908. Der mindestens eine generierte Konfidenzwert 908 wird in Schritt 1006 in dem Speicher 802 des Hardwaretokens 103 gespeichert. Das Hardwaretoken 103 erfasst dann neue Daten 904. Das ganze Verfahren gemäß Abschnitt A wird wiederholt ausgeführt.

In einer Ausführungsform erfasst das Hardwaretoken 103 die Daten 904 als Datenstrom (Stream), wobei das Klassifikationsmodul 906 die Daten 904 als Stream empfängt und verarbeitet. Die Konfidenzwerte 908 werden dabei in sehr kurzen zeitlichen Abständen, die durch die Taktrate des Prozessors und/oder des Sensors vorgegeben werden, im Speicher 802 des Hardwaretokens 103 abgespeichert.

Abschnitt B wird ausgeführt, wenn sich der Nutzer authentifizieren muss und eine Authentifizierungsanfrage an das Betriebssystem gesendet wurde. Die Authentifizierungsanfrage umfasst eine Anforderung zum Auslesen von mindestens einem Konfidenzwert 908 aus dem Speicher 802 des Hardwaretokens 103. Der mindestens eine Konfidenzwert 908 wird dann aus dem Speicher 802 des Hardwaretokens in Schritt 1008 ausgelesen.

Aus dem mindestens einen Konfidenzwert 908 wird in Schritt 1010 das Klassifikationsergebnis 910 generiert. Anschließend wird das Klassifikationsergebnis 910 in Schritt 1012 ausgewertet. Eine Auswertung des Klassifikationsergebnisses 910 umfasst beispielsweise das Prüfen des Klassifikationsergebnisses 910 gegen ein Prüfungskriterium. Erfüllt das Klassifikationsergebnis 910 das Prüfungskriterium, so wird gemäß einer Ausführungsform ein Authentifizierungssignal erzeugt. Erfüllt das Klassifikationsergebnis 910 das Prüfungskriterium nicht, so wird kein Authentifizierungssignal erzeugt. Auf eine erfolgreiche Authentifizierung hin erfolgte die Entschlüsselung der Metadaten 312 unter Verwendung des privaten Schlüssels 136 durch das Hardwaretoken 103.

Ist der Nutzer gemäß dem Klassifikationsergebnis 910 authentifiziert, wodurch ein Senden eines Authentifizierungssignals veranlasst wurde, so werden die Daten 904, die zu der erfolgreichen Authentifizierung beigetragen haben, in dem Speicher 802 des Hardwaretokens 103 gespeichert bzw. zu einem Vergleichsdatensatz 914 hinzugefügt, um für zukünftige Authentifizierungsversuche bei der Generierung zukünftiger Klassifikationsergebnisse 910 verwendet zu werden.

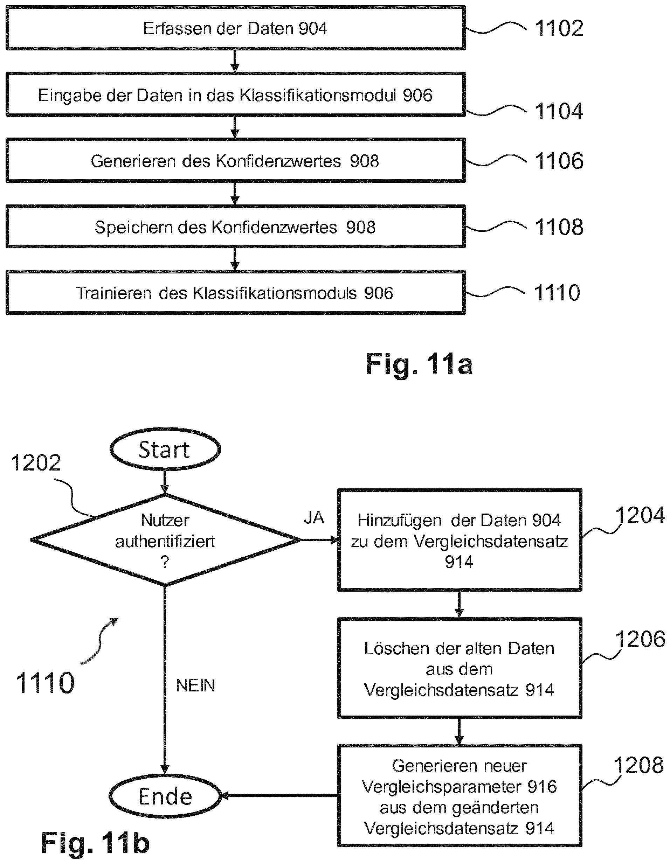

Figur 11a zeigt ein Ablaufdiagramm, welches die Verfahrensschleife A gemäß Figur 10 darstellt. In Schritt 1102 werden die Daten 904 erfasst. Die erfassten Daten 904 werden in Schritt 1104 in das Klassifikationsmodul 906 eingegeben. In Schritt 1106 generiert die Klassifikationsmodul 906 mindestens einen Konfidenzwert 908. Der mindestens eine generierte Konfidenzwert 908 wird in Schritt 1108 in dem Speicher 802 des Hardwaretokens 103 gespeichert. Schließlich wird das Klassifikationsmodul 906 in Schritt 1110 trainiert, wobei das Training von dem Klassifikationsergebnis 910 abhängt.

Figur 11b zeigt das Training gemäß Schritt 1110 der Figur 3a im Detail. Zunächst wird in Schritt 1202 geprüft, ob sich der Nutzer durch das Klassifikationsergebnis 910 authentifizieren konnte. Ist dies nicht der Fall, so werden die erfassten Daten 904 verworfen und es findet kein Training statt.

War die Authentifizierung des Nutzers erfolgreich, werden die Daten 904 in Schritt 1204 einem entsprechenden Vergleichsdatensatz 914 hinzugefügt und somit in dem Speicher 802 des Hardwaretokens 103 gespeichert.

In einer Ausführungsform wird nun geprüft, ob der Vergleichsdatensatz 914 Daten 904 enthält, welche älter als ein bestimmtes Schwellenalter sind. Das Schwellenalter ist beispielsweise durch den Nutzer 102 oder das Hardwaretoken 103 festgelegt. Beispielsweise kann dieses Schwellenalter einige Tage, eine Woche, mehrere Monate oder Jahre betragen. Beispielsweise beträgt es vier Wochen, drei Monate oder ein Jahr. Sind die Daten älter als das Schwellenalter, werden sie in Schritt 1206 aus dem Vergleichsdatensatz gelöscht.

Haben sich die Vergleichsdatensätze 914 durch das Hinzufügen neuer Daten 904 und/oder durch das Löschen alter Daten 904 verändert, werden die jeweiligen Vergleichsparameter 916 in Schritt 1208 erneut bestimmt. Diese neuen Vergleichsparameter 916 werden beispielsweise in dem Speicher 802 des Hardwaretokens 103 gespeichert und stehen bei einem nächsten Authentifizierungsversuch dem Klassifikationsmodul 906 zur Verfügung. Alternativ werden die Vergleichsparameter 916 bei jedem Authentifizierungsversuch neu berechnet, so dass sichergestellt werden kann, dass stets aktuelle auf den registrierten Nutzer trainierte Vergleichsparameter 916 für die Authentifizierung verwendet werden.

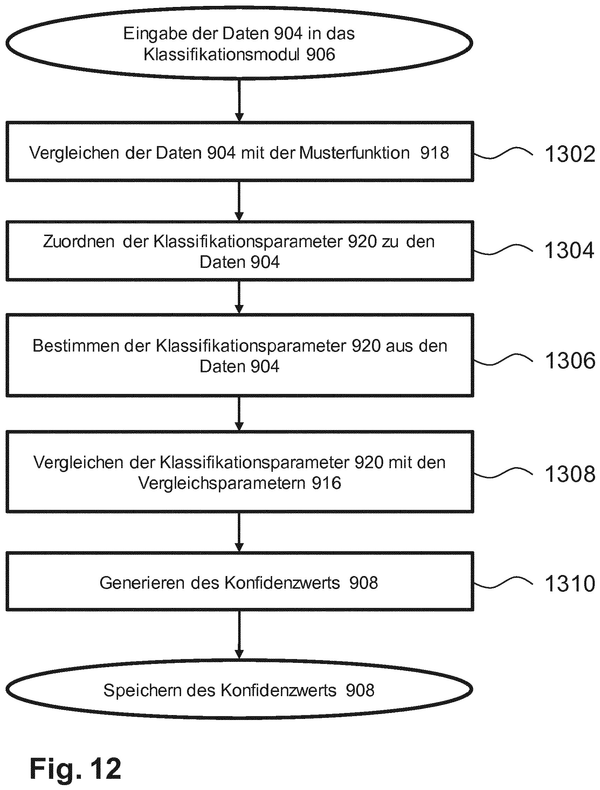

Figur 12 zeigt den schematischen Ablauf zur Generierung des Konfidenzwertes 908 aus den Daten 904. Zunächst erfasst ein Sensor 902 oder eine Anwendung 903 die nutzerbezogenen Daten 904. Die Daten 904 werden dann an das Klassifikationsmodul 906 gesendet. Das Klassifikationsmodul 906 ruft aus dem Speicher 802 des Hardwaretokens 103 eine Musterfunktion 918 ab und vergleicht in Schritt 1302 die Musterfunktion 918 mit den Daten 904. Die Daten 904 werden in Schritt 1304 einer Musterfunktion 918 zugeordnet. Auf das Zuordnen der Musterfunktion 918 hin, werden in Schritt 1306 die der Musterfunktion 918 zugeordneten Klassifikationsparameter 920 aus den Daten 904 bestimmt.

In dem Speicher 802 des Hardwaretokens 103 ist ein Vergleichsdatensatz 914 gespeichert, welcher Daten umfasst, wobei die Daten des Vergleichsdatensatzes 914 die Struktur der Daten 904 aufweisen. Dem Vergleichsdatensatz 914 sind Vergleichsparameter 916 zugeordnet, welche aus den Daten des Vergleichsdatensatzes 914 errechnet wurden. Das Klassifikationsmodul 906 liest die Vergleichsparameter 916 aus dem Speicher 802 des Hardwaretokens 103 aus und vergleicht die Vergleichsparameter 916 mit den Klassifikationsparametern 920 in Schritt 1306. Aus dem Unterschied generiert das Klassifikationsmodul 906 in Schritt 1308 mindestens einen Konfidenzwert 908, wobei jeder Konfidenzwert 908 einem Klassifikationsparameter 920 zugeordnet ist und somit die Anzahl der Klassifikationsparameter 920 gleich der Anzahl der Konfidenzwerte 908 ist.

Die Konfidenzwerte 908 werden dann gemäß einer Ausführungsform, zum Beispiel durch Bildung des Mittelwerts, des Medians, des Modus oder durch eine komplexere Berechnung, zu einem resultierenden Konfidenzwert zusammengefasst. Der resultierende Konfidenzwert wird in dem Speicher 802 Hardwaretokens 103 gespeichert.

Ist der Nutzer gemäß dem Klassifikationsergebnis 910 authentifiziert, so werden die Daten 904, die zu der erfolgreichen Authentifizierung beitrugen, dem Speicher 802 des Hardwaretokens hinzugefügt, um für zukünftige Authentifizierungsversuche bei der Generierung der zukünftigen Konfidenzwerte 908 verwendet zu werden.

### Bezugszeichenliste

- F1-114: Dateifragmente
- FKV: Fehlerkorrekturverfahren
- SD1-SD6: Speicherdienste
- SM1-SM6: Speichermedien
- 180-192: IT-Infrastruktur der Speicherdienste
- 101: Datei
- 102: Nutzer
- 103: Hardwaretoken
- 104: Nutzer-Computersystem
- 106: Speichermedium
- 108: Client-Applikation
- 109: Entschlüsselungs-Modul
- 110: Ver-/Entschlüsselungs-Modul
- 112: (De-) Fragmentierungs-Modul
- 114: Distributions-/Aggregations-Modul
- 116-128: standardisierte Schnittstellen
- 130: Dateimanagementserver
- 131: Schnittstelle
- 132: Schnittstelle
- 134: Nutzer-Schnittstelle
- 135: Prozessor
- 136: öffentlicher Schlüssel
- 138: privater Schlüssel
- 139: symmetrischer Schlüssel
- 160: Nutzer
- 162: Nutzer-Computersystem
- 164: öffentlicher Schlüssel
- 167: Hardwaretoken
- 168: Nutzer-Computersystem
- 170: öffentlicher Schlüssel
- 172: privater Schlüssel
- 174: Nutzerprofile
- 175: Konfiguration
- 176: Nutzerprofil
- 177: Konfiguration
- 178: Netzwerk
- 302: Speichermedium
- 304: Dateimanagement-Applikation
- 306: Verzeichnis mehrerer Nutzerprofile
- 308: Anforderungen
- 310: Mindestvertrauensniveau
- 311: unverschlüsselte Metadaten
- 312: verschlüsselte Metadaten
- 314: geforderte geographische Lage
- 316: geforderter Computertyp
- 320: Anforderungen
- 322: Mindestvertrauensniveau
- 324: verschlüsselte Metadaten
- 326: geforderte geographische Lage
- 328: geforderter Computertyp
- 329: Speicherdienst-Katalog
- 330: Modul zum Berechtigungsmanagement
- 332: Modul zur Verwaltung von Berechtigungstoken
- 334: Signierungsschlüssel
- 336: Modul zur Authentifizierung von Nutzern
- 338: Modul zur Verarbeitung von Metadaten
- 340: Modul zur Generierung von Verteilungsplänen
- 400-414: Schritte
- 416: Verteilungsplan
- 418-422: Schritte
- 424: URL-Anforderung
- 426: Schritt
- 428: Berechtigungstoken
- 430: Schritt
- 432: signierten Berechtigungstoken
- 434: übermittelte Dateifragmente
- 436-439: Schritte
- 440: Dateimerkmale
- 441: Signaturprüfschlüssel
- 502-512: Schritte
- 514: Anforderung Berechtigungstoken
- 516: Schritte
- 518: Berechtigungstoken
- 520: Schritte
- 522: signierten Berechtigungstoken
- 524: Lesezugriff
- 526-528: Schritte
- 530: übertragene Dateifragmente
- 532-542: Schritt
- 602-616: Schritte
- 702-714: Schritte
- 802: Speicher
- 804: geschützter Speicherbereich
- 806: Prozessor
- 808: kryptographisches Protokoll
- 810: Nutzerauthentifizierung
- 902: Sensor
- 903: Anwendung
- 904: nutzerbezogene Daten
- 906: Klassifikationsmodul
- 908: Konfidenzwert
- 910: Klassifikationsergebnis
- 914: Vergleichdatensatz
- 916: Vergleichsparameter
- 918: Musterfunktion
- 920: Klassifikationsparameter
- 1000-1012: Schritte
- 1102-1110: Schritte
- 1202-1208: Schritte
- 1302-1310: Schritte

## Patentansprüche

1. Verfahren zur Verarbeitung einer Datei (101), wobei die Datei (101) mit einem symmetrischen Schlüssel (139) verschlüsselt und gemäß einem Verteilungsplans (416) mittels eines Fehlerkorrekturverfahrens (FKV) in Dateifragmente (F1-F4) aufgeteilt ist, wobei die resultierenden Dateifragmente (F1-F4) auf nichtflüchtigen Speichermedien (SM1-SM6) mehrerer Speicherdienste (SD1-SD6) verteilt gespeichert sind, wobei Metadaten (312, 324), welche der Datei zugeordnet (101) sind und eine Rekonstruktion der Datei (101) aus den Dateifragmenten (F1-F4) ermöglichen, den symmetrische Schlüssel (139) umfassen, der ein Entschlüsseln der verschlüsselten Datei (101) ermöglicht, wobei die Metadaten (312, 324) oder zumindest der symmetrische Schlüssel (139) mit einem öffentlichen Schlüssel (136, 170) verschlüsselt sind, wobei ein privater Schlüssel (138, 172), der mit dem öffentlichen Schlüssel (136, 170) ein asymmetrisches kryptographisches Schlüsselpaar bildet und ein Entschlüsseln der verschlüsselten Metadaten (312, 324) ermöglicht, in einem geschützten Speicherbereich (804) eines Speichers (802) eines Hardwaretokens (103) gespeichert ist, wobei das asymmetrische kryptographische Schlüsselpaar einem Nutzer (102, 160) zugeordnet ist, wobei es sich bei dem Hardwaretoken (103, 167) um ein tragbares elektronisches Gerät handelt, welches ferner einen Prozessor (806) und eine Schnittstelle (131.1) zur operativen Kopplung des Hardwaretokens (104, 162, 168) an ein Nutzer-Computersystem (104, 162, 168) umfasst, wobei es sich bei dem geschützten Speicherbereich um einen Bereich des Speichers des Hardwaretokens handelt, auf den ein Zugriff nur über den Prozessor des Hardwaretokens möglich ist, wobei der Zugriff von dem mit dem Speicher gekoppelten Prozessor nur dann ermöglich wird, wenn eine hierzu erforderliche Bedingung erfüllt ist, wobei es sich bei der zu erfüllenden Bedingung um eine erfolgreiche Authentifizierung handelt,
wobei das Verfahren umfasst:
- Senden einer Zugriffsanfrage des Nutzer-Computersystems (104, 162, 168) zum Zugriff auf die verteilt gespeicherte Datei (101) an einen Dateimanagementserver (130);
- Authentifizieren des Nutzer-Computersystems (104, 162, 168) gegenüber dem Dateimanagementserver (130);
- nach erfolgreichem Authentifizieren des Nutzer-Computersystems (104, 162, 168) und falls der Nutzer (102, 160), dem das Nutzer-Computersystem (104, 162, 168) zugeordnet ist, Zugriffsrechte für die Datei (101) besitzt, Empfangen eines Berechtigungstokens von jedem der Speicherdienste zumindest einer Auswahl der Speicherdienste (SD1-SD6), in deren nichtflüchtigen Speichermedien (SM1-SM6) die Dateifragmente (F1-F4) gespeichert sind, über den Dateimanagementserver (130), wobei die von der Auswahl der Speicherdienste umfassten Dateifragmente (F1-F4) hinreichend für eine Rekonstruktion der Datei (101) sind,
wobei die Berechtigungstoken dem Nutzer-Computersystem (104, 162, 168) den angeforderten Zugriff auf die durch die Speicherdienste jeweils gespeicherten Dateifragmente unter Umgehung des Dateimanagementservers (130) ermöglichen;
- Herunterladen der Dateifragmente (F1-F4) von den einzelnen Speicherdiensten unter Verwendung der Berechtigungstoken und unter Umgehung des Dateimanagementservers (130);
- Senden einer Entschlüsselungsanfrage des Nutzer-Computersystems (104, 162, 168) zum Zugriff auf die entschlüsselten Metadaten (311) an das Hardwaretoken (103, 167);
- Authentifizieren des Nutzer-Computersystems (104, 162, 168) gegenüber dem Hardwaretoken (103, 167);
- nach erfolgreichem Authentifizieren des Nutzer-Computersystems (104, 162, 168) und falls der Nutzer (160), dem das Nutzer-Computersystem (104, 162, 168) zugeordnet ist, Zugriffsrechte für die entschlüsselten Metadaten (311) besitzt, Empfangen der durch das Hardwaretoken (103, 167) mit dem privaten Schlüssel (138, 172) entschlüsselten Metadaten (311), wobei die Übertragung der entschlüsselten Metadaten von dem Hardwaretoken an das Nutzer-Computersystem mittels Ende-zu-Ende-Verschlüsselung kryptographisch gesichert ist;
- Rekonstruieren der verschlüsselten Datei (101) aus den Dateifragmente (F1-F4) unter Verwendung der Metadaten (311);
- Entschlüsseln der verschlüsselten Datei (101) mit dem von den Metadaten (311) umfassten symmetrischen Schlüssel (319),
wobei eine Verwendung des privaten Schlüssels die Authentifizierung mittels einer verhaltensbasierten Authentifizierung des Nutzers gegenüber dem Hardwaretoken voraussetzt, wobei das Hardwaretoken mindestens einen Sensor zur Erfassung von nutzerbezogenen Daten aufweist, welche Informationen bezüglich des Verhaltens des Nutzers umfassen, wobei das Verfahren zur Authentifizierung des Nutzers des Hardwaretokens mittels der verhaltensbasierten Authentifizierung die folgenden Schritte umfasst:
- Generieren mindestens eines Klassifikationsergebnisses unter Verwendung der nutzerbezogenen Daten für die verhaltensbasierte Authentifizierung;
- Auswerten des mindestens einen Klassifikationsergebnisses, um den Nutzer zu authentifizieren, wobei das Auswerten ein Prüfen umfasst, ob das Klassifikationsergebnis ein vorgegebenes Prüfungskriterium erfüllt, wobei eine erfolgreiche Authentifizierung ein erfüllen des Prüfungskriteriums umfasst;
- Erzeugen eines Authentifizierungssignals aufgrund des Ergebnisses der Auswertung des Klassifikationsergebnisses;
- Ausführen der Entschlüsselung, falls das Authentifizierungssignal eine erfolgreiche Authentifizierung des Nutzers angibt;
wobei das Hardwaretoken ein Klassifikationsmodul umfasst, wobei die nutzerbezogenen Daten Bewegungsdaten einer grobmotorischen Bewegung des aktuellen Nutzers des Hardwaretokens umfassen, wobei das Klassifikationsmodul zur Klassifikation des Verhaltens des Nutzers des Hardwaretokens anhand der nutzerbezogenen Daten konfiguriert ist, wobei das Klassifikationsmodul ferner zur Erkennung eines generischen grobmotorischen Bewegungsmusters mit Hilfe von Trainingsdatensätzen einer Nutzerkohorte trainiert ist, wobei das Klassifikationsmodul durch den Prozessor des Hardwaretokens ausgeführt wird.

2. Verfahren nach Anspruch 1, wobei der Nachweis der Zugriffrechte des Nutzers (102, 160), dem das Nutzer-Computersystem (104, 162, 168) zugeordnet ist, für die entschlüsselten Metadaten (311) ein erfolgreiches Authentifizieren des Nutzers (160) durch das Hardwaretoken (103, 167) umfasst.

3. Verfahren nach einem der vorangehenden Ansprüche, wobei die verschlüsselten Metadaten (312, 324), die die Rekonstruktion der Datei (101) aus den Dateifragmenten ermöglichen, in dem Speicher des Hardwaretokens (103, 167) gespeichert und gegen einen Zugriff der Speicherdienste (SD1-SD6) gesichert sind, oder
wobei die verschlüsselten Metadaten (312), die die Rekonstruktion der Datei (101) aus den Dateifragmenten erlauben, in einem Speicher (106) des Nutzer-Computersystems (104) gespeichert und gegen einen Zugriff der Speicherdienste (SD1-SD6) gesichert sind, oder
wobei die verschlüsselten Metadaten (312, 324), die die Rekonstruktion der Datei (101) aus den Dateifragmenten erlauben, in einem Speicher (302) des Dateimanagementservers (130) gespeichert und gegen einen Zugriff der Speicherdienste (SD1-SD6) gesichert sind,
wobei nach dem erfolgreichen Authentifizieren des Nutzer-Computersystems (104, 162, 168) gegenüber dem Dateimanagementserver (130) und falls der Nutzer (160), dem das Nutzer-Computersystem (104, 162, 168) zugeordnet ist, Zugriffsrechte für die Datei (101) besitzt, zusätzlich die verschlüsselten Metadaten (312, 324) von dem Dateimanagementserver (130) empfangen werden, oder
wobei der Dateimanagementserver öffentliche Schlüssel (136, 170) einer Mehrzahl von Nutzern (102, 160) mit Nutzerprofilen (176, 178) der entsprechenden Nutzer verknüpft speichert und verwaltet, wobei das Verfahren ferner umfasst, um dem Nutzer (160), der dem asymmetrischen kryptographischen Schlüsselpaar zugeordnet ist, dessen privater Schlüssel (172) in dem Hardwaretoken (167) gespeichert ist, die verschlüsselten Metadaten (324) bereitzustellen:
- nach erfolgreichem Authentifizieren des Nutzer-Computersystems (104, 162, 168) und falls der Nutzer (160), dem das Nutzer-Computersystem (162, 168) zugeordnet ist, Zugriffsrechte für die Datei besitzt, Generieren der Metadaten (324) durch den Dateimanagementserver (130), wobei das Generieren der Metadaten (324) beinhaltet:
• Senden des öffentlichen Schlüssels (170) des Nutzers (160), dessen zugehöriger privater Schlüssel (172) auf dem Hardwaretoken (167) gespeichert ist, durch den Dateimanagementserver (130) an ein Computersystem (104), welches die Datei (101) in Dateifragmente aufgeteilt und die resultierenden Dateifragmente mit dem symmetrischen Schlüssel (139) verschlüsselt hat;
• Erstellen der Metadaten (324) durch das Computersystem (104), wobei die Metadaten (324) den symmetrischen Schlüssel (139) umfassen;
• Verschlüsseln der Metadaten (324) oder zumindest des symmetrischen Schlüssels (139) mit dem öffentlichen Schlüssel (170) des Nutzers (160) durch das Computersystem (104);
• Senden der verschlüsselten Metadaten (324) an den Dateimanagementserver (130);
• Weiterleiten der verschlüsselten Metadaten (324) durch den Dateimanagementserver (130) an das Nutzer-Computersystem (168), um dem Nutzer-Computersystem (168) das Entschlüsseln unter Verwendung des Hardwaretokens (167) zu ermöglichen.

4. Verfahren nach einem der vorangehenden Ansprüche, wobei das Hardwaretoken (103, 167) ein Sicherheitsmodul umfasst.

5. Verfahren nach einem der vorangehenden Ansprüche, wobei es sich bei dem symmetrischen Schlüssel (139) um einen zufällig für die zu verschlüsselnde Datei (101) erzeugten oder einen unter Verwendung eines Kennwerts der zu verschlüsselnden Datei erzeugten kryptographischen Schlüssel handelt.

6. Verfahren nach einem der vorangehenden Ansprüche:
- wobei die Berechtigungstoken selektiv nur für die Zugriffsanfrage zum Herunterladen der Dateifragmente (F1-F4) generiert werden und nur temporäre Gültigkeit besitzen; und/oder
- wobei die Berechtigungstoken als URLs ausgebildet sind, die jeweils einen direkten Lesezugriff auf einen durch die URL identifizierten Speicherplatz auf einem der Speichermedien (SM2, SM4-SM6) eines der Speicherdienste (SD2, SD4-SD6) ermöglicht.

7. Verfahren nach einem der vorangehenden Ansprüche, wobei ein Signierschlüssel (334) in einem geschützten Speicherbereich des Speichers (302) des Dateimanagementservers (130) gespeichert ist, wobei das Verfahren ferner umfasst:
- Bereitstellen eines dem Signierschlüssel (334) zugeordneten Signaturprüfschlüssels (441) an jeden der Speicherdienste, wobei der Signaturprüfschlüssel (441) zum Prüfen von Signaturen ausgebildet ist, welche mit dem Signierschlüssel (334) generiert sind;
- Signieren der Berechtigungstoken mit dem Signierschlüssel (334) durch den Dateimanagementserver, wobei die Berechtigungstoken in signierter Form an das Nutzer-Computersystem weitergeleitet werden,
wobei jedes der signierten Berechtigungstoken den Zugriff auf den durch das jeweilige Berechtigungstoken identifizierten Speicherplatz auf dem Speichermedium des jeweiligen Speicherdienstes unter der Voraussetzung ermöglicht, dass der Speicherdienst die Signatur als valide erkennt.

8. Verfahren nach einem der vorangehenden Ansprüche,
- wobei in dem Hardwaretoken (103, 167) und/oder dem Nutzer-Computersystem (104, 162, 168) Metadaten (312, 324) einer Mehrzahl von verteilt in den Speicherdiensten gespeicherten Dateien gespeichert sind und das Verfahren eine Verwendung der besagten Metadaten (312, 324) durch eine Client-Applikation (108) des Nutzer-Computers (104, 162, 168) zur Generierung einer clientbasierten Sicht auf die verteilt gespeicherten Dateien umfasst; und/oder
- wobei in dem Dateimanagementserver (130) Metadaten (312, 324) einer Mehrzahl von verteilt in den Speicherdiensten gespeicherten Dateien gespeichert ist und das Verfahren eine Verwendung der besagten Metadaten (312, 324) durch ein auf dem Dateimanagementserver (130) gehostetes Webportal (304) zur Generierung einer netzwerkbasierten Sicht auf die verteilt gespeicherten Dateien umfasst;
wobei die clientbasierte und/oder die netzwerkbasierte Sicht dazu konfiguriert ist, die ursprünglichen Dateinamen aus den Metadaten (312, 324) dynamisch zu rekonstruieren und auf eine Auswahl einer der verteilt gespeicherten Dateien hin eine dynamische und automatische Rekonstruktion des Dateiinhalts der ausgewählten Datei durch das Nutzer-Computersystem (104, 162, 168) oder durch ein weiteres berechtigtes Nutzer-Computersystem (104, 162, 168) zu initiieren, wobei die Speicherdienste, in welchen Fragmente der ausgewählten Datei gespeichert sind, durch die Sicht verborgen werden.

9. Verfahren nach einem der vorangehenden Ansprüche, wobei ein Mindestvertrauensniveau (310) festgelegt ist, welches ein Mindestmaß an Verlässlichkeit für das Authentifizierungsverfahren spezifiziert, mittels welchem sich das Nutzer-Computersystem (104, 162, 168) des Nutzers (102, 160) gegenüber dem Dateimanagementserver (130) authentifizieren muss, um auf die in den Speichermedien der identifizierten Speicherdienste gespeicherten Datei zugreifen zu dürfen, wobei das Verfahren ferner umfasst:
- Prüfen durch den Dateimanagementserver (130), ob das zum Authentifizieren des Nutzer-Computersystems (104, 162, 168) gegenüber dem Dateimanagementserver (130) verwendete Authentifizierungsverfahren hinreichend verlässlich ist, um das für den Nutzer festgelegte Mindestvertrauensniveau (310) für den angeforderten Zugriff zu erfüllen;
wobei die Anforderung des Berechtigungstokens nur dann von dem Dateimanagementserver (130) an die Speicherdienste (SD1-SD6) gesendet wird, falls das zum Authentifizieren des Nutzer-Computersystems (104, 162, 168) gegenüber dem Dateimanagementserver (130) verwendete Authentifizierungsverfahren ein Vertrauensniveau hat, welches mindestens so hoch ist wie das festgelegte Mindestvertrauensniveau (310).

10. Verfahren nach einem der vorangehenden Ansprüche, ferner umfassend:
- Authentifizieren des Hardwaretokens (103, 167) gegenüber dem Dateimanagementserver (130),
wobei festgelegt ist, welche Hardwaretoken (103, 167) allein berechtigt sind, eine Entschlüsselung der verteilt in den Speichermedien (SM1-SM6) der Speicherdienste (SD1-SD6) gespeicherten Datei (101) zu ermöglichen;
wobei die Anforderung des Berechtigungstokens nur unter der Voraussetzung von dem Dateimanagementserver (130) an die Speicherdienste der Auswahl gesendet wird, dass das Hardwaretoken (103, 167) zur Entschlüsselung berechtigt ist.

11. Verfahren nach einem der vorangehenden Ansprüche, wobei die Datei (101) von dem Nutzer-Computersystem (102) auf die nichtflüchtigen Speichermedien (SM1-SM6) der Speicherdienste (SD1-SD6) verteilt gespeichert wurde, wobei das verteilte Speichern umfasst:
- Verschlüsseln der verteilt zu speichernden Datei (101) mit dem symmetrischen Schlüssel (139);
- automatisches Generieren des Verteilungsplans (416), welcher Instruktionen zum Generieren von Dateifragmenten (F1-F4) der Datei (101) mittels des Fehlerkorrekturverfahrens (FKV) und Identifikatoren der mehreren Speicherdiensten (SD1-SD6), in deren nichtflüchtigen Speichermedien (SM1-SM6) die generierten Dateifragmente gespeichert werden sollen, enthält, durch den Dateimanagementserver (130) oder durch das Nutzer-Computersystem (104);
- Durchführen des in dem Verteilungsplan (416) spezifizierten Fehlerkorrekturverfahrens (FKV) zur Generierung der Dateifragmente (F1-F4) aus der Datei (101) durch das Nutzer-Computersystem (104), wobei zumindest eines der Dateifragmente Fehlerkorrekturbits beinhaltet;
- Senden einer Berechtigungsanfrage (420) des Nutzer-Computersystems zum Speichern der Dateifragmente (F1-F4) in den im Verteilungsplan (416) identifizierten mehreren Speicherdiensten (SD2, SD4-SD6) an den Dateimanagementserver (130) über ein Netzwerk (178);
- in Antwort auf den Empfang der Berechtigungsanfrage, Anfordern eines Berechtigungstokens durch den Dateimanagementserver (130) von jedem der in dem Verteilungsplan (416) identifizierten mehreren Speicherdiensten und Weiterleiten (610) der in Antwort auf die Anforderung erhaltenen Berechtigungstoken (428) durch den Dateimanagementserver (130) an das Nutzer-Computersystem (104); und
- Speichern der generierten Dateifragmente (F1-F4) in den Speichermedien (SM2, SM4-SM6) der identifizierten Speicherdienste (SD2, SD4-SD6) über das Netzwerk (178) mittels Berechtigungsnachweis durch die Berechtigungstoken unter Umgehung des Dateimanagementservers (130) durch das Nutzer-Computersystem (104).

12. Verfahren nach Anspruch 11, ferner umfassend:
- Bereitstellen einer Konfiguration (175), die Anforderungen (308) des Nutzers (102) hinsichtlich der Geschwindigkeit, der geographischen Lage, der Sicherheit und/oder der Kosten einer für die Speicherung von Daten zu nutzenden IT-Infrastruktur sowie Anforderungen hinsichtlich der Verfügbarkeit der zu speichernden Daten enthält;
- Bereitstellen eines Speicherdienst-Katalogs (329), der Spezifikationen einer Mehrzahl von zur Verfügung stehenden Speicherdiensten (SD1-SD6) umfasst, wobei die Spezifikation jedes der Speicherdienste Angaben hinsichtlich der Geschwindigkeit, der geographischen Lage, der Sicherheit und/oder der Kosten einer für die Speicherung der Daten genutzten IT-Infrastruktur (180-192) des Speicherdienstes enthalten;
- um den Verteilungsplan (416) zu generieren, automatische Auswertung der Konfiguration und des Speicherdienst-Katalogs, um in Abhängigkeit von den Spezifikationen der verfügbaren Speicherdienste und in Abhängigkeit der Anforderungen (308) des Nutzers ein Fehlerkorrekturverfahren aus einer Mehrzahl von Fehlerkorrekturverfahren zu identifizieren, das den Anforderungen hinsichtlich der Verfügbarkeit der zu speichernden Daten genügt und um die im Verteilungsplan identifizierten mehreren Speicherdienste aus der Mehrzahl der zur Verfügung stehenden Speicherdienste zu identifizieren, die zur Speicherung der Datei gemäß den nutzerspezifischen Anforderungen hinsichtlich der Geschwindigkeit, geographischen Lage, Sicherheit und/oder Kosten der für die Speicherung von Daten zu nutzenden IT-Infrastruktur geeignet sind;
- Verwenden des identifizierten Fehlerkorrekturverfahrens als das Fehlerkorrekturverfahren (FKV) des Verteilungsplans (416), und/oder
ferner umfassend:
- Authentifizieren des Nutzer-Computersystems (104) gegenüber dem Dateimanagementserver (130);
- auf den Empfang der Berechtigungsanfrage des Nutzer-Computersystems (104) zur Speicherung der Dateifragmente hin, Prüfen durch den Dateimanagementserver (130) ob der Nutzer (102), dem das Nutzer-Computersystem (104) zugeordnet ist, Zugriffsrechte zum Speichern der Datei (101) mittels der identifizierten Speicherdienste (SD2, SD4-SD6) besitzt;
wobei die Anforderung des Berechtigungstokens durch den Dateimanagementserver (130) unter der Voraussetzung erfolgt, dass das Authentifizieren des Nutzer-Computersystems (104) erfolgreich ist und dass der Nutzer (102) die Zugriffsrechte besitzt, und/oder
ferner umfassend:
- Generieren der Metadaten (311), durch das Nutzer-Computersystem (104);
- Verschlüsseln der Metadaten (312) oder zumindest des symmetrischen Schlüssels (139) mit dem öffentlichen Schlüssel (138), dessen zugeordneter privater Schlüssel (136) in dem Hardwaretoken (103) gespeichert ist,
- Speichern der verschlüsselten Metadaten (312) in dem Hardwaretoken (103), in dem Nutzer-Computersystem (104) und/oder auf dem Dateimanagementserver (130), und/oder
ferner umfassend:
- Generieren verkürzter Metadaten (312), durch das Nutzer-Computersystem (104), wobei die verkürzten Metadaten aus den Metadaten (312) durch Entfernen des symmetrischen Schlüssels (319) generiert werden;
- Übertragen der verkürzten Metadaten an den Dateimanagementserver (130); und
- Verwenden der verkürzten Metadaten durch den Dateimanagementserver (130) zur Kontrolle des Zugriffs auf die verteilt in den Speichermedien (SM1-SM6) der Speicherdienste (SD1-SD6) gespeicherten Datei (101), und/oder
ferner umfassend:
- Berechnen eines Kennwerts der gesamten Datei (101) durch das Nutzer-Computersystem (104);
- Verwenden des Kennwerts als symmetrischer Schlüssel (139) zur Verschlüsselung der Datei (101) durch das Nutzer-Computersystem (104).

13. Verfahren nach einem der Ansprüche 11 bis 12,
- wobei das Ermitteln des Fehlerkorrekturverfahrens, welches den Anforderungen des Nutzers hinsichtlich der Verfügbarkeit der Datei genügt, ein Ermitteln der zu erwartenden Gesamtgröße aller durch das Fehlerkorrekturverfahren zu generierenden Dateifragmente beinhaltet, wobei für jedes der zu generierenden Dateifragmente ein Speicherdienst identifiziert wird, welcher gemäß dessen Angaben den Anforderungen hinsichtlich der Geschwindigkeit, geographischen Lage, Sicherheit und/oder Kosten unter Berücksichtigung der zu erwartenden Gesamtgröße genügt; und/oder
- wobei falls das ermittelte Fehlerkorrekturverfahren die Generierung von Dateifragmenten bewirken würde, deren Gesamtgröße es nicht ermöglicht, eine hinreichende Anzahl von Speicherdiensten zu identifizieren, die gemäß deren Angaben den Anforderungen hinsichtlich der Geschwindigkeit, Sicherheit und/oder Kosten unter Berücksichtigung der Gesamtgröße genügen, automatisch eine Ermittlung eines anderen Fehlerkorrekturverfahrens erfolgt, welches dazu konfiguriert ist, Dateifragmente zu erzeugen, deren zu erwartende Gesamtgröße hinreichend klein ist, sodass für jedes zu generierende Dateifragment ein Speicherdienst identifiziert werden kann welcher gemäß seiner Angaben den Anforderungen hinsichtlich der Geschwindigkeit, geographischen Lage, Sicherheit und/oder Kosten unter Berücksichtigung der zu erwartenden Gesamtgröße genügt; und/oder
- wobei, um Anforderungen des Nutzers im Hinblick auf eine maximale Dauer des Datentransfers zur Übertragung der Datei über das Netzwerk zu erfüllen, das ermittelte Fehlerkorrekturverfahren automatisch so konfiguriert wird, dass durch dieses eine hinreichend große Anzahl der generierten Dateifragmente generiert wird, sodass bei paralleler Übertragung dieser Dateifragmente zu den oder von den mehreren in dem Verteilungsplan identifizierten Speicherdiensten die Übertragungszeit für alle Dateifragmente unterhalb der maximalen Dauer liegt.

14. Computerlesbares Speichermedium (106, 302) mit computerlesbaren Instruktionen, welche bei Ausführung durch einen Prozessor (135, 342) den Prozessor zur Durchführung des Verfahrens nach einem der vorangehenden Ansprüche veranlassen.

15. Computerimplementiertes Datenverarbeitungssystem, welches ein Nutzer-Computersystem (104, 162, 168) und ein Hardwaretoken umfasst, wobei das Nutzer-Computersystem (104, 162, 168) einen Prozessor (135), eine Netzwerkschnittstelle (132.2) zur operativen Kopplung des Nutzer-Computersystems (104, 162, 168) an eine Mehrzahl von Speicherdiensten (SD1-SD6) und an einen Dateimanagementserver (130) über ein Netzwerk (178) umfasst, wobei das Nutzer-Computersystem (104, 162, 168) eine Schnittstelle (131.2) zur operativen Kopplung des Nutzer-Computersystems (104, 162, 168) an einen Hardwaretoken (103, 167) umfasst, wobei das Nutzer-Computersystem (104, 162, 168) ein Speichermedium (106) mit einer von dem Prozessor (135) ausführbaren Client-Applikation (108) umfasst, wobei die Client-Applikation (108) zur Ausführung eines Verfahrens zum Verarbeiten einer Datei (101) konfiguriert ist,
wobei die Datei (101) mit einem symmetrischen Schlüssel (139) verschlüsselt ist und gemäß einem Verteilungsplans (416) mittels eines Fehlerkorrekturverfahrens (FKV) in Dateifragmente (F1-F4) aufgeteilt ist, wobei die resultierenden Dateifragmente (F1-F4) auf nichtflüchtigen Speichermedien (SM1-SM6) der Speicherdienste (SD1-SD6) verteilt gespeichert sind, wobei Metadaten (312, 324), welche der Datei (101) zugeordnet sind, den symmetrische Schlüssel (139) umfassen, der eine Entschlüsselung der mit diesem symmetrischen Schlüssel (139) verschlüsselten Datei (101) ermöglicht, wobei die Metadaten (312, 324) oder zumindest der symmetrische Schlüssel (139) mit einem öffentlichen Schlüssel (136, 170) verschlüsselt sind, wobei ein privater Schlüssel (138, 172), der mit dem öffentlichen Schlüssel (136, 170) ein asymmetrisches kryptographisches Schlüsselpaar bildet, in einem geschützten Speicherbereich (804) eines Speichers (802) des Hardwaretokens (103, 167) gespeichert ist, wobei das asymmetrische kryptographische Schlüsselpaar einem Nutzer (102, 160) zugeordnet ist,
wobei das Verfahren umfasst:
- Senden einer Zugriffsanfrage eines Nutzer-Computersystems (104, 162, 168) zum Zugriff auf die verteilt gespeicherte Datei an einen Dateimanagementserver (130);
- Authentifizieren des Nutzer-Computersystems (104, 162, 168) gegenüber dem Dateimanagementserver (130);
- nach erfolgreichem Authentifizieren des Nutzer-Computersystems (104, 162, 168) und falls der Nutzer (102, 160), dem das Nutzer-Computersystem (104, 162, 168) zugeordnet ist, Zugriffsrechte für die Datei (101) besitzt, Empfangen eines Berechtigungstokens von jedem der Speicherdienste zumindest einer Auswahl der Speicherdienste (SD1-SD6), in deren nichtflüchtigen Speichermedien (SM1-SM6) die Dateifragmente (F1-F4) gespeichert sind, über den Dateimanagementserver (130), wobei die von der Auswahl der Speicherdienste umfassten Dateifragmente (F1-F4) hinreichend für eine Rekonstruktion der Datei (101) sind,
wobei die Berechtigungstoken dem Nutzer-Computersystem (104, 162, 168) den angeforderten Zugriff auf die durch die Speicherdienste jeweils gespeicherten Dateifragmente unter Umgehung des Dateimanagementservers (130) ermöglichen;
- Herunterladen der Dateifragmente (F1-F4) von den einzelnen Speicherdiensten unter Verwendung der Berechtigungstoken und unter Umgehung des Dateimanagementservers (130);
- Senden einer Entschlüsselungsanfrage des Nutzer-Computersystems (104, 162, 168) zum Zugriff auf die entschlüsselten Metadaten (311) an das Hardwaretoken (103, 167);
- Authentifizieren des Nutzer-Computersystems (104, 162, 168) gegenüber dem Hardwaretoken (103, 167);
- nach erfolgreichem Authentifizieren des Nutzer-Computersystems (104, 162, 168) und falls der Nutzer (160), dem das Nutzer-Computersystem (104, 162, 168) zugeordnet ist, Zugriffsrechte für die entschlüsselten Metadaten (311) besitzt, Empfangen der durch das Hardwaretoken (103, 167) mit dem privaten Schlüssel (138, 172) entschlüsselten Metadaten (311);
- Rekonstruieren der verschlüsselten Datei (101) aus den Dateifragmente (F1-F4) unter Verwendung der Metadaten (311);
- Entschlüsseln der verschlüsselten Datei (101) mit dem von den Metadaten (311) umfassten symmetrischen Schlüssel (319);
wobei es sich bei dem Hardwaretoken (103, 167) um ein tragbares elektronisches Gerät handelt, welches einen Prozessor (806), eine Schnittstelle (131.1) zur operativen Kopplung des Hardwaretokens (104, 162, 168) an das Nutzer-Computersystem (104, 162, 168) und einen Speicher (802) mit einem geschützten Speicherbereich (804) umfasst, in dem der private Schlüssel (136, 170) des asymmetrisches kryptographisches Schlüsselpaars gespeichert ist, wobei der Speicher ferner eine kryptographische Applikation (808) zum Ausführen eines kryptographischen Verfahrens umfasst, wobei es sich bei dem geschützten Speicherbereich um einen Bereich des Speichers des Hardwaretokens handelt, auf den ein Zugriff nur über den Prozessor des Hardwaretokens möglich ist, wobei der Zugriff von dem mit dem Speicher gekoppelten Prozessor nur dann ermöglich wird, wenn eine hierzu erforderliche Bedingung erfüllt ist, wobei es sich bei der zu erfüllenden Bedingung um eine erfolgreiche Authentifizierung handelt,
wobei das kryptographische Verfahren umfasst:
- Empfangen der Entschlüsselungsanfrage von dem Nutzer-Computersystem (104, 162, 168);
- Entschlüsseln der Metadaten (312, 324) mit dem privaten Schlüssel (138, 172);
- Senden der entschlüsselten Metadaten (311) an das Nutzer-Computersystem (104, 162, 168);
wobei eine Verwendung des privaten Schlüssels die Authentifizierung mittels einer verhaltensbasierten Authentifizierung des Nutzers gegenüber dem Hardwaretoken voraussetzt, wobei das Hardwaretoken mindestens einen Sensor zur Erfassung von nutzerbezogenen Daten aufweist, welche Informationen bezüglich des Verhaltens des Nutzers umfassen, wobei das Verfahren zur Authentifizierung des Nutzers des Hardwaretokens mittels der verhaltensbasierten Authentifizierung die folgenden Schritte umfasst:
- Generieren mindestens eines Klassifikationsergebnisses unter Verwendung der nutzerbezogenen Daten für die verhaltensbasierte Authentifizierung;
- Auswerten des mindestens einen Klassifikationsergebnisses, um den Nutzer zu authentifizieren, wobei das Auswerten ein Prüfen umfasst, ob das Klassifikationsergebnis ein vorgegebenes Prüfungskriterium erfüllt, wobei eine erfolgreiche Authentifizierung ein erfüllen des Prüfungskriteriums umfasst;
- Erzeugen eines Authentifizierungssignals aufgrund des Ergebnisses der Auswertung des Klassifikationsergebnisses;
- Ausführen der Entschlüsselung, falls das Authentifizierungssignal eine erfolgreiche Authentifizierung des Nutzers angibt;
wobei das Hardwaretoken ein Klassifikationsmodul umfasst, wobei die nutzerbezogenen Daten Bewegungsdaten einer grobmotorischen Bewegung des aktuellen Nutzers des Hardwaretokens umfassen, wobei das Klassifikationsmodul zur Klassifikation des Verhaltens des Nutzers des Hardwaretokens anhand der nutzerbezogenen Daten konfiguriert ist, wobei das Klassifikationsmodul ferner zur Erkennung eines generischen grobmotorischen Bewegungsmusters mit Hilfe von Trainingsdatensätzen einer Nutzerkohorte trainiert ist, wobei das Klassifikationsmodul durch den Prozessor des Hardwaretokens ausgeführt wird.

16. Computerimplementiertes Datenverarbeitungssystem nach Anspruch 15, welches ferner einen Dateimanagementserver (130) umfasst, wobei der Dateimanagementserver (130) einen Prozessor (342), eine Netzwerkschnittstelle (132.1) zur operativen Kopplung des Dateimanagementservers (130) mit dem Nutzer-Computersystem (104, 162, 168) und mit der Mehrzahl von Speicherdiensten (SD1-SD6) über das Netzwerk (178), wobei der Dateimanagementserver (130) ein Speichermedium (302) mit einer von dem Prozessor (342) ausführbaren Dateimanagement-Applikation (304) umfasst, wobei die Dateimanagement-Applikation (304) zur Ausführung folgenden Verfahrens konfiguriert ist:
- Empfang einer Zugriffsanfrage eines Nutzer-Computersystems (104, 162, 168) zum Zugriff auf die verteilt gespeicherte Datei (101) an den Dateimanagementserver (130), wobei der Dateimanagementserver (130) keinen Speicherdienst bereitstellt;
- Authentifizieren des Nutzer-Computersystems (104, 162, 168); und
- in Antwort auf den Empfang der Zugriffsanfrage, falls das Authentifizieren erfolgreich ist und der Nutzer (102, 160), dem das Nutzer-Computersystem (104, 162, 168) zugeordnet ist, Zugriffsrechte für die Datei (101) besitzt, Senden der Berechtigungstoken von jedem der Speicherdienste zumindest der Auswahl der Speicherdienste, in deren nichtflüchtigen Speichermedien (SM1-SM6) die Dateifragmente (F1-F4) gespeichert sind, wobei die von der Auswahl der Speicherdienste umfassten Dateifragmente (F1-F4) hinreichend für eine Rekonstruktion der Datei (101) sind, wobei die Berechtigungstoken dem Nutzer-Computersystem (104, 162, 168) den angeforderten Zugriff auf die durch die Speicherdienste jeweils gespeicherten Dateifragmente unter Umgehung des Dateimanagementservers (130) ermöglichen.

## Claims

1. A method for processing a file (101), wherein the file (101) is encrypted using a symmetric key (139) and is divided in accordance with a distribution plan (416) by means of an error correction process (ECP) into file fragments (F1-F4), wherein the resulting file fragments (F1-F4) are stored in distributed fashion on non-volatile storage media (SM1-SM6) of a plurality of storage services (SD1-SD6), wherein metadata (312, 324) which are associated with the file (101) and enable the file (101) to be reconstructed from the file fragments (F1-F4) comprise the symmetric key (139) enabling the encrypted file (101) to be decrypted, wherein the metadata (312, 324) or at least the symmetric key (139) are encrypted using a public key (136, 170), wherein a private key (138, 172), which together with the public key (136, 170) forms an asymmetric cryptographic key pair and enables the encrypted metadata (312, 324) to be decrypted, is stored in a protected memory area (804) of a memory (802) of a hardware token (103), wherein the asymmetric cryptographic key pair is associated with a user (102, 160), wherein the hardware token (103, 167) is a portable electronic device which also comprises a processor (806) and an interface (131.1) for operative coupling of the hardware token (104, 162, 168) to a user computer system (104, 162, 168), wherein the protected memory area is an area of the memory of the hardware token which is accessible only via the processor of the hardware token, wherein the access by the processor coupled to the memory is possible only when a condition necessary for this purpose is satisfied, wherein the condition to be satisfied is a successful authentication,
wherein the method comprises the steps of:
- sending, to a file management server (130), an access request from the user computer system (104, 162, 168) for access to the file (101) stored in distributed fashion;
- authenticating the user computer system (104, 162, 168) to the file management server (130);
- following successful authentication of the user computer system (104, 162, 168) and if the user (102) 160) with which the user computer system (104, 162, 168) is associated has access rights for the file (101), receiving, via the file management server (130), an authorisation token from each of the storage services of at least a selection of the storage services (SD1-SD6) in whose non-volatile storage media (SM1-SM6) the file fragments (F1-F4) are stored, wherein the file fragments (F1-F4) comprised by the selection of the storage services are sufficient for reconstruction of the file (101),
wherein the authorisation tokens enable the user computer system (104, 162, 168) to obtain the requested access to the file fragments stored by the storage services, with bypassing of the file management server (130);
- downloading the file fragments (F1-F4) from the individual storage services with use of the authorisation tokens and with bypassing of the file management server (130);
- sending, to the hardware token (103, 167), a decryption request from the user computer system (104, 162, 168) for access to the decrypted metadata (311);
- authenticating the user computer system (104, 162, 168) to the hardware token (103, 167);
- following successful authentication of the user computer system (104, 162, 168) and if the user (160) with whom the user computer system (104, 162, 168) is associated has access rights to the decrypted metadata (311), receiving the metadata (311) decrypted by the hardware token (103, 167) with the private key (138, 172), wherein the transfer of the decrypted metadata from the hardware token to the user computer system is cryptographically secured by means of end-to-end encryption;
- reconstructing the encrypted file (101) from the file fragments (F1-F4) with use of the metadata (311);
- decrypting the encrypted file (101) using the symmetric key (319) comprised by the metadata (311),
wherein use of the private key presupposes the authentication by means of a behaviour-based authentication of the user to the hardware token, wherein the hardware token has at least one sensor for detecting user-related data comprising information regarding the behaviour of the user, wherein the process for authenticating the user of the hardware token by means of the behaviour-based authentication comprises the following steps:
- generating at least one classification result with use of the user-related data for the behaviour-based authentication;
- analysing the at least one classification result in order to authenticate the user, wherein the analysis includes inspecting whether the classification result satisfies a predefined inspection criterion, wherein a successful authentication comprises satisfaction of the assessment criterion;
- generating an authentication signal on account of the result of the analysis of the classification result;
- performing the decryption if the authentication signal indicates a successful authentication of the user;
wherein the hardware token comprises a classification module, wherein the user-related data include movement data of a gross motor movement of the current user of the hardware token, wherein the classification module is configured to classify the behaviour of the user of the hardware token on the basis of the user-related data, wherein the classification module is also trained to identify a generic gross motor movement pattern with the aid of training datasets from a user cohort, wherein the classification module is run by the processor of the hardware token.

2. The method according to claim 1, wherein, for the decrypted metadata (311), the verification of the access rights of the user (102, 160) with whom the user computer system (104, 162, 168) is associated comprises a successful authentication of the user (160) by the hardware token (103, 167).

3. The method according to one of the preceding claims, wherein the encrypted metadata (312, 324) enabling the reconstruction of the file (101) from the file fragments are stored in the memory of the hardware token (103, 167) and are secured against access of the storage services (SD1-SD6), or
wherein the encrypted metadata (312) allowing the reconstruction of the file (101) from the file fragments are stored in a memory (106) of the user computer system (104) and are secured against access of the storage services (SD1-SD6), or
wherein the encrypted metadata (312, 324) allowing the reconstruction of the file (101) from the file fragments are stored in a memory (302) of the file management server (130) and are secured against access of the storage services (SD1-SD6),
wherein, following the successful authentication of the user computer system (104, 162, 168) to the file management server (130) and if the user (160) with whom the user computer system (104, 162, 168) is associated has access rights for the file (101), the encrypted metadata (312, 324) are additionally received from the file management server (130), or wherein the file management server stores and manages, in a linked fashion, public keys (136, 170) of a plurality of users (102, 160) with user profiles (176, 178) of the corresponding user, wherein the method, in order to provide the encrypted metadata (324) to the user (160) with whom the asymmetric cryptographic key pair whose private key (172) is stored in the hardware token (167) is associated, also comprises the following steps:
- following successful authentication of the user computer system (104, 162, 168) and if the user (160) with whom the user computer system (162, 168) is associated has access rights for the file, generating the metadata (324) by the file management server (130), wherein the generation of the metadata (324) includes:
• sending, by the file management server (130), the public key (170) of the user (160) whose corresponding private key (172) is stored on the hardware token (167) to a computer system (104) which has divided the file (101) into file fragments and has encrypted the resulting file fragments using the symmetric key (139) ;
• creating the metadata (324) by the computer system (104), wherein the metadata (324) comprise the symmetric key (139) ;
• encrypting the metadata (324) or at least the symmetric key (139) with the public key (170) of the user (160) by the computer system (104);
• sending the encrypted metadata (324) to the file management server (130);
• forwarding the encrypted metadata (324) by the file management server (130) to the user computer system (168) in order to allow the user computer system (168) to perform the decryption with use of the hardware token (167).

4. The method according to one of the preceding claims, wherein the hardware token (103, 167) comprises a security module.

5. The method according to one of the preceding claims, wherein the symmetric key (139) is a cryptographic key generated randomly for the file (101) to be encrypted or is a cryptographic key generated with use of a characteristic value of the file to be encrypted.

6. The method according to one of the preceding claims:
- wherein the authorisation tokens are generated selectively only for the access request for the downloading of the file fragments (F1-F4) and have only temporary validity; and/or
- wherein the authorisation tokens are configured as URLs which each allow direct read access to a storage space identified by the URL on one of the storage media (SM2, SM4-SM6) of one of the storage services (SD2, SD4-SD6).

7. The method according to one of the preceding claims, wherein a signing key (334) is stored in a protected memory area of the memory (302) of the file management server (130), wherein the method further comprises the steps of:
- providing a signature inspection key (441), associated with the signing key (334), at each of the storage services, wherein the signature inspection key (441) is designed to inspect signatures generated using the signing key (334);
- signing the authorisation tokens with the signing key (334) by the file management server, wherein the authorisation tokens are forwarded in signed form to the user computer system;
wherein each of the signed authorisation tokens allows access to the storage space, identified by the relevant authorisation token, on the storage medium of the relevant storage service on the precondition that the storage service identifies the signature as being valid.

8. The method according to one of the preceding claims,
- wherein metadata (312, 324) of a plurality of files stored in distributed fashion in the storage services are stored in the hardware token (103, 167) and/or the user computer system (104, 162, 168) and the method comprises use of said metadata (312, 324) by a client application (108) of the user computer (104, 162, 168) for generation of a client-based view of the files stored in distributed fashion; and/or
- wherein metadata (312, 324) of a plurality of files stored in distributed fashion in the storage services are stored in the file management server (130) and the method comprises use of said metadata (312, 324) by a web portal (304) hosted on the file management server (130) for generation of a network-based view of the files stored in distributed fashion;
wherein the client-based and/or the network-based view is configured to reconstruct the original file names dynamically from the metadata (312, 324) and, following a selection of one of the files stored in distributed fashion, to initiate a dynamic and automatic reconstruction of the file content of the selected file by the user computer system (104, 162, 168) or by a further authorised user computer system (104, 162, 168), wherein the storage services in which fragments of the selected file are stored are hidden from the view.

9. The method according to one of the preceding claims, wherein a minimum trust level (310) is defined and specifies a minimum measure of reliability for the authentication process by means of which the user computer system (104, 162, 168) of the user (102, 160) must be authenticated to the file management server (130) in order to be able to access the file stored in the storage media of the identified storage services, wherein the method further comprises the steps of:
- inspecting, by the file management server (130), whether the authentication process used to authenticate the user computer system (104, 162, 168) to the file management server (130) is sufficiently reliable to satisfy the minimum trust level (310), defined for the user, for the requested access; wherein the request of the authorisation token is then sent from the file management server (130) to the storage services (SD1-SD6) if the authentication process used to authenticate the user computer system (104, 162, 168) to the file management server (130) has a trust level which is at least as high as the defined minimum trust level (310).

10. The method according to one of the preceding claims, further comprising the steps of:
- authenticating the hardware token (103, 167) to the file management server (130), wherein it is defined which hardware tokens (103, 167) are alone authorised to allow decryption of the file (101) stored in distributed fashion in the storage media (SM1-SM6) of the storage services (SD1-SD6); wherein the request of the authorisation token is sent from the file management server (130) to the storage services within the selection only on the precondition that the hardware token (103, 167) is authorised for decryption.

11. The method according to one of the preceding claims, wherein the file (101) was stored by the user computer system (102) in distributed fashion on the non-volatile storage media (SM1-SM6) of the storage services (SD1-SD6), wherein the storing in distributed fashion comprises the steps of:
- encrypting the file (101) to be stored in distributed fashion using the symmetric key (139) ;
- automatically generating, by the file management server (130) or by the user computer system (104), the distribution plan (416), which contains instructions for generating file fragments (F1-F4) of the file (101) by means of the error correction process (ECP) and identifiers of the plurality of storage services (SD1-SD6) in whose non-volatile storage media (SM1-SM6) the generated file fragments are to be stored;
- performing the error correction process (ECP) specified in the distribution plan (416) in order to generate the file fragments (F1-F4) from the file (101) by the user computer system (104), wherein at least one of the file fragments contains error correction bits;
- sending, from the user computer system to the file management server (130) via a network (178), an authorisation request (420) to store the file fragments (F1-F4) in the plurality of storage services (SD2, SD4-SD6) identified in the distribution plan (416);
- in response to the receipt of the authorisation request, requesting an authorisation token by the file management server (130) from each of the plurality of storage services identified in the distribution plan (416) and forwarding (610) the authorisation tokens (428) obtained in the response to the request by the file management server (130) to the user computer system (104); and
- storing the generated file fragments (S1-S4) in the storage media (SM2, SM4-SM6) of the identified storage services (SD2, SD4-SD6) via the network (178) by means of authorisation verification by the authorisation tokens, with bypassing of the file management server (130) by the user computer system (104).

12. The method according to claim 11, further comprising the steps of:
- providing a configuration (175) which contains requests (308) of the user (102) in respect of the speed, the geographical location, the security and/or the costs of an IT infrastructure to be used for the storing of data as well as requests in respect of the availability of the data to be stored;
- providing a storage service catalogue (329), which comprises specifications of a plurality of available storage services (SD1-SD6), wherein the specification of each of the storage services contains details with regard to the speed, the geographical location, the security and/or the costs of an IT infrastructure (180-192) of the storage service used for the storing of the data;
- in order to generate the distribution plan (416), automatically analysing the configuration and the storage service catalogue in order to identify, depending on the specifications of the available storage services and depending on the requirements (308) of the user, an error correction process from a plurality of error correction processes that satisfies the requirements in respect of the availability of the data to be stored and in order to identify, from the multiple available storage services, the plurality of storage services identified in the distribution plan that are suitable for storing the file in accordance with the user-specific requirements in respect of the speed, geographical location, security and/or costs of the IT infrastructure to be used for the storing of data;
- using the identified error correction process as the error correction process (ECP) of the distribution plan (416), and/or
further comprising the steps of:
- authenticating the user computer system (104) to the file management server (130);
- upon receipt of the authorisation request from the user computer system (104) to store the file fragments, inspecting, by the file management server (130), whether the user (102) with whom the user computer system (104) is associated has access rights in order to store the file (101) by means of the identified storage services (SD2, SD4-SD6); wherein the request of the authorisation token is made by the file management server (130) on the precondition that the authentication of the user computer system (104) is successful and that the user (102) has the access rights, and/or
further comprising the steps of:
- generating the metadata (311) by the user computer system (104);
- encrypting the metadata (312) or at least the symmetric key (139) using the public key (138) whose associated private key (136) is stored in the hardware token (103),
- storing the encrypted metadata (312) in the hardware token (103), in the user computer system (104) and/or on the file management server (130), and/or
further comprising the steps of:
- generating shortened metadata (312) by the user computer system (104), wherein the shortened metadata are generated from the metadata (312) by removal of the symmetric key (319);
- transferring the shortened metadata to the file management server (130); and
- using the shortened metadata by the file management server (130) to control access to the file (101) stored in distributed fashion in the storage media (SM1-SM6) of the storage services (SD1-SD6), and/or
further comprising the steps of:
- calculating a characteristic value of the overall file (101) by the user computer system (104);
- using the characteristic value as symmetric key (139) to encrypt the file (101) by the user computer system (104).

13. The method according to one of claims 11 to 12,
- wherein the determination of the error correction process which satisfies the requirements of the user in respect of the availability of the file includes a determination of the anticipated overall size of all file fragments to be generated by the error correction process, wherein a storage service whose details satisfy the requirements in respect of the speed, geographical location, security and/or costs under consideration of the anticipated overall size is identified for each of the file fragments to be generated; and/or
- wherein, if the determined error correction process would result in the generation of file fragments whose overall size does not allow identification of a sufficient number of storage services whose details satisfy the requirements in respect of the speed, security and/or costs under consideration of the overall size, another error correction process is automatically determined and is configured to generate file fragments whose anticipated overall size is sufficiently small so that, for each file fragment to be generated, a storage service may be identified whose details satisfy the requirements in respect of the speed, geographical location, security and/or costs under consideration of the anticipated overall size; and/or
- wherein, in order to satisfy requirements of the user in respect of a maximum duration of the data transfer in order to transfer the file over the network, the determined error correction process is automatically configured such that said process generates a sufficiently large number of the generated file fragments so that, with parallel transfer of these file fragments to the or from the plurality of storage services identified in the distribution plan, the transfer time for all file fragments lies below the maximum duration.

14. A computer-readable storage medium (106, 302) with computer-readable instructions which, when run by a processor (135, 342), prompt the processor to carry out the method according to one of the preceding claims.

15. A computer-implemented data processing system which comprises a user computer system (104, 162, 168) and a hardware token, wherein the user computer system (104, 162, 168) comprises a processor (135), a network interface (132.2) for operative coupling of the user computer system (104, 162, 168) to a plurality of storage services (SD1-SD6) and to a file management server (130) via a network (178), wherein the user computer system (104, 162, 168) comprises an interface (131.2) for the operative coupling of the user computer system (104, 162, 168) to a hardware token (103, 167), wherein the user computer system (104, 162, 168) comprises a storage medium (106) with a client application (108) which may be run by the processor (135), wherein the client application (108) is configured to execute a method for processing a file (101),
wherein the file (101) is encrypted using a symmetric key (139) and is divided in accordance with a distribution plan (416) by means of an error correction process (ECP) into file fragments (F1-F4), wherein the resulting file fragments (F1-F4) are stored in distributed fashion on non-volatile storage media (SM1-SM6) of the storage services (SD1-SD6), wherein metadata (312, 324) which are associated with the file (101) comprise the symmetric key (139) enabling the file (101) encrypted with this symmetric key (139) to be decrypted, wherein the metadata (312, 324) or at least the symmetric key (139) are encrypted using a public key (136, 170), wherein a private key (138, 172), which together with the public key (136, 170) forms an asymmetric cryptographic key pair, is stored in a protected memory area (804) of a memory (802) of the hardware token (103, 167), wherein the asymmetric cryptographic key pair is associated with a user (102, 160),
wherein the method comprises the steps of:
- sending, to a file management server (130), an access request from the user computer system (104, 162, 168) for access to the file stored in distributed fashion;
- authenticating the user computer system (104, 162, 168) to the file management server (130);
- following successful authentication of the user computer system (104, 162, 168) and if the user (102, 160) with which the user computer system (104, 162, 168) has access rights for the file (101), receiving, via the file management server (130), an authorisation token from each of the storage services of at least a selection of the storage services (SD1-SD6) in whose non-volatile storage media (SM1-SM6) the file fragments (F1-F4) are stored, wherein the file fragments (F1-F4) comprised by the selection of the storage services are sufficient for a reconstruction of the file (101),
wherein the authorisation tokens allow the user computer system (104, 162, 168) to obtain the requested access to the file fragments stored by the storage services, with bypassing of the file management server (130);
- downloading the file fragments (F1-F4) from the individual storage services with use of the authorisation tokens and with bypassing of the file management server (130);
- sending, to the hardware token (103, 167), a decryption request from the user computer system (104, 162, 168) in order to access the decrypted metadata (311);
- authenticating the user computer system (104, 162, 168) to the hardware token (103, 167);
- following successful authentication of the user computer system (104, 162, 168) and if the user (160) with whom the user computer system (104, 162, 168) is associated has access rights to the decrypted metadata (311), receiving the metadata (311) decrypted by the hardware token (103, 167) with the private key (138, 172);
- reconstructing the encrypted file (101) from the file fragments (F1-F4) with use of the metadata (311);
- decrypting the encrypted file (101) using the symmetric key (319) comprised by the metadata (311),
wherein the hardware token (103, 167) is a portable electronic device which comprises a processor (806), an interface (131.1) for operative coupling of the hardware token (104, 162, 168) to the user computer system (104, 162, 168) and a memory (802) with a protected memory area (804) in which the private key (136, 170) of the asymmetric cryptographic key pair is stored, wherein the memory further comprises a cryptographic application (808) for running a cryptographic process, wherein the protected memory area is an area of the memory of the hardware token which is accessible only via the processor of the hardware token, wherein the access by the processor coupled to the memory is possible only when a condition necessary for this purpose is satisfied, wherein the condition to be satisfied is a successful authentication,
wherein the cryptographic process comprises the following steps:
- receiving the decryption request from the user computer system (104, 162, 168);
- decrypting the metadata (312, 324) using the private key (138, 172);
- sending the decrypted metadata (311) to the user computer system (104, 162, 168);
wherein use of the private key presupposes the authentication by means of a behaviour-based authentication of the user to the hardware token, wherein the hardware token has at least one sensor for detecting user-related data comprising information regarding the behaviour of the user, wherein the process for authenticating the user of the hardware token by means of the behaviour-based authentication comprises the following steps:
- generating at least one classification result with use of the user-related data for the behaviour-based authentication;
- analysing the at least one classification result in order to authenticate the user, wherein the analysis includes inspecting whether the classification result satisfies a predefined inspection criterion, wherein a successful authentication comprises satisfaction of the assessment criterion;
- generating an authentication signal on account of the result of the analysis of the classification result;
- performing the decryption if the authentication signal indicates a successful authentication of the user;
wherein the hardware token comprises a classification module, wherein the user-related data include movement data of a gross motor movement of the current user of the hardware token, wherein the classification module is configured to classify the behaviour of the user of the hardware token on the basis of the user-related data, wherein the classification module is also trained to identify a generic gross motor movement pattern with the aid of training datasets from a user cohort, wherein the classification module is run by the processor of the hardware token.

16. The computer-implemented data processing system according to claim 15, which further comprises a file management server (130), wherein the file management server (130) comprises a processor (342), a network interface (132.1) for operative coupling of the file management server (130) to the user computer system (104, 162, 168) and to the plurality of storage services (SD1-SD6) via the network (178), wherein the file management server (130) comprises a storage medium (302) with a file management application (304) which may be run by the processor (342), wherein the file management application (304) is configured to carry out the following method:
- receiving, at the file management server (130), an access request from a user computer system (104, 162, 168) for access to the file (101) stored in distributed fashion, wherein the file management server (130) does not provide a storage service;
- authenticating the user computer system (104, 162, 168); and
- in response to the receipt of the access request, if the authentication is successful and the user (102, 160) with whom the user computer system (104, 162, 168) is associated has access rights for the file (101), sending the authorisation tokens from each of the storage services at least within the selection of the storage services in whose non-volatile storage media (SM1-SM6) the file fragments (F1-F4) are stored, wherein the file fragments (F1-F4) comprised by the selection of the storage services are sufficient for reconstruction of the file (101), wherein the authorisation tokens enable the user computer system (104, 162, 168) to obtain the requested access to the file fragments stored by the storage services, with bypassing of the file management server (130).

## Revendications

1. Procédé de traitement d'un fichier (101), dans lequel le fichier (101) est crypté avec une clé symétrique (139) et est subdivisé selon un plan de partage (416) en fragments de fichiers (F1 à F4) au moyen d'un procédé de correction d'erreurs (FKV), où les fragments de fichier (F1 à F4) résultants sont stockés partagés sur des supports de stockage (SM1 à SM6) non volatils de plusieurs services de stockage (SD1 à SD6), où des métadonnées (312, 324), lesquelles sont associées (101) au fichier et permettent une reconstruction du fichier (101) à partir des fragments de fichier (F1 à F4), comprennent la clé symétrique (139) qui rend le décryptage du fichier (101) crypté possible, où les métadonnées (312, 324) ou au moins la clé symétrique (139) sont cryptées avec une clé publique (136, 170), où une clé privée (138, 172) forme une paire de clés cryptographiques asymétrique avec la clé publique (136, 170) et permet un décryptage des métadonnées (312, 324) cryptées, sont stockées dans une zone de mémoire protégée (804) d'une mémoire (802) d'un jeton matériel (103), où la paire de clés cryptographiques asymétrique est associée à un utilisateur (102, 160), où, dans le cas du jeton matériel (103, 167), il s'agit d'un appareil électronique portable, lequel comprend en outre un processeur (806) et une interface (131.1) pour le couplage opérationnel du jeton matériel (104, 162, 168) à un système informatique d'utilisateur (104, 162, 168), où, dans le cas de la zone de mémoire sécurisée, il s'agit d'une zone de la mémoire du jeton matériel sur laquelle un accès n'est possible que par le biais du processeur du jeton matériel, où l'accès par le processeur couplé avec la mémoire n'est possible que si une condition nécessaire à cet effet est remplie, où, dans le cas de la condition à remplir, il s'agit d'une authentification réussie,
où le procédé comprend :
- l'envoi d'une demande d'accès du système informatique d'utilisateur (104, 162, 168) pour l'accès au fichier (101) stocké partagé à un serveur de gestion de fichiers (130) ;
- l'authentification du système informatique d'utilisateur (104, 162, 168) vis-à-vis du serveur de gestion de données (130) ;
- après l'authentification réussie du système informatique d'utilisateur (104, 162, 168) et dans le cas où l'utilisateur (102, 160) auquel est associé le système informatique d'utilisateur (104, 162, 168) possède des droits d'accès au fichier (101), la réception d'un jeton d'autorisation de chacun des services de stockage d'au moins une sélection des services de stockage (SD1 à SD6), dans les supports de stockage (SM1 à SM6) non volatils desquels les fragments de fichier (F1 à F4) sont stockés, par le biais du serveur de gestion de fichiers (130), où les fragments de fichiers (F1 à F4) compris dans la sélection des services de stockage sont suffisants pour une reconstruction du fichier (101),
dans lequel les jetons d'autorisation permettent au système informatique d'utilisateur (104, 162, 168) l'accès demandé aux fragments de fichiers stockés respectivement par les services de stockage, moyennant un contournement du serveur de gestion de fichiers (130) ;
- le téléchargement des fragments de fichier (F1 à F4) par les services de stockage individuels moyennant l'emploi du jeton d'autorisation et le contournement du serveur de gestion de fichiers (130) ;
- l'envoi au jeton matériel (103, 167) d'une demande de décryptage du système informatique d'utilisateur (104, 162, 168) pour l'accès aux métadonnées (311) décryptées ;
- l'authentification du système informatique d'utilisateur (104, 162, 168) vis-à-vis du jeton matériel (103, 167) ;
- après l'authentification réussie du système informatique d'utilisateur (104, 162, 168) et dans le cas où l'utilisateur (160), auquel est associé le système informatique d'utilisateur (104, 162, 168), possède des droits d'accès aux métadonnées (311) décryptées, la réception des métadonnées (311) décryptées par le jeton matériel (103, 167) avec la clé privée (138, 172), où la transmission au système informatique d'utilisateur des métadonnées décryptées est sécurisée par cryptographie au moyen d'un cryptage de bout en bout ;
- la reconstruction du fichier (101) crypté à partir des fragments de fichier (F1 à F4) moyennant l'emploi des métadonnées (311) ;
- le décryptage du fichier (101) crypté avec la clé symétrique (319) comprise par les métadonnées (311),
où l'authentification au moyen d'une authentification basée sur un comportement de l'utilisateur vis-à-vis du jeton matériel présuppose une utilisation de la clé privée, où le jeton matériel présente au moins un capteur pour la saisie de données relatives à l'utilisateur, lesquelles comprennent des informations concernant le comportement de l'utilisateur, où le procédé pour l'authentification de l'utilisateur du jeton matériel au moyen de l'authentification basée sur le comportement comprend les étapes suivantes :
- la génération d'au moins un résultat de classification moyennant l'utilisation des données relatives à l'utilisateur pour l'authentification basée sur le comportement ;
- l'évaluation de l'au moins un résultat de classification afin d'authentifier l'utilisateur, où l'évaluation comprend un examen si le résultat de classification satisfait à un critère de vérification prédéfini, où une authentification réussie comprend une satisfaction au critère de vérification ;
- la création d'un signal d'authentification suite au résultat de l'évaluation du résultat de classification ;
- l'exécution du décryptage dans le cas où le signal d'authentification indique une authentification réussie de l'utilisateur ;
où le jeton matériel comprend un module de classification, où les données relatives à l'utilisateur comprennent des données de mouvements d'un déplacement de motricité grossière de l'utilisateur actuel du jeton matériel, où le module de classification du comportement de l'utilisateur du jeton matériel est configuré à l'aide des données relatives à l'utilisateur, où le module de classification est en outre entraîné pour la reconnaissance d'un modèle de déplacement de motricité grossière générique à l'aide d'ensembles de données d'apprentissage d'une cohorte d'utilisateurs, où le module de classification est exécuté par le processeur du jeton matériel.

2. Procédé selon la revendication 1, dans lequel l'attestation des droits d'accès de l'utilisateur (102, 106) auquel est associé le système informatique d'utilisateur (104, 162, 168), comprend une authentification réussie de l'utilisateur (160) par le jeton matériel (103, 167) pour les métadonnées (311) décryptées.

3. Procédé selon l'une des revendications précédentes, dans lequel les métadonnées (312, 324) cryptées qui rendent possible la reconstruction du fichier (101) à partir des fragments de fichier sont stockées dans la mémoire du jeton matériel (103, 167) et sont sécurisées vis-à-vis d'un accès des services de stockage (SD1 à SD6), ou
dans lequel les métadonnées (312) cryptées qui permettent la reconstruction du fichier (101) à partir des fragments de fichier sont stockées dans une mémoire (106) du système informatique d'utilisateur (104) et sont sécurisées vis-à-vis d'un accès des services de stockage (SD1 à SD6), ou
dans lequel les métadonnées (312, 324) cryptées qui permettent la reconstruction du fichier (101) à partir des fragments de fichier sont stockées dans une mémoire (302) du serveur de gestion de fichiers (130) et sont sécurisées vis-à-vis d'un accès des services de stockage (SD1 à SD6), dans lequel, après une authentification réussie du système informatique d'utilisateur (104, 162, 168) vis-à-vis du serveur de gestion de fichiers (130) et dans le cas où l'utilisateur (160), auquel est associé le système informatique d'utilisateur (104, 162, 168), possède des droits d'accès pour le fichier (101), les métadonnées (312, 324) cryptées sont reçues en complément par le serveur de gestion de fichiers (130), ou
dans lequel le serveur de gestion de fichiers stocke et gère des clés publiques (136, 170) d'une multiplicité d'utilisateurs à l'état associé, où le procédé comprend en outre, afin de pouvoir mettre les métadonnées (324) cryptées à disposition de l'utilisateur (160), auquel la paire de clés cryptographique asymétrique est associée, dont la clé privée (172) est stockée dans le jeton matériel (167) :
- après l'authentification réussie du système informatique d'utilisateur (104, 162, 168) et dans le cas où l'utilisateur (160) auquel est associé le système informatique d'utilisateur (162, 168), possède des droits d'accès au fichier, la génération des métadonnées (324) par le serveur de gestion de fichiers (130), où la génération des métadonnées (314) contient :
• l'envoi de la clé publique (170) de l'utilisateur (160) dont la clé privée (172) correspondante est stockée sur le jeton matériel (167), par le serveur de gestion de fichiers (130), à un système informatique (104), lequel a subdivisé le fichier (101) en fragments de fichier et a crypté les fragments de fichier résultants avec la clé symétrique (139) ;
• l'établissement des métadonnées (324) par le système informatique (104), où les métadonnées (324) comprennent la clé symétrique (139) ;
• le cryptage des métadonnées ou au moins de la clé symétrique (139) avec la clé publique (170) de l'utilisateur (160) par le système informatique (104) ;
• l'envoi des métadonnées (324) cryptées au serveur de gestion de fichiers (130) ;
• la retransmission des métadonnées (324) cryptées par le serveur de gestion de fichiers (130) au système informatique d'utilisateur (168) afin de permettre au système informatique d'utilisateur (168) d'effectuer le décryptage moyennant l'emploi du jeton matériel (167).

4. Procédé selon l'une des revendications précédentes, dans lequel le jeton matériel (103, 167) comprend un module de sécurité.

5. Procédé selon l'une des revendications précédentes, dans lequel, dans le cas de la clé symétrique (139), il s'agit d'une clé cryptographique créée de manière aléatoire pour le fichier (101) à crypter ou créée moyennant l'emploi d'une valeur caractéristique du fichier à crypter.

6. Procédé selon l'une des revendications précédentes :
- dans lequel les jetons d'autorisation sont générés uniquement pour la demande d'accès pour le téléchargement des fragments de fichier (F1 à F4) et ne possèdent qu'une validité temporaire ; et/ou
- dans lequel les jetons d'autorisation sont conçus en tant qu'URL qui rendent possible respectivement un accès en lecture direct à un lieu de stockage identifié par l'URL sur un des supports de stockage (SM2, SM4 à SM6) d'un des services de stockage (SD2, SD4 à SD6).

7. Procédé selon l'une des revendications précédentes, dans lequel une clé de signature (334) est stockée dans une zone de mémoire sécurisée de la mémoire (302) du serveur de gestion de fichiers (130), où le procédé comprend en outre :
- la mise à disposition d'une clé de vérification de signature (441) associée à la clé de signature (334) au niveau de chacun des services de stockage, où la clé de vérification de signature (441) est conçue pour la vérification de signatures, lesquelles sont générées avec la clé de signature (334) ;
- la signature des jetons d'autorisation avec la clé de signature (334) par le serveur de gestion de fichiers, où les jetons d'autorisation sont retransmis au système informatique d'utilisateur sous forme signée,
dans lequel chacun des jetons d'autorisation signé permet l'accès à l'emplacement de mémoire identifié par le jeton d'autorisation respectif sur le support de stockage du service de stockage respectif moyennant la condition préalable que le service de stockage reconnaisse la signature comme étant valide.

8. Procédé selon l'une des revendications précédentes,
- dans lequel des métadonnées (312, 324) d'une multiplicité de fichiers stockés partagés dans les services de stockage sont stockées dans le jeton matériel (103, 167) et/ou dans le système informatique d'utilisateur (104, 162, 168) et le procédé comprend un emploi desdites métadonnées (312, 324) par une application de client (108) du système informatique d'utilisateur (104, 162, 168) pour la génération d'une vision basée sur le client pour les fichiers stockés à l'état partagé ; et/ou
- dans lequel des métadonnées (312, 324) d'une multiplicité de fichiers stockés partagés dans les services de stockage sont stockées dans le serveur de gestion de fichiers (130) et le procédé comprend une utilisation desdites métadonnées (312, 324) par un portail web (304) hôte sur le serveur de gestion de fichiers (130) pour la génération d'une vision basée sur un réseau pour les fichiers stockés partagés ;
dans lequel la vision basée sur le client et/ou basée sur le réseau est conçue pour reconstruire de manière dynamique les noms de fichier d'origine à partir des métadonnées (312, 324) et pour initier une reconstruction dynamique et automatique du contenu de fichier du fichier choisi suite à une sélection d'un des fichiers stockés partagés par le système informatique d'utilisateur (104, 162, 168) ou par un autre système informatique d'utilisateur (104, 162, 168) autorisé, où les services de stockage, dans lesquels des fragments du fichier choisi sont stockés, sont cachés par la vision.

9. Procédé selon l'une des revendications précédentes, dans lequel un niveau de confiance minimal (310) est fixé, lequel spécifie une grandeur minimale de confiance pour le procédé d'authentification, au moyen duquel le système informatique d'utilisateur (104, 162, 168) de l'utilisateur (102, 160) doit s'authentifier vis-à-vis du serveur de gestion de fichiers (130) afin d'être autorisé à accéder au fichier stocké dans les supports de stockage des services de stockage identifiés, où le procédé comprend en outre :
- la vérification, par le serveur de gestion de fichiers (130), si le procédé d'authentification employé pour l'authentification du système informatique d'utilisateur (104, 162, 168) vis-à-vis du serveur de gestion de fichiers (130) est suffisamment fiable pour remplir le niveau de confiance minimal (310) fixé pour l'utilisateur pour l'accès demandé ;
où la demande du jeton d'autorisation n'est envoyée par le serveur de gestion de fichiers (130) aux services de stockage (SD1 à SD6) que dans le cas où le procédé d'authentification employé pour l'authentification du système informatique d'utilisateur (104, 162, 168) vis-à-vis du serveur de gestion de fichiers (130) a un niveau de confiance, lequel est au moins aussi élevé que le niveau de confiance minimal (310) fixé.

10. Procédé selon l'une des revendications précédentes, comprenant en outre :
- l'authentification du jeton matériel (103, 167) vis-à-vis du serveur de gestion de fichiers (130),
où il est établi quels jetons matériel (103, 167) sont seuls habilités à permettre un décryptage du fichier (101) stocké partagé dans les supports de stockage (SM1 à SM6) des services de stockage (SD1 à SD6) ;
où la demande du jeton d'autorisation n'est envoyée aux services de stockage de la sélection uniquement à la condition que le jeton matériel (103, 167) est habilité pour le décryptage.

11. Procédé selon l'une des revendications précédentes, dans lequel le fichier (101) a été stocké partagé sur les supports de stockage (SM1 à SM6) non volatils des services de stockage (SD1 à SD6) par le système informatique d'utilisateur (102), où le stockage partagé comprend :
- le cryptage du fichier (101) à stocker partagé avec la clé symétrique (139) ;
- la génération automatique d'un plan de partage (416), lequel contient des instructions pour la génération de fragments de fichiers (F1 à F4) du fichier (101) au moyen du procédé de correction d'erreurs (FKV) et d'identificateurs des nombreux services de stockage (SD1 à SD6), dans les supports de stockage (SM1 à SM6) non volatils desquels les fragments de fichier générés doivent être stockés, par le serveur de gestion de fichiers (130) ou le système informatique d'utilisateur (104) ;
- l'exécution du procédé de correction d'erreurs (FKV) spécifié dans le plan de partage (416) pour la génération des fragments de fichier (F1 à F4) à partir du fichier (101) par le système informatique d'utilisateur (104), où au moins un des fragments de fichier contient des bits de correction d'erreurs ;
- l'envoi d'une demande d'autorisation (420) du système informatique d'utilisateur pour le stockage des fragments de fichier (F1 à F4) dans les nombreux services de stockage (SD2, SD4 à SD6) identifiés dans le plan de partage (416) au serveur de gestion de fichiers (130) par le biais d'un réseau (178) ;
- en réponse à la réception de la demande d'autorisation, la demande d'un jeton d'autorisation par le serveur de gestion de fichiers (130) par chacun des nombreux services de stockage identifiés dans le plan de partage (416) et la retransmission (610) des jetons d'autorisation (428) obtenus en réponse à la demande par le serveur de gestion de fichiers (130) au système informatique d'utilisateur (104) ; et
- le stockage des fragments de fichier (F1 à F4) générés dans les supports de stockage (SM2, SM4 à SM6) des services de stockage (SD2, SD4 à SD6) identifiés par le biais du réseau (178) au moyen d'un certificat d'autorisation par le jeton d'autorisation moyennant le contournement du serveur de gestion de fichiers (130) par le système informatique d'utilisateur (104).

12. Procédé selon la revendication 11, comprenant en outre :
- la mise au point d'une configuration (175) qui contient des exigences (308) de l'utilisateur (102) concernant la vitesse, la position géographique, la sécurité et/ou les frais d'une infrastructure IT à utiliser pour le stockage de données ainsi que des exigences concernant la disponibilité des données à stocker ;
- la mise au point d'un catalogue de services de stockage (329) qui comprend des spécifications d'une multiplicité de services de stockage (SD1 à SD6) étant en disponibilité, où la spécification de chacun des services de stockage contient des indications concernant la vitesse, la position géographique, la sécurité et/ou les frais d'une infrastructure IT (180 à 192) du service de stockage utilisée pour le stockage des données ;
- afin de générer le plan de partage (416), l'évaluation automatique de la configuration et du catalogue de services de stockage afin d'identifier, en fonction des spécifications des services de stockage disponibles et en fonction des exigences (308) de l'utilisateur, un procédé de correction d'erreurs parmi une multiplicité de procédés de correction d'erreurs, qui suffit aux exigences concernant la disponibilité des données à stocker et afin d'identifier les nombreux services de stockage identifiés dans le plan de partage à partir de la multiplicité des services de stockage étant en disponibilité qui sont appropriés pour le stockage du fichier partage selon les exigences spécifiques à l'utilisateur concernant la vitesse, la position géographique, la sécurité et/ou les frais pour l'infrastructure IT à utiliser pour le stockage de données ;
- l'emploi du procédé de correction d'erreurs identifié en tant que procédé de correction d'erreurs (FKV) du plan de partage (416), et/ou
comprenant en outre :
- l'authentification du système informatique d'utilisateur (104) vis-à-vis du serveur de gestion de fichiers (130) ;
- suite à la réception de la demande d'autorisation du système informatique d'utilisateur (104) pour le stockage des fragments de fichier, la vérification par le serveur de gestion de fichiers (130) si l'utilisateur (102), auquel est associé le système informatique d'utilisateur (104), possède des droits d'accès pour le stockage du fichier (101) au moyen des services de stockages (SD2, SD4 à SD6) identifiés ;
où la demande du jeton d'autorisation a lieu par le serveur de gestion de fichiers (130) à la condition que l'authentification du système informatique d'utilisateur (104) est réussie et que l'utilisateur (102) possède des droits d'accès, et/ou
comprenant en outre :
- la génération des métadonnées (311) par le système informatique d'utilisateur (104) ;
- le cryptage des métadonnées (312) ou au moins de la clé symétrique (138) avec la clé publique (138) dont la clé privée (136) associée est stockée dans le jeton matériel (103),
- le stockage des métadonnées (312) cryptées dans le jeton matériel (103), dans le système informatique d'utilisateur (104) et/ou sur le serveur de gestion de fichiers (130), et/ou
comprenant en outre :
- la génération de métadonnées (312) raccourcies par le système informatique d'utilisateur (104), où les métadonnées raccourcies sont générées à partir des métadonnées (312) par le retrait de la clé symétrique (319) ;
- la transmission des métadonnées raccourcies au serveur de gestion de fichiers (130) ; et
- l'utilisation des métadonnées raccourcies par le serveur de gestion de fichiers (130) pour le contrôle de l'accès au fichier (101) stocké partagé dans les supports de stockage (SM1 à SM6) des services de stockage (SD1 à SD6), et/ou
comprenant en outre :
- le calcul d'une caractéristique du fichier (101) complet par le système informatique d'utilisateur (104) ;
- l'utilisation de la caractéristique en tant que clé symétrique (139) pour le cryptage du fichier (101) par le système informatique d'utilisateur (104).

13. Procédé selon l'une des revendications 11 à 12,
- dans lequel la détermination du procédé de correction d'erreurs, lequel suffit aux exigences de l'utilisateur en ce qui concerne la disponibilité du fichier, contient une détermination de la taille globale à attendre de tous les fragments de fichier à générer par le procédé de correction d'erreurs, où, pour chacun des fragments de fichier à générer, un service de stockage est identifié, lequel suffit selon ses indications aux exigences concernant la vitesse, la position géographique, la sécurité et/ou les frais en tenant compte de la taille globale à attendre ; et/ou
- dans lequel, dans le cas où le procédé de correction d'erreurs déterminé provoquerait la génération de fragments de fichier, dont la taille globale ne permet pas d'identifier un nombre suffisant de services de stockage qui suffisent selon leurs indications aux exigences concernant la vitesse, la sécurité et/ou les frais en tenant compte de la taille globale, il y a automatiquement une détermination d'un nouveau procédé de correction d'erreurs, lequel est conçu pour générer des fragments de fichier dont la taille globale à attendre est suffisamment petite que, pour chaque fragment de fichier à générer, un service de stockage peut être identifié, lequel suffit selon ses indications aux exigences concernant la vitesse, la position géographique, la sécurité et/ou les frais en tenant compte de la taille globale à attendre ; et/ou
- dans lequel, afin de remplir des exigences de l'utilisateur en ce qui concerne une durée maximale du transfert de données pour la transmission du fichier par le biais du réseau, le procédé de correction d'erreurs déterminé est automatiquement configuré pour qu'un nombre suffisamment grand de fragments de fichier générés se trouve généré par celui-ci de sorte que, lors de la transmission parallèle de ces fragments de fichiers vers le service ou le service parmi les nombreux services de stockage identifiés dans le plan de partage, la durée de transmission pour tous les fragments de fichier se situe en-dessous d'une durée maximale.

14. Support de stockage (106, 302) lisible par ordinateur avec des instructions lisibles par ordinateur, lesquelles, lors de l'exécution par un processeur (135, 342), font en sorte que le processeur procède à l'exécution du procédé selon l'une des revendications précédentes.

15. Système de traitement de données mis en œuvre par ordinateur, lequel comprend un système informatique d'utilisateur (104, 162, 168) et un jeton matériel, dans lequel le système informatique d'utilisateur (104, 162, 168) comprend un processeur (135), une interface de réseau (132.2) pour le couplage opérationnel du système informatique d'utilisateur (104, 162, 168) à une multiplicité de services de stockage (SD1 à SD6) et à un serveur de gestion de fichiers (130) par le biais d'un réseau (178), dans lequel le système informatique d'utilisateur (104, 162, 168) comprend une interface (131.2) pour le couplage opérationnel du système informatique d'utilisateur (104, 162, 168) à un jeton matériel (103, 167), dans lequel le système informatique d'utilisateur (104, 162, 168) comprend un support de stockage (106) avec une application client (108) exécutable par le processeur (135), où l'application client (108) est conçue pour l'exécution d'un procédé de traitement d'un fichier (101),
dans lequel le fichier (101) est crypté avec une clé symétrique (139) et est partagé en fragments de fichier (F1 à F4) selon un plan de partage (416) au moyen d'un procédé de correction d'erreurs (FKV), où les fragments de fichier (F1 à F4) résultants sont stockés partagés sur des supports de stockage (SM1 à SM6) non volatils des services de stockage (SD1 à SD6), où des métadonnées (312, 324), lesquelles sont associées au fichier (101), comprennent la clé symétrique (139) qui rend possible un décryptage du fichier (101) crypté avec la clé symétrique (139), où les métadonnées (312, 324) ou au moins la clé symétrique (139) sont cryptées avec une clé publique (136, 170), où une clé privée (138, 172) qui forme une paire de clés cryptographiques asymétrique avec la clé publique (136, 170), est stockée dans une zone de mémoire (804) sécurisée d'une mémoire (802) du jeton matériel (103, 167), où la paire de clés cryptographiques asymétrique est associée à un utilisateur (102, 160),
où le procédé comprend :
- l'envoi d'une demande d'accès du système informatique d'utilisateur (104, 162, 168) pour l'accès au fichier stocké partagé à un serveur de gestion de fichiers (130) ;
- l'authentification du système informatique d'utilisateur (104, 162, 168) vis-à-vis du serveur de gestion de données (130) ;
- après l'authentification réussie du système informatique d'utilisateur (104, 162, 168) et dans le cas où l'utilisateur (102, 160), auquel est associé le système informatique d'utilisateur (104, 162, 168), possède des droits d'accès au fichier (101), la réception d'un jeton d'autorisation de chacun des services de stockage d'au moins une sélection des services de stockage (SD1 à SD6), dans les supports de stockage (SM1 à SM6) non volatils desquels les fragments de fichier (F1 à F4) sont stockés, par le biais du serveur de gestion de fichiers (130), où les fragments de fichiers (F1 à F4) compris dans la sélection des services de stockage sont suffisants pour une reconstruction du fichier (101),
dans lequel les jetons d'autorisation permettent au système informatique d'utilisateur (104, 162, 168) l'accès demandé aux fragments de fichiers stockés respectivement par les services de stockage, moyennant un contournement du serveur de gestion de fichiers (130) ;
- le téléchargement des fragments de fichier (F1 à F4) par les services de stockage individuels moyennant l'emploi du jeton d'autorisation et le contournement du serveur de gestion de fichiers (130) ;
- l'envoi au jeton matériel (103, 167) d'une demande de décryptage du système informatique d'utilisateur (104, 162, 168) pour l'accès aux métadonnées (311) décryptées ;
- l'authentification du système informatique d'utilisateur (104, 162, 168) vis-à-vis du jeton matériel (103, 167) ;
- après l'authentification réussie du système informatique d'utilisateur (104, 162, 168) et dans le cas où l'utilisateur (160), auquel est associé le système informatique d'utilisateur (104, 162, 168), possède des droits d'accès aux métadonnées (311) décryptées, la réception des métadonnées (311) décryptées par le jeton matériel (103, 167) avec la clé privée (138, 172),
- la reconstruction du fichier (101) crypté à partir des fragments de fichier (F1 à F4) moyennant l'emploi des métadonnées (311) ;
- le décryptage du fichier (101) crypté avec la clé symétrique (319) comprise par les métadonnées (311),
où, dans le cas du jeton matériel (103, 167), il s'agit d'un appareil électronique portable, lequel comprend un processeur (806), une interface (131.1) pour le couplage opérationnel du jeton matériel (104, 162, 168) au système informatique d'utilisateur (104, 162, 168), et une mémoire (802) avec une zone de mémoire (804) sécurisée, dans laquelle la clé privée (136, 170) de la paire de clés cryptographiques asymétrique est stockée, où la mémoire comprend en outre une application (808) cryptographique pour l'exécution d'un procédé cryptographique, où, dans le cas de la zone de mémoire sécurisée, il s'agit d'une zone de la mémoire du jeton matériel, où l'accès par le processeur couplé avec la mémoire n'est rendu possible que si une exigence nécessaire à cela est remplie, où, dans le cas de l'exigence à remplir, il s'agit d'une authentification réussie,
où le procédé cryptographique comprend :
- la réception de la demande de décryptage par le système informatique d'utilisateur (104, 162, 168) ;
- le décryptage des métadonnées (312, 324) avec la clé privée (138, 172) ;
- l'envoi des métadonnées (311) décryptées au système informatique d'utilisateur (104, 162, 168) ;
où une utilisation de la clé privée présuppose l'authentification au moyen d'une authentification basée sur un comportement de l'utilisateur vis-à-vis du jeton matériel, où le jeton matériel présente au moins un capteur pour la saisie de données relatives à l'utilisateur, lesquelles comprennent des informations concernant le comportement de l'utilisateur, où le procédé pour l'authentification de l'utilisateur du jeton matériel au moyen de l'authentification basée sur le comportement comprend les étapes suivantes :
- la génération d'au moins un résultat de classification moyennant l'utilisation des données relatives à l'utilisateur pour l'authentification basée sur le comportement ;
- l'évaluation de l'au moins un résultat de classification afin d'authentifier l'utilisateur, où l'évaluation comprend un examen si le résultat de classification satisfait à un critère de vérification prédéfini, où une authentification réussie comprend une satisfaction au critère de vérification ;
- la création d'un signal d'authentification suite au résultat de l'évaluation du résultat de classification ;
- l'exécution du décryptage dans le cas où le signal d'authentification indique une authentification réussie de l'utilisateur ;
où le jeton matériel comprend un module de classification, où les données relatives à l'utilisateur comprennent des données de mouvements d'un déplacement de motricité grossière de l'utilisateur actuel du jeton matériel, où le module de classification du comportement de l'utilisateur du jeton matériel est configuré à l'aide des données relatives à l'utilisateur, où le module de classification est en outre entraîné pour la reconnaissance d'un modèle de déplacement de motricité grossière générique à l'aide d'ensembles de données d'apprentissage d'une cohorte d'utilisateurs, où le module de classification est exécuté par le processeur du jeton matériel.

16. Système de traitement de données mis en œuvre par ordinateur selon la revendication 15, lequel comprend en outre un serveur de gestion de fichiers (130), dans lequel le serveur de gestion de fichiers (130) comprend un processeur (342), une interface de réseau (132.1) pour le couplage opérationnel du serveur de gestion de fichiers (130) avec le système informatique d'utilisateur (104, 162, 168), et avec la multiplicité de services de stockage (SD1 à SD6) par le biais du réseau (178), où le serveur de gestion de fichiers (130) comprend un support de stockage (302) doté d'une application de gestion de fichiers (304) exécutable par le processeur (342), où l'application de gestion de fichiers (304) est conçue pour l'exécution du procédé suivant :
- la réception d'une demande d'accès d'un système informatique d'utilisateur (104, 162, 168) pour l'accès au fichier (101) stocké partagé au serveur de gestion de fichiers (130), où le serveur de gestion de fichiers (130) n'offre aucun service de stockage ;
- l'authentification du système informatique d'utilisateur (104, 162, 168) ; et
- en réponse à la réception de la demande d'accès, dans le cas où l'authentification est réussie et l'utilisateur (102, 160) auquel est associé le système informatique d'utilisateur (104, 162, 168) possède des droits d'accès au fichier (101), l'envoi des jetons d'autorisation de chacun des services de stockage d'au moins la sélection des services de stockage dans les supports de stockage (SM1 à SM6) desquels les fragments de fichier (F1 à F4) sont stockés, où les fragments de fichiers (F1 à F4) compris dans la sélection des services de stockage sont suffisants pour une reconstruction du fichier (101), où les jetons d'autorisation permettent au système informatique d'utilisateur (104, 162, 168) l'accès demandé aux fragments de fichier respectivement stockés par les services de stockage, moyennant un contournement du serveur de gestion de fichiers (130).
